# FASCICULE DE BREVET EUROPEEN

(11) **EP 1 442 425 B1**
(45) Date de publication et mention de la délivrance du brevet: **08.08.2018**
(21) Numéro de dépôt: 02751241.7
(22) Date de dépôt: 05.06.2002
(51) Int. Cl.: G06T 1/00, G06T 3/00, G06T 5/00, H04N 1/58, H04N 1/40, H04N 1/387, H04N 1/00

(54) **PROCEDE ET SYSTEME POUR PRODUIRE DES INFORMATIONS FORMATEES LIEES AUX DEFAUTS DES APPAREILS**
VERFAHREN UND VORRICHTUNG ZUR ERSTELLUNG VON FORMATIERTER INFORMATION ÜBER MASCHINENFEHLER
METHOD AND SYSTEM FOR PRODUCING FORMATTED INFORMATION RELATED TO DEFECTS OF APPLIANCES

(30) Priorité: 12.07.2001 FR 0109291; 12.07.2001 FR 0109292
(43) Date de publication de la demande: 04.08.2004
(73) Titulaire: DxO Labs, 92100 Boulogne Billancourt (FR)
(72) Inventeur: LIEGE, Bruno, F-75015 PARIS (FR); GUICHARD, Frédéric, F-75012 PARIS (FR)
(74) Mandataire: Ipside
(86) Numéro de dépôt international: PCT/FR2002/001914
(87) Numéro de publication internationale: WO 2003/007241

(56) Documents cités:
- EP-A- 0 867 690
- EP-A- 0 964 353
- EP-A- 1 104 175
- WO-A-01/01672
- WO-A-01/35052
- US-A- 5 353 392
- US-A- 6 100 925
- US-B1- 6 173 087
- WATANABE M ET AL: "AN IMAGE DATA FILE FORMAT FOR DIGITAL STILL CAMERA" FINAL PROGRAM AND ADVANCE PRINTING OF PAPERS. ANNUAL CONFERENCE. IMAGING ON THE INFORMATION SUPERHIGHWAY, XX, XX, 1995, pages 421-424, XP000618775
- CLUNIE, D.: "Medical image format FAQ - Part 3. Proprietary formats" NONAME, [en ligne] 3 juin 2001 (2001-06-03), XP002178669 Extrait de l'Internet: <URL:http://www.dclunie.com/medical-image- faq/html/part3.html> [extrait le 2001-09-27]

## Description

La présente invention concerne un procédé et un système pour produire des informations formatées liées aux défauts des appareils d'une chaîne d'appareils. La présente invention concerne également des informations formatées ainsi obtenues destinées à des moyens de traitement d'image.

### Etat de la technique

Le document WATANABE M ET AL: 'AN IMAGE DATA FILE FORMAT FOR DIGITAL STILL CAMERA' FINAL PROGRAM AND ADVANCE PRINTING OF PAPERS. ANNUAL CONFERENCE. IMAGING ON THE INFORMATION SUPERHIGHWAY, 1995, pages 421-424 divulgue le formatage d'informations liées aux images.

### Solution

### Procédé

L'invention concerne un procédé tel que défini par la revendication 1 ci-jointe, pour produire des informations formatées liées aux défauts des appareils d'une chaîne d'appareils. Les informations formatées sont destinées à des moyens de traitement d'image, notamment des logiciels, en vue de modifier la qualité des images traitées par les moyens de traitement d'image. La chaîne d'appareils comprend notamment au moins un appareil de capture d'image et/ou au moins un moyen de restitution et/ou au moins un observateur. Le procédé comprend l'étape de produire des données caractérisant des défauts des appareils de la chaîne d'appareils. Les données sont ci-après dénommées les informations formatées.

### Appareil de capture d'image

La chaîne d'appareils comprend au moins un appareil de capture d'image, notamment un scanner. De préférence dans ce cas, selon l'invention, le procédé est plus particulièrement destiné à produire des informations formatées liées aux défauts de l'appareil de capture d'image. Le procédé comprend en outre l'étape de produire des données caractérisant des défauts de l'appareil de capture d'image, notamment les caractéristiques de piqué. Les informations formatées comprennent également les données caractérisant les défauts de l'appareil de capture d'image.

La chaîne d'appareils comprend au moins un appareil de capture d'image. Pour produire les informations formatées liées aux défauts de l'appareil de capture d'image, notamment les caractéristiques de distorsion, de préférence, selon l'invention, le procédé comprend un premier algorithme de calcul des informations formatées. Ce premier algorithme de calcul permet de procéder à un choix :
- dans un ensemble de modèles de transformation paramétrables,
- dans un ensemble de modèles de transformation paramétrables inverses, dans un ensemble d'images de synthèse,
- dans un ensemble de scènes de référence et dans un ensemble d'images transformées.

Ce choix porte sur :
- une scène de référence, et/ou
- une image transformée, et/ou
- un modèle de transformation paramétrable permettant de transformer l'image de référence, obtenue en capturant la scène de référence au moyen de l'appareil de capture d'image, en l'image transformée, et/ou

- un modèle de transformation paramétrable inverse permettant de transformer l'image transformée en l'image de référence, et/ou
- une image de synthèse obtenue à partir de la scène de référence et/ou obtenue à partir de l'image de référence.

Le choix est effectué de telle sorte que l'image transformée soit proche de l'image de synthèse. L'image transformée présente un écart avec l'image de synthèse.

Les informations formatées sont au moins en partie composées des paramètres du modèle de transformation paramétrable choisi et/ou des paramètres du modèle de transformation paramétrable inverse choisi.

De préférence, selon l'invention le premier algorithme de calcul permet de choisir dans un ensemble de projections mathématiques, une projection mathématique permettant de réaliser l'image de synthèse à partir de la scène de référence.

La chaîne d'appareils comprend au moins un appareil de capture d'image. Pour produire les informations formatées liées aux défauts de l'appareil de capture d'image, notamment les caractéristiques de distorsion, de préférence, selon une autre variante de réalisation de l'invention, le procédé comprend un second algorithme de calcul des informations formatées. Ce second algorithme comporte les étapes de :
- choisir au moins une scène de référence,
- capturer au moins une image de référence de chaque scène de référence au moyen de l'appareil de capture d'image.

Ce second algorithme comporte en outre l'étape de choisir dans un ensemble de modèles de transformation paramétrables et dans un ensemble d'images de synthèse :
- un modèle de transformation paramétrable permettant de transformer l'image de référence, en une image transformée, et/ou
- une image de synthèse obtenue à partir de la scène de référence et/ou obtenue à partir de l'image de référence,

De telle sorte que l'image de synthèse soit proche de l'image transformée. L'image transformée présente un écart avec l'image de synthèse. Les informations formatées sont au moins en partie composées des paramètres du modèle de transformation paramétrable choisi et/ou des paramètres du modèle de transformation paramétrable inverse. Le modèle de transformation paramétrable inverse permettant de transformer l'image transformée en l'image de référence.

De préférence, selon l'invention le second algorithme de calcul permet de choisir dans un ensemble de projections mathématiques, une projection mathématique permettant de réaliser l'image de synthèse à partir de la scène de référence.

De préférence, selon l'invention le procédé comprend un troisième algorithme de calcul des écarts. Ce troisième algorithme de calcul des écarts comporte les étapes de :
- calculer les écarts entre l'image transformée et l'image de synthèse,
- associer les écarts aux informations formatées.

La chaîne d'appareils comprend au moins un appareil de capture d'image. La ou les images sont des images de scènes, notamment de scènes animées capturées par un utilisateur au moyen de l'appareil de capture d'images. Pour produire les informations formatées liées aux défauts de l'appareil de capture d'image notamment les caractéristiques de distorsion, de préférence, selon cet autre variante de réalisation de l'invention le procédé comprend un quatrième algorithme de calcul des informations formatées. Ce quatrième algorithme comporte les étapes de :
- réaliser une classe d'images de synthèse par projections mathématiques déterminées, d'au moins une scène de référence, sur une surface,
- capturer au moins une image de référence de chaque scène de référence au moyen de l'appareil de capture d'image,
- choisir dans un ensemble de modèles de transformation paramétrables celui permettant de transformer l'image de référence en une image transformée proche de la classe d'images de synthèse de la scène de référence.

L'image transformée présentant un écart avec la classe d'images de synthèse. Les informations formatées sont au moins en partie composées des paramètres des modèles de transformation paramétrables choisis.

De préférence, selon l'invention le procédé comprend un cinquième algorithme de calcul des écarts. Ce cinquième algorithme comporte les étapes de :
- calculer les écarts entre l'image transformée et la classe d'images de synthèse,
- associer les écarts aux informations formatées.

### Focale variable - appareil de capture d'image

L'appareil de capture d'image de la chaîne d'appareils présente au moins une caractéristique variable selon l'image, notamment la focale et/ou l'ouverture. Une fraction des informations formatées est liée aux défauts de l'appareil de capture d'image présentant la ou les caractéristiques variables. Chaque caractéristique variable est susceptible d'être associée à une valeur pour former une combinaison constituée de l'ensemble des caractéristiques variables et des valeurs. De préférence dans ce cas, selon l'invention, le procédé comprend en outre l'étape de produire la fraction desdites informations formatées pour une sélection prédéterminée desdites combinaisons. Les informations formatées de ladite fraction des informations formatées, ainsi obtenues, entrent dans le champ des informations formatées, ces informations formatées sont ci-après dénommées les informations formatées mesurées.

De préférence, selon l'invention, le procédé comprend l'étape d'obtenir la fraction des informations formatées relative à une combinaison quelconque, à partir des informations formatées mesurées. La fraction des informations formatées relative à une combinaison quelconque est ci-après dénommée informations formatées étendues.

Les informations formatées peuvent comprendre les informations formatées étendues en lieu et place des informations formatées mesurées.

Les informations formatées mesurées et les dites informations formatées étendues peuvent présenter un écart d'interpolation. De préférence, selon l'invention, le procédé comprend en outre l'étape de sélectionner zéro, une ou plusieurs des caractéristiques variables, de telle sorte que l'écart d'interpolation, pour les informations formatées étendues obtenues pour les caractéristiques variables ainsi sélectionnées, soit inférieur à un seuil d'interpolation prédéterminé. Il résulte de la combinaison des traits techniques que la modification de la qualité des images met en oeuvre des calculs simples. Il résulte également de la combinaison des traits techniques que les informations formatées étendues sont compactes. Il résulte également de la combinaison des traits techniques que les caractéristiques variables éliminées sont les moins influentes sur le défaut.

### Moyen de restitution d'image

La chaîne d'appareils peut comprendre au moins un moyen de restitution d'image, notamment une imprimante, un écran de visualisation. Le procédé est destiné en outre à fournir à des moyens de traitement d'image, notamment des logiciels, des informations formatées liées aux défauts des moyens de restitution d'image. De préférence dans ce cas, selon l'invention, le procédé comprend en outre l'étape de produire des données caractérisant des défauts des moyens de restitution d'image, notamment les caractéristiques de distorsion. Les informations formatées comprennent également les données caractérisant des défauts des moyens de restitution.

La chaîne d'appareils comprend au moins un moyen de restitution d'images. Pour produire les informations formatées liées aux défauts du moyen de restitution d'image, notamment les caractéristiques de distorsion, De préférence, selon l'invention, le procédé comprend un sixième algorithme de calcul des informations formatées. Ce sixième algorithme permet d'effectuer un choix :
- dans un ensemble de modèles de transformation paramétrables de restitution,
- dans un ensemble de modèles de transformation paramétrables de restitution inverses,
- dans un ensemble de projections mathématiques de restitution,
- dans un ensemble de références de restitution et dans un ensemble d'images de référence corrigées de restitution.

Le choix effectué par ce sixième algorithme porte sur :
- une référence de restitution, et/ou
- une image de référence corrigée de restitution, et/ou
- un modèle de transformation paramétrable de restitution permettant de transformer la référence de restitution en l'image de référence corrigée de restitution, et/ou
- un modèle de transformation paramétrable de restitution inverse permettant de transformer l'image de référence corrigée de restitution en la référence de restitution, et/ou
- une projection mathématique de restitution permettant de réaliser une image de synthèse de restitution à partir de l'image de référence corrigée de restitution.

Le choix est effectué par ce sixième algorithme de telle sorte que l'image de synthèse de restitution soit proche de la référence restituée obtenue par restitution de la référence de restitution, au moyen du moyen de restitution d'images. La référence restituée présente un écart de restitution avec l'image de synthèse de restitution. Les informations formatées sont au moins en partie composées des paramètres du modèle de transformation paramétrable de restitution choisi et/ou des paramètres du modèle de transformation paramétrable de restitution inverse choisi.

La chaîne d'appareils comprend au moins un moyen de restitution d'images. Pour produire les informations formatées liées aux défauts du moyen de restitution d'image, notamment les caractéristiques de distorsion, de préférence dans ce cas, selon une variante de réalisation de l'invention, le procédé comprend un septième algorithme de calcul des informations formatées. Ce septième algorithme comporte les étapes de :
- choisir au moins une référence de restitution,
- restituer la référence de restitution, au moyen du moyen de restitution d'images, en une référence restituée.

Ce septième algorithme permet également de choisir dans un ensemble de modèles de transformation paramétrables de restitution et dans un ensemble de projections mathématiques de restitution :
- un modèle de transformation paramétrable de restitution permettant de transformer la référence de restitution en une image de référence corrigée de restitution, et
- une projection mathématique de restitution permettant de réaliser une image de synthèse de restitution à partir de l'image de référence corrigée de restitution.

Le choix est effectué par le septième algorithme de telle sorte que l'image de synthèse de restitution soit proche de la référence restituée. La référence restituée présente un écart de restitution avec l'image de synthèse de restitution. Les informations formatées sont au moins en partie composées des paramètres du modèle de transformation paramétrable de restitution choisis et/ou des paramètres du modèle de transformation paramétrable de restitution inverse. Le modèle de transformation paramétrable de restitution inverse permet de transformer l'image de référence corrigée de restitution en la référence de restitution.

La chaîne d'appareils comprend au moins un moyen de restitution d'images. Pour produire les informations formatées liées aux défauts du moyen de restitution d'image, notamment les caractéristiques de distorsion, de préférence, selon cette autre variante de réalisation l'invention, le procédé comprend un huitième algorithme de calcul des informations formatées. Ce huitième algorithme comporte l'étape de choisir une image de référence corrigée de restitution. Ce huitième algorithme comporte en outre l'étape d'effectuer un choix dans un ensemble de modèles de transformation paramétrables de restitution, dans un ensemble de projections mathématiques de restitution, dans un ensemble de références de restitution. Ce choix porte sur :
- une référence de restitution, et/ou
- un modèle de transformation paramétrable de restitution permettant de transformer la référence de restitution en l'image de référence corrigée de restitution, et/ou
- un modèle de transformation paramétrable de restitution inverse permettant de transformer l'image de référence corrigée de restitution en la référence de restitution, et/ou
- une projection mathématique de restitution permettant de réaliser une image de synthèse de restitution à partir de l'image de référence corrigée de restitution.

Le huitième algorithme effectue ce choix de telle sorte que l'image de synthèse de restitution soit proche de la référence restituée obtenue par restitution de la référence de restitution, au moyen du moyen de restitution d'images. La référence restituée présente un écart de restitution avec l'image de synthèse de restitution. Les informations formatées sont au moins en partie composées des paramètres du modèle de transformation paramétrable de restitution choisi et/ou des paramètres du modèle de transformation paramétrable de restitution inverse choisi.

De préférence, selon l'invention, le procédé comprend un neuvième algorithme de calcul des écarts de restitution. Ce neuvième algorithme comporte les étapes de :
- calculer les écarts de restitution entre la référence restituée et avec l'image de synthèse de restitution,
- associer les écarts de restitution auxdites informations formatées.

Il résulte de la combinaison des traits techniques qu'il est possible de vérifier automatiquement, par exemple pendant la fabrication de l'appareil que le procédé a produit des informations formatées dans des tolérances acceptables.

### Focale variable - moyen de restitution d'image

Le moyen de restitution d'image de la chaîne d'appareils peut présenter au moins une caractéristique variable de restitution selon l'image, notamment la focale et/ou l'ouverture. Une fraction des informations formatées est liée aux défauts du moyen de restitution d'image présentant la ou les caractéristiques variables de restitution. Chaque caractéristique variable de restitution est susceptible d'être associée à une valeur pour former une combinaison de restitution constituée de l'ensemble des caractéristiques variables de restitution et des valeurs. De préférence dans ce cas, selon l'invention, le procédé comprend en outre l'étape de produire la fraction des informations formatées pour une sélection prédéterminée des combinaisons de restitution. Les informations formatées de la fraction, ainsi obtenues, entrant dans le champ des informations formatées, sont ci-après dénommées les informations formatées mesurées de restitution.

De préférence, selon l'invention, le procédé comprend l'étape d'obtenir la fraction des informations formatées relative à une combinaison de restitution quelconque, à partir des informations formatées mesurées de restitution. La fraction des informations formatées relative à une combinaison de restitution quelconque est ci-après dénommée informations formatées étendues de restitution.

Les informations formatées peuvent comprendre les informations formatées étendues de restitution en lieu et place des informations formatées mesurées de restitution.

Les informations formatées mesurées de restitution et les dites informations formatées étendues de restitution peuvent présenter un écart d'interpolation de restitution. De préférence dans ce cas, selon l'invention, le procédé comprend en outre l'étape de sélectionner zéro, une ou plusieurs des caractéristiques variables de restitution, de telle sorte que l'écart d'interpolation de restitution, pour les informations formatées étendues de restitution obtenues pour les caractéristiques variables de restitution ainsi sélectionnées, soit inférieur à un seuil d'interpolation de restitution prédéterminé. Il résulte de la combinaison des traits techniques que la modification de qualité des images met en oeuvre des calculs simples. Il résulte également de la combinaison des traits techniques que les informations formatées étendues de restitution sont compactes. Il résulte également de la combinaison des traits techniques que les caractéristiques variables de restitution éliminées sont les moins influentes sur le défaut.

De préférence, selon l'invention, le moyen de restitution est associé à un appareil de capture d'image pour restituer, sous une forme numérique, la référence restituée à partir de la référence de restitution. Le procédé est tel que pour produire les informations formatées liées aux défauts du moyen de restitution, on utilise les informations formatées relatives à l'appareil de capture d'image associé au moyen de restitution.

La chaîne d'appareils comprend au moins deux appareils. Pour produire des informations formatées liées aux défauts des appareils de la chaîne d'appareils, de préférence dans ce cas, selon l'invention, le procédé comprend en outre les étapes suivantes :
- l'étape de produire des informations formatées relatives à chacun des appareils de la chaîne d'appareils,
- l'étape de combiner les informations formatées relatives à chacun des appareils de la chaîne d'appareil, pour obtenir les informations formatées relative à la chaîne d'appareils.

### Système

L'invention concerne un système tel que défini par la revendication 20 ci-jointe, pour produire des informations formatées, liées aux défauts des appareils d'une chaîne d'appareils. Les informations formatées sont destinées à des moyens de traitement d'image, notamment des logiciels, en vue de modifier la qualité des images traitées par les moyens de traitement d'image. La chaîne d'appareils comprend notamment au moins un appareil de capture d'image et/ou au moins un moyen de restitution et/ou au moins un observateur. Le système comprend des moyens de traitement informatique pour produire des données caractérisant des défauts des appareils de la chaîne d'appareils. Les données sont ci-après dénommées les informations formatées.

### Appareil de capture d'image

La chaîne d'appareils comprend au moins un appareil de capture d'image, notamment un scanner. De préférence dans ce cas, selon l'invention, le système est plus particulièrement destiné à produire des informations formatées liées aux défauts de l'appareil de capture d'image. Le système comprend des moyens de traitement informatique pour produire des données caractérisant des défauts de l'appareil de capture d'image, notamment les caractéristiques de piqué. Les informations formatées comprennent également les données caractérisant les défauts de l'appareil de capture d'image.

La chaîne d'appareils comprend au moins un appareil de capture d'image. De préférence, selon l'invention, les moyens de traitement informatique pour produire les informations formatées liées aux défauts de l'appareil de capture d'image, notamment les caractéristiques de distorsion, permettent de mettre en oeuvre un premier algorithme de calcul des informations formatées. Les moyens de traitement informatique mettant en oeuvre le premier algorithme de calcul permettent d'effectuer un choix dans un ensemble de modèles de transformation paramétrables, dans un ensemble de modèles de transformation paramétrables inverses, dans un ensemble d'images de synthèse, dans un ensemble de scènes de référence et dans un ensemble d'images transformées.

Ce choix porte sur :
- une scène de référence, et/ou
- une image transformée, et/ou
- un modèle de transformation paramétrable permettant de transformer l'image de référence, obtenue en capturant la scène de référence au moyen de l'appareil de capture d'image, en l'image transformée, et/ou
- un modèle de transformation paramétrable inverse permettant de transformer l'image transformée en l'image de référence, et/ou
- une image de synthèse obtenue à partir de la scène de référence et/ou obtenue à partir de l'image de référence.

Les moyens de traitement informatique effectuent ce choix de telle sorte que l'image transformée soit proche de l'image de synthèse. L'image transformée présentant un écart avec l'image de synthèse. Les informations formatées sont au moins en partie composées des paramètres du modèle de transformation paramétrable choisi et/ou des paramètres du modèle de transformation paramétrable inverse choisi.

De préférence, selon l'invention, les moyens de traitement informatique mettant en oeuvre le premier algorithme de calcul comportent des moyens de calcul pour choisir dans un ensemble de projections mathématiques, une projection mathématique permettant de réaliser l'image de synthèse à partir de la scène de référence.

La chaîne d'appareils comprend au moins un appareil de capture d'image. Pour produire les informations formatées liées aux défauts de l'appareil de capture d'image, notamment les caractéristiques de distorsion, de préférence, selon une variante de réalisation de l'invention les moyens de traitement informatique mettant en oeuvre un second algorithme de calcul des informations formatées. Les moyens de traitement informatique mettant en oeuvre le second algorithme de calcul comportent des moyens de calcul pour choisir au moins une scène de référence. L'appareil de capture d'image permet de capturer au moins une image de référence de chaque scène de référence. Les moyens de calcul permettent en outre de procéder au choix, dans un ensemble de modèles de transformation paramétrables et dans un ensemble d'images de synthèse :
- d'un modèle de transformation paramétrable permettant de transformer l'image de référence, en une image transformée, et/ou
- d'une image de synthèse obtenue à partir de la scène de référence et/ou obtenue à partir de l'image de référence.

Les moyens de calcul effectuent ce choix de telle sorte que l'image de synthèse soit proche de l'image transformée. L'image transformée présente un écart avec l'image de synthèse. Les informations formatées sont au moins en partie composées des paramètres du modèle de transformation paramétrable choisi et/ou des paramètres du modèle de transformation paramétrable inverse. Le modèle de transformation paramétrable inverse permet de transformer l'image transformée en l'image de référence.

De préférence, selon l'invention, les moyens de calcul permettant de mettre en oeuvre le second algorithme de calcul comportent des moyens de calcul spécifiques pour choisir dans un ensemble de projections mathématiques, une projection mathématique permettant de réaliser l'image de synthèse à partir de la scène de référence.

De préférence, selon l'invention, les moyens de traitement informatique permettent de mettre en oeuvre un troisième algorithme de calcul des écarts. A cet effet, les moyens de traitement informatique comportent des moyens de calcul appropriés pour :
- calculer les écarts entre l'image transformée et l'image de synthèse,
- associer les écarts auxdites informations formatées.

De préférence, selon une autre variante de réalisation de l'invention, le système est tel que, pour calculer les informations formatées relatives à un appareil de capture d'image de la chaîne d'appareils, il utilise en outre au moins une scène de référence. L'appareil de capture d'image réalise une image de référence pour chaque scène de référence. Pour calculer les informations formatées relatives à l'appareil de capture d'image, le système comprend en outre des moyens de calcul et de traitement pour :
- réaliser une classe d'images de synthèse par projections mathématiques déterminées, d'au moins une scène de référence, sur une surface,
- choisir dans un ensemble de modèles de transformation paramétrables celui permettant de transformer l'image de référence en une image transformée proche de la classe d'images de synthèse de la scène de référence.

L'image transformée présente un écart avec la classe d'images de synthèse. Les informations formatées sont au moins en partie composées des paramètres des modèles de transformation paramétrables choisis.

De préférence, selon l'invention, le système comprend des moyens de calcul pour :
- calculer les écarts entre l'image transformée et la classe d'images de synthèse,
- associer les écarts auxdites informations formatées.

### Focale variable - appareil de capture d'image

De préférence, selon l'invention, le système est tel que l'appareil de capture d'image de la chaîne d'appareils présente au moins une caractéristique variable selon l'image, notamment la focale et/ou l'ouverture. Une fraction des informations formatées est liée aux défauts de l'appareil de capture d'image présentant la ou les caractéristiques variables. Chaque caractéristique variable est susceptible d'être associée à une valeur pour former une combinaison constituée de l'ensemble des caractéristiques variables et des valeurs. Le système comprend en outre des moyens de traitement informatique pour produire la fraction des informations formatées pour une sélection prédéterminée des combinaisons. Les informations formatées de la fraction des informations formatées, ainsi obtenues, entrant dans le champ des informations formatées, sont ci-après dénommées les informations formatées mesurées.

De préférence, selon l'invention, les moyens de traitement informatique permettent d'obtenir la fraction des informations formatées relative à une combinaison quelconque, à partir des informations formatées mesurées. La fraction des informations formatées relative à une combinaison quelconque est ci-après dénommée informations formatées étendues.

Les informations formatées peuvent comprendre les informations formatées étendues en lieu et place des informations formatées mesurées.

Les informations formatées mesurées et les dites informations formatées étendues présentent un écart d'interpolation. De préférence, selon l'invention, le système comprend en outre des moyens de sélection pour sélectionner zéro, une ou plusieurs des caractéristiques variables, de telle sorte que l'écart d'interpolation, pour les informations formatées étendues obtenues pour les caractéristiques variables ainsi sélectionnées, soit inférieur à un seuil d'interpolation prédéterminé.

### Moyen de restitution d'image

La chaîne d'appareils peut comprendre au moins un moyen de restitution d'image, notamment une imprimante ou un écran de visualisation. Le système est destiné à fournir à des moyens de traitement d'image, notamment des logiciels, des informations formatées liées aux défauts des moyens de restitution d'image. De préférence dans ce cas, selon l'invention, le système comprend en outre des moyens de traitement informatique pour produire des données caractérisant des défauts des moyens de restitution d'image, notamment les caractéristiques de distorsion. Les informations formatées comprennent également les données caractérisant des défauts des moyens de restitution.

Dans le cas où la chaîne d'appareils comprend au moins un moyen de restitution d'images, de préférence, pour produire les informations formatées liées aux défauts du moyen de restitution d'image, notamment les caractéristiques de distorsion, le système comprend des moyens de calcul pour procéder à un choix :
- dans un ensemble de modèles de transformation paramétrables de restitution,
- dans un ensemble de modèles de transformation paramétrables de restitution inverses,
- dans un ensemble de projections mathématiques de restitution,
- dans un ensemble de références de restitution et dans un ensemble d'images de référence corrigées de restitution.

Le choix effectuer par les moyens de calcul porte sur :
- une référence de restitution, et/ou
- une image de référence corrigée de restitution, et/ou
- un modèle de transformation paramétrable de restitution permettant de transformer la référence de restitution en l'image de référence corrigée de restitution, et/ou

- un modèle de transformation paramétrable de restitution inverse permettant de transformer l'image de référence corrigée de restitution en la référence de restitution, et/ou
- une projection mathématique de restitution permettant de réaliser une image de synthèse de restitution à partir de l'image de référence corrigée de restitution.

Les moyens de calcul effectuent ce choix de telle sorte que l'image de synthèse de restitution soit proche de la référence restituée obtenue par restitution de la référence de restitution, au moyen du moyen de restitution d'images. La référence restituée présente un écart de restitution avec l'image de synthèse de restitution. Les informations formatées sont au moins en partie composées des paramètres du modèle de transformation paramétrable de restitution choisi et/ou des paramètres du modèle de transformation paramétrable de restitution inverse choisi.

La chaîne d'appareils peut comprendre au moins un moyen de restitution d'image. pour produire les informations formatées liées aux défauts du moyen de restitution d'image, notamment les caractéristiques de distorsion, de préférence dans le cas de cette variante de réalisation selon l'invention, le système comprend des moyens de calcul pour choisir au moins une référence de restitution. Le moyen de restitution d'images permet de restituer la référence de restitution en une référence restituée. Les moyens de calcul permettent en outre de procéder au choix dans un ensemble de modèles de transformation paramétrables de restitution et dans un ensemble de projections mathématiques de restitution :
- d'un modèle de transformation paramétrable de restitution permettant de transformer la référence de restitution en une image de référence corrigée de restitution, et
- d'une projection mathématique de restitution permettant de réaliser une image de synthèse de restitution à partir de l'image de référence corrigée de restitution.

Les moyens de calcul effectuent ce choix de telle sorte que l'image de synthèse de restitution soit proche de la référence restituée. La référence restituée présente un écart de restitution avec l'image de synthèse de restitution. Les informations formatées sont au moins en partie composées des paramètres du modèle de transformation paramétrable de restitution choisis et/ou des paramètres du modèle de transformation paramétrable de restitution inverse. Le modèle de transformation paramétrable de restitution inverse permet de transformer l'image de référence corrigée de restitution en la référence de restitution.

La chaîne d'appareils peut comprendre au moins un moyen de restitution d'images. pour produire les informations formatées liées aux défauts du moyen de restitution d'image, notamment les caractéristiques de distorsion, de préférence dans le cas de cette variante de réalisation selon l'invention, le système comprend des moyens de calcul pour choisir une image de référence corrigée de restitution. Les moyens de calcul permettent en outre de procéder au choix dans un ensemble de modèles de transformation paramétrables de restitution, dans un ensemble de projections mathématiques de restitution, dans un ensemble de références de restitution:
- d'un modèle de transformation paramétrable de restitution permettant de transformer une référence de restitution déterminée en l'image de référence corrigée de restitution, et/ou
- d'un modèle de transformation paramétrable de restitution inverse permettant de transformer l'image de référence corrigée de restitution en la référence de restitution, et/ou
- d'une projection mathématique de restitution permettant de réaliser une image de synthèse de restitution à partir de l'image de référence corrigée de restitution.

Les moyens de calcul effectuent ce choix de telle sorte que l'image de synthèse de restitution soit proche de la référence restituée obtenue par restitution de la référence de restitution, au moyen du moyen de restitution d'images. La référence restituée présente un écart de restitution avec l'image de synthèse de restitution. Les informations formatées sont au moins en partie composées des paramètres du modèle de transformation paramétrable de restitution choisi et/ou des paramètres du modèle de transformation paramétrable de restitution inverse choisi.

De préférence, selon l'invention, le système comprend des moyens de calcul pour :
- calculer les écarts de restitution entre la référence restituée et avec l'image de synthèse de restitution,
- associer les écarts de restitution auxdites informations formatées.

### Focale variable - moyen de restitution d'image

Le moyen de restitution d'image de la chaîne d'appareils peut présenter au moins une caractéristique variable de restitution selon l'image, notamment la focale et/ou l'ouverture. Une fraction des informations formatées est liée aux défauts du moyen de restitution d'image présentant la ou les caractéristiques variables de restitution. Chaque caractéristique variable de restitution est susceptible d'être associée à une valeur pour former une combinaison de restitution constituée de l'ensemble des caractéristiques variables de restitution et des valeurs. De préférence dans le cas de cette variante de réalisation selon l'invention, le système comprend en outre des moyens de traitement informatique pour produire la fraction des informations formatées pour une sélection prédéterminée des combinaisons de restitution. Les informations formatées de la fraction, ainsi obtenues, entrant dans le champ des informations formatées, sont ci-après dénommées les informations formatées mesurées de restitution.

De préférence, selon l'invention, le système comprend de moyens de traitement informatique pour obtenir la fraction des informations formatées relative à une combinaison de restitution quelconque, à partir des informations formatées mesurées de restitution. Les informations formatées composant la fraction des informations formatées relative à une combinaison de restitution quelconque sont ci-après dénommées informations formatées étendues de restitution.

Les informations formatées peuvent comprendre les informations formatées étendues de restitution en lieu et place des informations formatées mesurées de restitution.

Les informations formatées mesurées de restitution et les dites informations formatées étendues de restitution présentent un écart d'interpolation de restitution. De préférence dans ce cas, selon l'invention, le système comprend en outre des moyens de sélection pour sélectionner zéro, une ou plusieurs des caractéristiques variables de restitution, de telle sorte que l'écart d'interpolation de restitution, pour les informations formatées étendues de restitution obtenues pour les caractéristiques variables de restitution ainsi sélectionnées, soit inférieur à un seuil d'interpolation de restitution prédéterminé.

Selon une variante de réalisation de l'invention, le moyen de restitution est associé à un appareil de capture d'image pour restituer, sous une forme numérique, la référence restituée à partir de la référence de restitution. De préférence dans de cas, le système comprend des moyens de traitement informatique pour produire les informations formatées liées aux défauts du moyen de restitution, en utilisant les informations formatées relatives au appareil de capture d'image associé au moyen de restitution.

La chaîne d'appareils peut comprendre au moins deux appareils, pour produire des informations formatées liées aux défauts des appareils de la chaîne d'appareils, de préférence dans le cas de cette variante de réalisation de l'invention, le système comprend en outre des moyens de traitement informatique pour produire des informations formatées relatives à chacun des appareils de la chaîne d'appareils et pour combiner les informations formatées relatives à chacun des appareils de la chaîne d'appareil, de manière obtenir les informations formatées relative à la chaîne d'appareils.

### Description détaillée

D'autres caractéristiques et avantages de l'invention apparaîtront à la lecture de la description des variantes de réalisation de l'invention données à titre d'exemple indicatif et non limitatif, et des figures qui représentent respectivement :
- figure 1 : une vue schématique d'une capture d'image,
- figure 2 : une vue schématique d'une restitution d'image,
- figure 3 : une vue schématique des pixels d'une image,
- figures 4a et 4b : deux vues schématiques d'une scène de référence,
- figure 5 : l'organigramme de la méthode permettant de calculer la différence entre l'image mathématique et l'image corrigée,
- figure 6 : l'organigramme de la méthode permettant d'obtenir la meilleure transformation de restitution pour un moyen de restitution d'image,
- figure 7 : une vue schématique des éléments composant le système selon l'invention,
- figure 8 : une vue schématique des champs des informations formatées,
- figure 9a : une vue schématique de face d'un point mathématique,
- figure 9b : une vue schématique de face d'un point réel d'une image,
- figure 9c : une vue schématique de profil d'un point mathématique,
- figure 9d : une vue schématique de profil d'un point réel d'une image,
- figure 10 : une vue schématique d'une grille de points caractéristiques,
- figure 11 : l'organigramme de la méthode permettant d'obtenir les informations formatées,
- figure 12 : l'organigramme de la méthode permettant d'obtenir la meilleure transformation pour un appareil de capture d'image,
- figure 13 : l'organigramme de la méthode permettant de modifier la qualité d'une image provenant ou destinée à une chaîne d'appareil,
- figure 14 : un exemple de fichier contenant des informations formatées,
- figure 15 : un exemple d'informations formatées,
- figure 16 : une représentation de paramètres de modèles paramétrable,
- figure 17 : l'organigramme de la méthode permettant d'obtenir la meilleure transformation pour un appareil de restitution d'image.

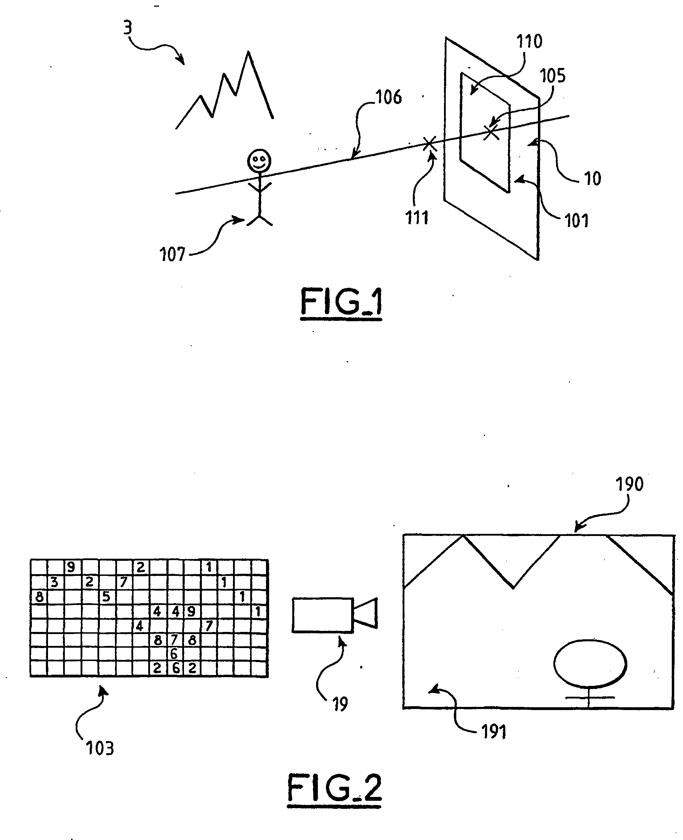

Sur la figure 1, on a représenté : une scène 3 comportant un objet 107, un capteur 101 et la surface du capteur 110, un centre optique 111, un point d'observation 105 sur une surface du capteur 110, une direction d'observation 106 passant par le point d'observation 105, le centre optique 111, la scène 3, une surface 10 géométriquement associée à la surface du capteur 110.

Sur la figure 2, on a représenté une image 103, un moyen de restitution d'image 19 et une image restituée 191 obtenue sur le support de restitution 190.

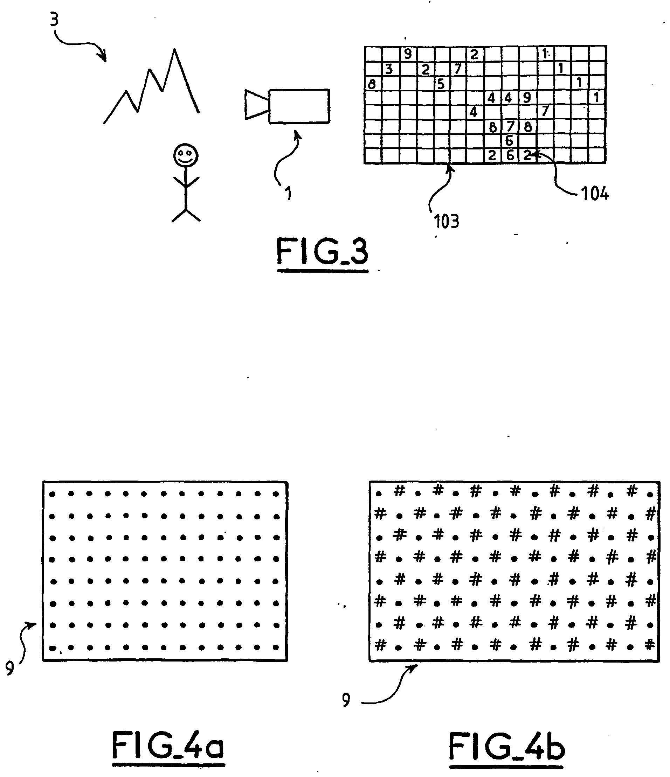

Sur la figure 3 on a représenté une scène 3, un appareil de capture d'image 1 et une image 103 constituée de pixels 104.

Sur les figures 4a et 4b, on a représenté deux variantes d'une scène de référence 9.

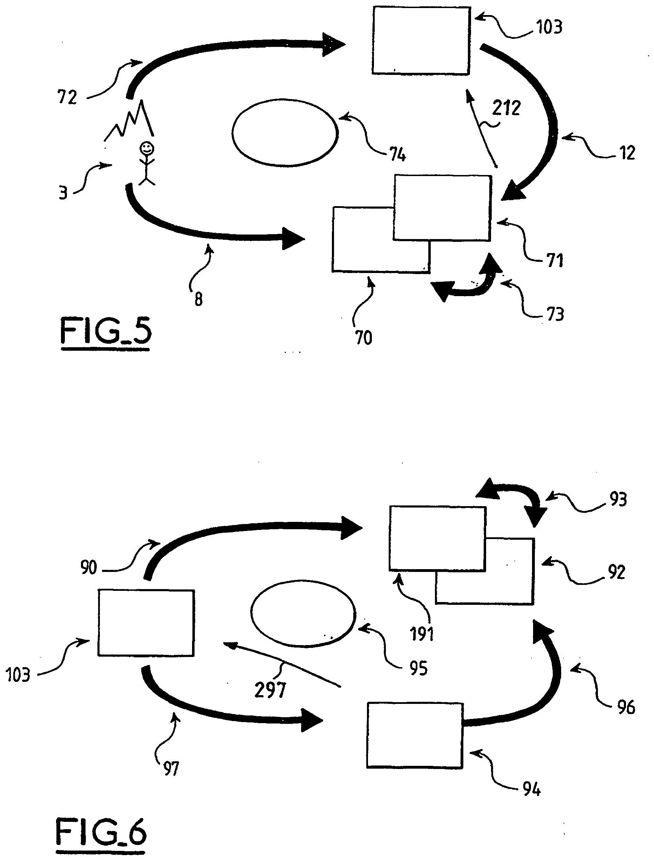

Sur la figure 5 on a représenté un organigramme mettant en oeuvre une scène 3, une projection mathématique 8 donnant une image mathématique 70 de la scène 3, une projection réelle 72 donnant une image 103 de la scène 3 pour les caractéristiques utilisées 74, un modèle de transformation paramétrable 12 donnant une image corrigée 71 de l'image 103, l'image corrigée 71 présentant une différence 73 avec l'image mathématique 70.

Sur la figure 6 on a représenté un organigramme mettant en oeuvre une image 103, une projection réelle de restitution 90 donnant une image restituée 191 de l'image 103 pour les caractéristiques de restitution utilisées 95, un modèle de transformation paramétrable de restitution 97 donnant une image corrigée de restitution 94 de l'image 103, une projection mathématique de restitution 96 donnant une image mathématique de restitution 92 de l'image corrigée de restitution 94 et présentant une différence de restitution 93 avec l'image restituée 191.

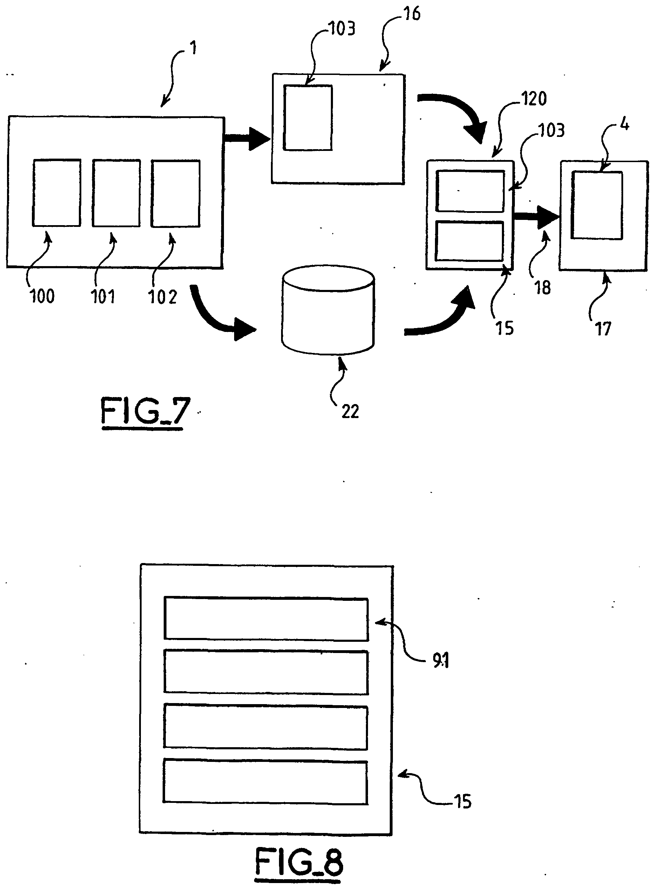

Sur la figure 7 on a représenté un système comprenant un appareil de capture d'image 1 constitué d'une optique 100, d'un capteur 101 et d'une électronique 102. Sur la figure 7 on a également représenté une zone mémoire 16 contenant une image 103, une base de données 22 contenant des informations formatées 15, des moyens de transmission 18 de l'image complétée 120 constituée de l'image 103 et des informations formatées 15 vers des moyens de calcul 17 contenant des logiciels de traitement d'image 4.

Sur la figure 8 on a représenté des informations formatées 15 constituées de champs 91.

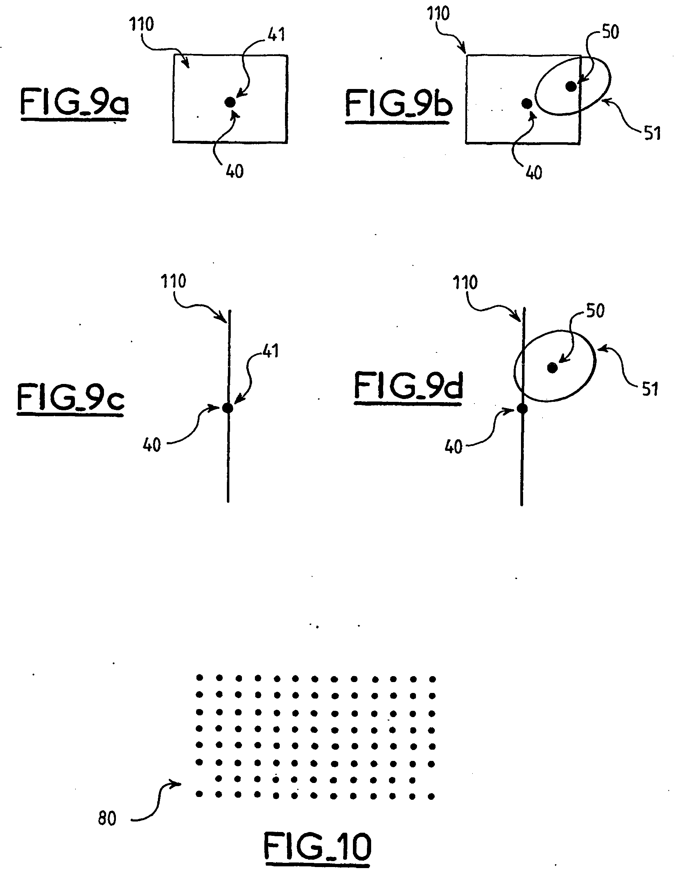

Sur les figures 9a à 9d on a représenté une image mathématique 70, une image 103, la position mathématique 40 d'un point, la forme mathématique 41 d'un point, comparés à la position réelle 50 et à la forme réelle 51 du point correspondant de l'image.

Sur la figure 10 on a représenté une grille 80 de points caractéristiques.

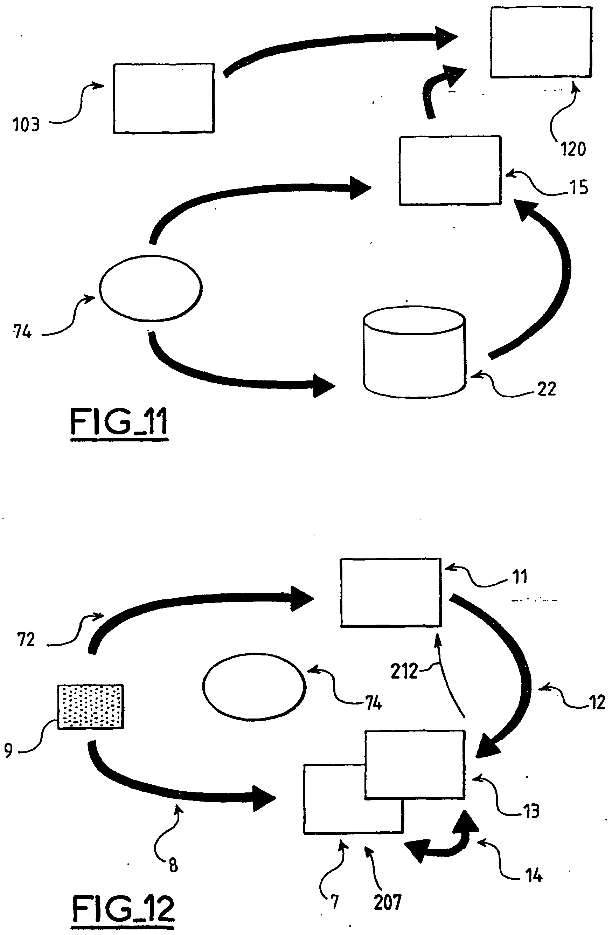

Sur la figure 11 on a représenté un organigramme mettant en oeuvre une image 103, des caractéristiques utilisées 74, une base de données de caractéristiques 22. Les informations formatées 15 sont obtenues à partir des caractéristiques utilisées 74 et stockées dans la base de données 22. L'image complétée 120 est obtenue à partie de l'image 103 et des informations formatées 15.

Sur la figure 12 on a représenté un organigramme mettant en oeuvre une scène de référence 9, une projection mathématique 8 donnant une classe d'image de synthèse 7 de la scène de référence 9, une projection réelle 72 donnant une image de référence 11 de la scène de référence 9 pour les caractéristiques utilisées 74. Cet organigramme met également en oeuvre un modèle de transformation paramétrable 12 donnant une image transformée 13 de l'image de référence 11. L'image transformée 13 présente un écart 14 avec la classe d'image de synthèse 7.

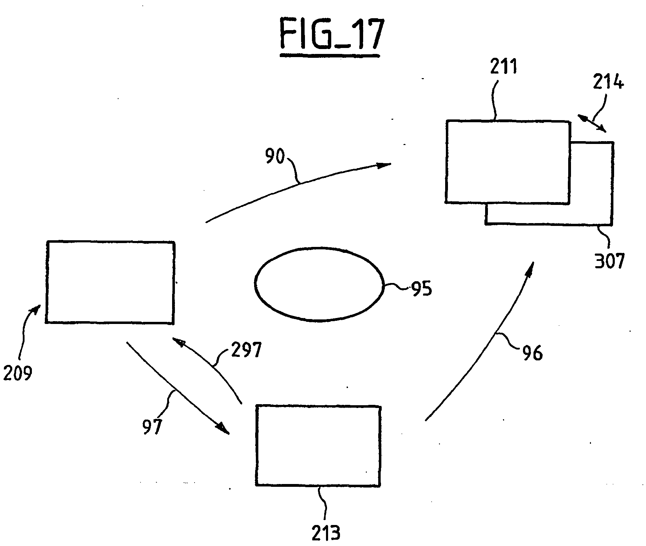

Sur la figure 17 on a représenté un organigramme mettant en oeuvre une référence de restitution 209, une projection réelle de restitution 90 donnant une référence restituée 211 de ladite référence de restitution 209 pour les caractéristiques de restitution utilisées 95, un modèle de transformation paramétrable de restitution 97 donnant une image de référence corrigée de restitution 213 de ladite référence de restitution 209, un modèle de transformation paramétrable de restitution inverse 297 produisant à partir de ladite image de référence corrigée de restitution 213, ladite référence de restitution 209. Cet organigramme met également en oeuvre une projection mathématique de restitution 96 donnant image de synthèse de restitution 307 de l'image de référence corrigée de restitution 213. Ladite image de synthèse de restitution 307 présente un écart de restitution 214 avec la référence restituée 211.

### Définitions et description détaillée

D'autres caractéristiques et avantages de l'invention apparaîtront à la lecture :
- des définitions, ci-après explicitées, des termes techniques employés illustrées en se référant aux exemples indicatifs et non limitatifs des figures 1 à 17,
- de la description des figures 1 à 17.

### Scène

On appelle scène 3 un lieu dans l'espace à trois dimensions, qui comprend des objets 107 éclairés par des sources lumineuses.

### Appareil de capture d'image, Image, Capture d'image.

On va maintenant décrire en se référant aux figures 3 et 7, ce que l'on entend par appareil de capture d'image 1 et image 103. On appelle appareil de capture d'image 1, un appareil constitué d'une optique 100, d'un ou de plusieurs capteurs 101, d'une électronique 102, d'une zone mémoire 16. Ledit appareil de capture d'image 1 permet à partir d'une scène 3 d'obtenir des images numériques fixes 103 ou animées enregistrées dans la zone mémoire 16 ou transmises à un dispositif externe. Des images animées sont constituées d'une succession dans le temps, d'images fixes 103. Ledit appareil de capture d'image 1 peut prendre la forme notamment d'un appareil photo, d'un caméscope, d'une caméra reliée ou intégrée à un PC, d'une caméra reliée ou intégrée à un assistant personnel, d'une caméra reliée ou intégrée à un téléphone, d'un appareil de visioconférence ou d'une caméra ou appareil de mesure sensible à d'autres longueurs d'onde que celles de la lumière visible comme par exemple une caméra thermique.

On appelle capture d'image le procédé consistant en le calcul de l'image 103 par l'appareil de capture d'image 1.

Dans le cas où un appareil comporte plusieurs sous-ensembles interchangeables, en particulier une optique 100, on appelle appareil de capture d'image 1, une configuration particulière de l'appareil.

### Moyen de restitution d'image, Image restituée, Restitution d'image.

On va maintenant décrire en se référant à la figure 2 ce que l'on entend par moyen de restitution d'image 19. Un tel moyen de restitution d'image 19 peut prendre la forme notamment d'un écran de visualisation, d'un téléviseur, d'un écran plat, d'un projecteur, de lunettes de réalité virtuelle, d'une imprimant.

Un tel moyen de restitution d'image 19 comprend :
- une électronique,
- une ou plusieurs sources de lumière, d'électrons ou d'encre,
- un ou plusieurs modulateurs : dispositifs de modulation de lumière, d'électrons ou d'encre,
- un dispositif de focalisation, se présentant notamment sous la forme d'une optique dans le cas d'un projecteur lumineux, ou sous la forme de bobines de focalisation de faisceau électronique dans le cas d'un écran à tube cathodique, ou sous la forme de filtres dans le cas d'un écran plat,
- d'un support de restitution 190 se présentant notamment sous la forme d'un écran dans le cas d'un écran à tube cathodique, d'un écran plat ou d'un projecteur, sous la forme d'un support d'impression sur lequel l'impression est effectuée dans le cas d'une imprimante, ou sous la forme d'une surface virtuelle dans l'espace dans le cas d'un projecteur à image virtuelle.

Ledit moyen de restitution d'image 19 permet à partir d'une image 103 d'obtenir une image restituée 191 sur le support de restitution 190.

Des images animées sont constituées d'une succession dans le temps, d'images fixes.

On appelle restitution d'image le procédé consistant en l'affichage ou l'impression de l'image par le moyen de restitution d'image 19.

Dans le cas où un moyen de restitution 19 comporte plusieurs sous-ensembles interchangeables ou pouvant se déplacer relativement l'un par rapport à l'autre, en particulier le support de restitution 190, on appelle moyen de restitution d'image 19 une configuration particulière.

### Surface du capteur, Centre optique, Distance focale.

On va maintenant décrire en se référant à la figure 1 ce que l'on appelle surface du capteur 110.

On appelle surface du capteur 110, la forme dans l'espace dessinée par la surface sensible du capteur 101 de l'appareil de capture d'image 1 au moment de la capture d'image. Cette surface est généralement plane.

On appelle centre optique 111 un point dans l'espace associé à l'image 103 au moment de la capture d'image. On appelle distance focale la distance entre ce point 111 et le plan 110, dans le cas où la surface du capteur 110 est plane.

### Pixel, Valeur de pixel, Temps de pose.

On va maintenant décrire, en se référant à la figure 3, ce que l'on entend par pixel 104 et valeur de pixel.

On appelle pixel 104, une zone élémentaire de la surface du capteur 110 obtenue en créant un pavage généralement régulier, de ladite surface du capteur 110. On appelle valeur de pixel, un nombre associé à ce pixel 104.

Une capture d'image consiste à déterminer la valeur de chaque pixel 104. L'ensemble de ces valeurs constitue l'image 103.

Lors d'une capture d'image, la valeur de pixel est obtenue par l'intégration sur la surface du pixel 104, pendant une période de temps appelée temps de pose, d'une partie du flux lumineux provenant de la scène 3 à travers l'optique 100 et par conversion du résultat de cette intégration en valeur numérique. L'intégration du flux lumineux et/ou la conversion du résultat de cette intégration en valeur numérique sont effectuées au moyen de l'électronique 102.

Cette définition de la notion de valeur de pixel s'applique au cas des images 103 en noir et blanc ou en couleur, qu'elles soient fixes ou animées.

Cependant, selon les cas, la partie du flux lumineux concernée est obtenue de diverses façons :
a) Dans le cas d'une image 103 en couleurs, la surface du capteur 110 comporte généralement plusieurs types de pixels 104, respectivement associés à des flux lumineux de longueurs d'onde différentes, tels que par exemple des pixels rouges, verts et bleus.
b) Dans le cas d'une image 103 en couleurs, il peut également y avoir plusieurs capteurs 101 juxtaposés qui reçoivent chacun une partie du flux lumineux.
c) Dans le cas d'une image 103 en couleurs, les couleurs utilisées peuvent être différentes de rouge, vert et bleu, comme par exemple pour la télévision NTSC américaine, et peuvent être en nombre supérieur à trois.
d) Enfin, dans le cas d'une caméra de télévision à balayage dit entrelacé, les images animées produites sont constituées d'une alternance d'images 103 comportant les lignes paires, et d'images 103 comportant les lignes impaires.

### Configuration utilisée, Réglages utilisés, Caractéristiques utilisées.

On appelle configuration utilisée la liste des sous-ensembles amovibles de l'appareil de capture d'image 1, par exemple l'optique 100 effectivement montée sur l'appareil de capture d'image 1 si elle est interchangeable. La configuration utilisée est caractérisée notamment par :
- le type de l'optique 100,
- le numéro de série de l'optique 100 ou toute autre désignation.

On appelle réglages utilisés :
- la configuration utilisée telle que définie ci-dessus, ainsi que
- la valeur des réglages manuels ou automatiques disponibles dans la configuration utilisée et ayant un impact sur le contenu de l'image 103. Ces réglages peuvent être effectués par l'utilisateur, notamment à l'aide de boutons, ou calculés par l'appareil de capture d'image 1. Ces réglages peuvent être stockés dans l'appareil, notamment sur un support amovible, ou sur tout dispositif connecté à l'appareil. Ces réglages peuvent inclure notamment les réglages de focalisation, de diaphragme, et de focale de l'optique 100, les réglages de temps de pose, les réglages de balance des blancs, les réglages de traitement d'image intégrés comme le zoom numérique, la compression, le contraste,

On appelle caractéristiques utilisées 74 ou jeu de caractéristiques utilisées 74 :
a) Des paramètres liés aux caractéristiques techniques intrinsèques de l'appareil de capture d'image 1, déterminées au moment de la conception de l'appareil de capture d'image 1. Par exemple, ces paramètres peuvent comprendre la formule de l'optique 100 de la configuration utilisée impactant les défauts géométriques et le piqué des images capturées ; la formule de l'optique 100 de la configuration utilisée inclut notamment la forme, la disposition et le matériau des lentilles de l'optique 100.
   Ces paramètres peuvent en outre comprendre :
   - la géométrie du capteur 101, à savoir la surface du capteur 110 ainsi que la forme et la disposition relative des pixels 104 sur cette surface,
   - le bruit généré par l'électronique 102,
   - la loi de conversion flux lumineux en valeur de pixel.
b) Des paramètres liés aux caractéristiques techniques intrinsèques de l'appareil de capture d'image 1, déterminées au moment de la fabrication de l'appareil de capture d'image 1, et notamment :
   - le positionnement exact des lentilles dans l'optique 100 de la configuration utilisée,
   - le positionnement exact de l'optique 100 par rapport au capteur 101.
c) Des paramètres liés aux caractéristiques techniques de l'appareil de capture d'image 1, déterminées au moment de la capture de l'image 103 et notamment :
   - la position et l'orientation de la surface du capteur 110 par rapport à la scène 3,
   - les réglages utilisés,
   - les facteurs extérieurs, tels que la température, s'ils ont une influence.
d) Les préférences de l'utilisateur, notamment la température de couleur à utiliser pour la restitution d'images. Ces préférences sont par exemple sélectionnées par l'utilisateur à l'aide de boutons.

### Point d'observation, direction d'observation

On va maintenant décrire en se référant à la figure 1 ce que l'on entend par point d'observation 105 et direction d'observation 106.

On appelle surface mathématique 10 une surface géométriquement associée à la surface du capteur 110. Par exemple, si la surface du capteur est plane, la surface mathématique 10 pourra être confondue avec celle du capteur.

On appelle direction d'observation 106 une droite passant par au moins un point de la scène 3 et par le centre optique 111. On appelle point d'observation 105 l'intersection de la direction d'observation 106 et de la surface 10.

### Couleur observée, Intensité observée

On va maintenant décrire en se référant à la figure 1 ce que l'on entend par couleur observée et intensité observée. On appelle couleur observée la couleur de la lumière émise, transmise ou réfléchie par ladite scène 3 dans ladite direction d'observation 106 à un instant donné, et observée depuis ledit point d'observation 105. On appelle intensité observée l'intensité de la lumière émise par ladite scène 3 dans ladite direction d'observation 106 au même instant, et observée depuis ledit point d'observation 105.

La couleur peut être notamment caractérisée par une intensité lumineuse fonction d'une longueur d'onde, ou encore par deux valeurs telles que mesurées par un colorimètre. L'intensité peut être caractérisée par une valeur telle que mesurée avec un photomètre.

Ladite couleur observée et ladite intensité observée dépendent notamment de la position relative des objets 107 dans la scène 3 et des sources d'éclairage présentes ainsi que des caractéristiques de transparence et de réflexion des objets 107 au moment de l'observation.

### Projection mathématique, Image mathématique, Point mathématique, Couleur mathématique d'un point, Intensité mathématique d'un point, Forme mathématique d'un point, Position mathématique d'un point.

On va ci-après décrire en se référant notamment aux figures 1, 5, 9a, 9b, 9c et 9d les notions de projection mathématique 8, image mathématique 70, point mathématique, couleur mathématique d'un point, intensité mathématique d'un point, forme mathématique 41 d'un point, position mathématique 40 d'un point.

On va maintenant décrire en se référant à la figure 5 comment on réalise une image mathématique 70 par projection mathématique déterminée 8 d'au moins une scène 3 sur la surface mathématique 10.

Préalablement, on va décrire ce que l'on entend par projection mathématique déterminée 8.

Une projection mathématique déterminée 8 associe :
- à une scène 3 au moment de la capture d'une image 103,
- et aux caractéristiques utilisées 74,

Une image mathématique 70.

Une projection mathématique déterminée 8 est une transformation qui permet de déterminer les caractéristiques de chaque point de l'image mathématique 70 à partir de la scène 3 au moment de la capture d'image et des caractéristiques utilisées 74.

De manière préférentielle, la projection mathématique 8 est définie de la façon qui sera ci-après décrite.

On appelle position mathématique 40 du point la position du point d'observation 105 sur la surface mathématique 10.

On appelle forme mathématique 41 du point la forme géométrique, ponctuelle, du point d'observation 105.

On appelle couleur mathématique du point la couleur observée.

On appelle intensité mathématique du point l'intensité observée.

On appelle point mathématique l'association de la position mathématique 40, de la forme mathématique 41, de la couleur mathématique et de l'intensité mathématique pour le point d'observation 105 considéré. L'image mathématique 70 est constituée de l'ensemble desdits point mathématiques.

La projection mathématique 8 de la scène 3 est l'image mathématique 70.

### Projection réelle, Point réel, couleur réelle d'un point, intensité réelle d'un point, forme réelle d'un point, position réelle d'un point.

On va ci-après décrire en se référant notamment aux figures 3, 5, 9a, 9b, 9c et 9d les notions de projection réelle 72, point réel, couleur réelle d'un point, intensité réelle d'un point, forme réelle 51 d'un point, position réelle 50 d'un point.

Lors d'une capture d'image, l'appareil de capture d'image 1 associé aux caractéristiques utilisées 74 produit une image 103 de la scène 3. La lumière provenant de la scène 3 selon une direction d'observation 106, traverse l'optique 100 et arrive sur la surface du capteur 110.

On obtient alors pour ladite direction d'observation ce que l'on appelle un point réel qui présente des différences par rapport au point mathématique.

En se référant aux figures 9a à 9d, on va maintenant décrire les différences entre le point réel et le point mathématique.

La forme réelle 51 associée à ladite direction d'observation 106 n'est pas un point sur la surface du capteur, mais a une forme de nuage dans l'espace à trois dimensions, qui a une intersection avec un ou plusieurs pixels 104. Ces différences ont en particulier pour origine le coma, l'aberration sphérique, l'astigmatisme, le regroupement en pixels 104, l'aberration chromatique, la profondeur de champ, la diffraction, les réflexions parasites, la courbure de champ de l'appareil de capture d'image 1. Elles donnent une impression de flou, de manque de piqué de l'image 103.

En outre, la position réelle 50 associée à ladite direction d'observation 106 présente une différence par rapport à la position mathématique 40 d'un point. Cette différence a en particulier pour origine la distorsion géométrique, qui donne une impression de déformation : par exemple, les murs verticaux paraissent courbes. Elle tient aussi au fait que le nombre de pixels 104 est limité et que par conséquent la position réelle 50 ne peut prendre qu'un nombre fini de valeurs.

En outre, l'intensité réelle associée à ladite direction d'observation 106 présente des différences par rapport à l'intensité mathématique d'un point. Ces différences ont en particulier pour origine le gamma et le vignettage : par exemple les bords de l'image 103 paraissent plus sombres. En outre du bruit peut s'ajouter au signal.

Enfin, la couleur réelle associée à ladite direction d'observation 106 présente des différences par rapport à la couleur mathématique d'un point. Ces différences ont en particulier pour origine le gamma et la dominante colorée. En outre du bruit peut s'ajouter au signal.

On appelle point réel l'association de la position réelle 50, de la forme réelle 51, de la couleur réelle et de l'intensité réelle pour la direction d'observation 106 considérée.

La projection réelle 72 de la scène 3 est constituée par l'ensemble des points réels.

Modèle de transformation paramétrable, Paramètres, Image corrigée

On appelle modèle de transformation paramétrable 12 (ou de manière condensée, transformation paramétrable 12), une transformation mathématique permettant d'obtenir à partir d'une image 103, et de la valeur de paramètres une image corrigée 71. Lesdits paramètres pouvant notamment être calculés à partir des caractéristiques utilisées 74 comme il est indiqué ci-après.

Ladite transformation paramétrable 12 permet en particulier de déterminer pour chaque point réel de l'image 103, la position corrigée dudit point réel, la couleur corrigée dudit point réel, l'intensité corrigée dudit point réel, la forme corrigée dudit point réel, à partir de la valeur des paramètres, de la position réelle dudit point réel et des valeurs des pixels de l'image 103. La position corrigée peut être par exemple calculée à l'aide de polynômes de degré fixé en fonction de la position réelle, les coefficients des polynômes dépendant de la valeur des paramètres. La couleur corrigée et l'intensité corrigée peuvent être par exemple des sommes pondérées des valeurs des pixels, les coefficients dépendant de la valeur des paramètres et de la position réelle, ou encore des fonctions non linéaires des valeurs des pixels de l'image 103.

On appelle modèle de transformation paramétrable inverse 212 (ou de manière condensée, transformation paramétrable inverse 212), une transformation mathématique permettant d'obtenir à partir d'une image corrigée 71, et de la valeur de paramètres une image 103. Lesdits paramètres pouvant notamment être calculés à partir des caractéristiques utilisées 74 comme il est indiqué ci-après.

Ladite transformation paramétrable inverse 212 permet en particulier de déterminer, pour chaque point de l'image corrigée 71, le point réel de l'image 103 correspondant audit point de l'image corrigée 71 et notamment la position dudit point réel, la couleur dudit point réel, l'intensité dudit point réel, la forme dudit point réel, à partir de la valeur des paramètres et de l'image corrigée 71. La position du point réel peut être par exemple calculée à l'aide de polynômes de degré fixé en fonction de la position du point de l'image corrigée 71, les coefficients des polynômes dépendant de la valeur des paramètres.

Les paramètres peuvent inclure notamment : la focale de l'optique 100 de la configuration utilisée ou une valeur liée telle que la position d'un groupe de lentilles, la focalisation de l'optique 100 de la configuration utilisée ou une valeur liée telle que la position d'un groupe de lentilles, l'ouverture de l'optique 100 de la configuration utilisée ou une valeur liée telle que la position du diaphragme.

### Différence entre l'image mathématique et l'image corrigée.

En se référant à la figure 5, on appelle différence 73 entre l'image mathématique 70 et l'image corrigée 71 pour une scène 3 donnée et des caractéristiques utilisées 74 données, une ou plusieurs valeurs déterminées à partir des nombres caractérisant la position, la couleur, l'intensité, la forme de tout ou partie des points corrigés et de tout ou partie des points mathématiques.

Par exemple, la différence 73 entre l'image mathématique 70 et l'image corrigée 71 pour une scène 3 donnée et des caractéristiques utilisées 74 données peut être déterminée de la façon suivante :
- On choisit des points caractéristiques qui peuvent être par exemple les points d'une grille orthogonale 80 de points disposés régulièrement comme présenté sur la figure 10.
- On calcule la différence 73 par exemple en effectuant la somme pour chaque point caractéristique des valeurs absolues des différences entre chaque nombre caractérisant la position corrigée, la couleur corrigée, l'intensité corrigée, la forme corrigée respectivement pour le point réel et pour le point mathématique. La fonction somme des valeurs absolues des différences peut être remplacée par une autre fonction comme la moyenne, la somme des carrés ou toute autre fonction permettant de combiner les nombres.

### Scène de référence

On appelle scène de référence 9 une scène 3 dont certaines caractéristiques sont connues. A titre d'exemple, la figure 4a présente une scène de référence 9 constituée d'une feuille de papier comportant des cercles remplis de noir et disposés régulièrement. La figure 4b présente une autre feuille de papier comportant les mêmes cercles auxquels s'ajoutent des traits et des surfaces colorées. Les cercles servent à mesurer la position réelle 50 d'un point, les traits la forme réelle 51 d'un point, les surfaces colorées la couleur réelle d'un point et l'intensité réelle d'un point. Cette scène de référence 9 peut être constituée d'un autre matériau que le papier.

### Image de référence

En se référant à la figure 12, on va maintenant définir la notion d'image de référence 11. On appelle image de référence 11, une image de la scène de référence 9 obtenue avec l'appareil de capture d'image 1.

### Image de synthèse, Classe d'images de synthèse

En se référant à la figure 12, on va maintenant définir la notion d'image de synthèse 207 et de classe d'images de synthèse 7. On appelle image de synthèse 207, une image mathématique 70 obtenue par projection mathématique 8 d'une scène de référence 9. On appelle classe d'images de synthèse 7, un ensemble d'images mathématiques 70 obtenues par projection mathématique 8 d'une ou plusieurs scènes de référence 9, ce pour un ou plusieurs jeux de caractéristiques utilisées 74. Dans le cas où il n'y a qu'une scène de référence 9 et qu'un jeu de caractéristiques utilisées 74, la classe d'images de synthèse 7 ne comprend qu'une image de synthèse 207.

### Image transformée

En se référant à la figure 12, on va maintenant définir la notion d'image transformée 13. On appelle image transformée 13, l'image corrigée obtenue par application d'un modèle de transformation paramétrable 12 à une image de référence 11.

### Image transformée proche d'une classe d'images de synthèse, Ecart.

On va maintenant décrire, en se référant à la figure 12, la notion d'image transformée 13 proche d'une classe d'images de synthèse 7 et la notion d'écart 14.

On définit la différence entre une image transformée 13 et une classe d'images de synthèse 7 comme la plus faible différence entre ladite image transformée 13 et l'une quelconque des images de synthèse 207 de ladite classe d'images de synthèse 7.

Ensuite, on va décrire, en se référant sur la figure 12, un quatrième algorithme permettant de choisir parmi les modèles de transformation paramétrables 12 celui permettant de transformer chaque image de référence 11 en une image transformée 13 proche de la classe d'images de synthèse 7 de la scène de référence 9 correspondant à ladite image de référence 11, et ce dans différents cas de scènes de référence 9 et caractéristiques utilisées 74.
- Dans le cas d'une scène de référence 9 donnée associée à un jeu de caractéristiques utilisées 74 données, on choisit la transformation paramétrable 12 (et ses paramètres) qui permet de transformer l'image de référence 11 en l'image transformée 13 qui présente la plus faible différence avec la classe d'images de synthèse 7. La classe d'image de synthèse 7 et l'image transformée 13 sont alors dites proches. On appelle écart 14 ladite différence.
- Dans le cas d'un groupe de scènes de référence données associées à des jeux de caractéristiques utilisées 74 donnés, on choisit la transformation paramétrable 12 (et ses paramètres) en fonction des différences entre l'image transformée 13 de chaque scène de référence 9 et la classe d'images de synthèse 7 de chaque scène de référence 9 considérée. On choisit la transformation paramétrable 12 (et ses paramètres) qui permet de transformer les images de référence 11 en des images transformées 13 telle que la somme desdites différences soit la plus faible. La fonction somme peut être remplacée par une autre fonction comme le produit. La classe d'image de synthèse 7 et les images transformées 13 sont alors dites proches. On appelle écart 14 une valeur obtenue à partir desdites différences, par exemple en en calculant la moyenne.
- Dans le cas où certaines caractéristiques utilisées 74 sont inconnues, il est possible de les déterminer à partir de la capture de plusieurs images de référence 11 d'au moins une scène de référence 9. Dans ce cas, on détermine simultanément les caractéristiques inconnues et la transformation paramétrable 12 (et ses paramètres) qui permet de transformer les images de référence 11 en des images transformées 13 telles que la somme desdites différences soit la plus faible, notamment par calcul itératif ou par résolution d'équations concernant la somme desdites différences et/ou leur produit et/ou toute autre combinaison appropriée desdites différences. La classe d'image de synthèse 7 et les images transformées 13 sont alors dites proches. Les caractéristiques inconnues peuvent par exemple être les positions et les orientations relatives de la surface du capteur 110 et de chaque scène de référence 9 considérée. On appelle écart 14 une valeur obtenue à partir desdites différences, par exemple en en calculant la moyenne. Ensuite, on va décrire, en se référant sur la figure 12, un premier algorithme de calcul permettant de procéder à un choix :

- dans un ensemble de modèles de transformation paramétrables,
- dans un ensemble de modèles de transformation paramétrables inverses,
- dans un ensemble d'images de synthèse,
- dans un ensemble de scènes de référence et dans un ensemble d'images transformées.

Ce choix porte sur :
- une scène de référence 9, et/ou
- une image transformée 13, et/ou
- un modèle de transformation paramétrable 12 permettant de transformer l'image de référence 11, obtenue en capturant la scène de référence 9 au moyen de l'appareil de capture d'image 1, en l'image transformée 13, et/ou
- un modèle de transformation paramétrable inverse 212 permettant de transformer l'image transformée 13 en l'image de référence 11, et/ou
- une image de synthèse 207 obtenue à partir de la scène de référence 9 et/ou obtenue à partir de l'image de référence 11.

Le choix retenu est celui qui minimise la différence entre l'image transformée 13 et l'image de synthèse 207. L'image de synthèse 207 et l'image transformée 13 sont alors dites proches. On appelle écart 14 ladite différence.

De préférence, selon l'invention le premier algorithme de calcul permet de choisir dans un ensemble de projections mathématiques, une projection mathématique 8 permettant de réaliser l'image de synthèse 207 à partir de la scène de référence 9.

Ensuite, on va décrire, en se référant sur la figure 12, un second algorithme de calcul comportant les étapes de :
- choisir au moins une scène de référence 9,
- capturer au moins une image de référence 11 de chaque scène de référence 9 au moyen de l'appareil de capture d'image 1.

Ce second algorithme comporte en outre l'étape de choisir dans un ensemble de modèles de transformation paramétrables et dans un ensemble d'images de synthèse :
- un modèle de transformation paramétrable 12 permettant de transformer l'image de référence 11, en une image transformée 13, et/ou
- une image de synthèse 207 obtenue à partir de la scène de référence 9 et/ou obtenue à partir de l'image de référence 11,

Le choix retenu est celui qui minimise la différence entre l'image transformée 13 et l'image de synthèse 207. L'image de synthèse 207 et l'image transformée 13 sont alors dites proches. On appelle écart 14 ladite différence.

De préférence, selon l'invention le second algorithme de calcul permet de choisir dans un ensemble de projections mathématiques, une projection mathématique 8 permettant de réaliser l'image de synthèse 207 à partir de la scène de référence 9.

### Meilleure transformation

On appelle meilleure transformation :
- la transformation qui, parmi les modèles de transformation paramétrables 12, permet de transformer chaque image de référence 11 en une image transformée 13 proche de la classe d'images de synthèse 7 de la scène de référence 9 correspondant à ladite image de référence 11, et/ou,
- le modèle de transformation paramétrable 12 parmi les modèles de transformation paramétrables, telle que l'image transformée 13 soit proche de l'image de synthèse 207, et/ou
- le modèle de transformation paramétrable inverse 212 parmi les modèles de transformation paramétrables inverses, telle que l'image transformée 13 soit proche de l'image de synthèse 207.

### Calibrage

On appelle calibrage un procédé qui permet d'obtenir des données relatives aux caractéristiques intrinsèques de l'appareil de capture d'image 1, ce pour une ou plusieurs configurations utilisées constituées chacune d'une optique 100 associée à un appareil de capture d'image 1.

Cas 1 : dans le cas où il n'y a qu'une configuration, ledit procédé comprend les étapes suivantes :
- l'étape de monter ladite optique 100 sur ledit appareil de capture d'image 1,
- l'étape de choisir une ou plusieurs scènes de référence 9,
- l'étape de choisir plusieurs caractéristiques utilisées 74,
- l'étape de capturer des images desdites scènes de référence 9 pour lesdites caractéristiques utilisées,
- l'étape de calculer la meilleure transformation pour chaque groupe de scènes de référence 9 correspondant aux mêmes caractéristiques utilisées 74.

Cas 2 : dans le cas où on considère toutes les configurations correspondant à un appareil de capture d'image 1 donné et à toutes les optiques 100 d'un même type, ledit procédé comprend les étapes suivantes :
- l'étape de choisir une ou plusieurs scènes de référence 9,
- l'étape de choisir plusieurs caractéristiques utilisées 74,
- l'étape de calculer des images 103 à partir des caractéristiques utilisées 74 et notamment des formules de l'optique 100 de la configuration utilisée et des valeurs de paramètres, ce par exemple à l'aide d'un logiciel de calcul d'optique par tracé de rayons,
- l'étape de calculer la meilleure transformation pour chaque groupe de scènes de référence 9 correspondant aux mêmes caractéristiques utilisées.

Cas 3 : dans le cas où on considère toutes les configurations correspondant à une optique 100 donnée et à tous les appareils de capture d'image 1 d'un même type, ledit procédé comprend les étapes suivantes :
- l'étape de monter ladite optique 100 sur un appareil de capture d'image 1 du type considéré,
- l'étape de choisir une ou plusieurs scènes de référence 9,
- l'étape de choisir plusieurs caractéristiques utilisées 74,
- l'étape de capturer des images desdites scènes de référence 9 pour lesdites caractéristiques utilisées,
- l'étape de calculer la meilleure transformation pour chaque groupe de scènes de référence 9 correspondant aux mêmes caractéristiques utilisées.

Le calibrage peut être effectué, de manière préférentielle, par le constructeur de l'appareil de capture d'image 1, ce pour chaque appareil et configuration dans le cas 1. Cette méthode est plus précise mais plus contraignante et bien adaptée dans le cas où l'optique 100 n'est pas interchangeable.

Le calibrage peut alternativement être effectué par le constructeur de l'appareil de capture d'image 1, ce pour chaque type et configuration d'appareil dans le cas 2. Cette méthode est moins précise mais plus simple.

Le calibrage peut alternativement être effectué par le constructeur de l'appareil de capture d'image 1 ou un tiers, ce pour chaque optique 100 et type d'appareil dans la cas 3. Cette méthode est un compromis permettant d'utiliser une optique 100 sur tous les appareils de capture d'image 1 d'un type sans refaire le calibrage pour chaque combinaison d'appareil de capture d'image 1 et d'optique 100. Dans le cas d'un appareil de capture d'image à optique non interchangeable, la méthode permet de ne faire le calibrage qu'une fois pour un type d'appareil donné.

Le calibrage peut alternativement être effectué par le revendeur ou installateur de l'appareil, ce pour chaque appareil de capture d'image 1 et configuration dans le cas 1.

Le calibrage peut alternativement être effectué par le revendeur ou installateur de l'appareil, ce pour chaque optique 100 et type d'appareil dans le cas 3.

Le calibrage peut alternativement être effectué par l'utilisateur de l'appareil, ce pour chaque appareil et configuration dans le cas 1.

Le calibrage peut alternativement être effectué par l'utilisateur de l'appareil, ce pour chaque optique 100 et type d'appareil dans le cas 3.

### Conception d'optique numérique

On appelle conception d'optique numérique, un procédé pour diminuer le coût de l'optique 100, consistant à :
- concevoir ou choisir dans un catalogue une optique 100 ayant des défauts, notamment de positionnement des points réels,
- diminuer le nombre de lentilles, et/ou
- simplifier la forme des lentilles, et/ou
- utiliser des matériaux, traitements ou procédés de fabrication moins coûteux.

Ledit procédé comprend les étapes suivantes :
- l'étape de choisir une différence (au sens ci-dessus défini) acceptable,
- l'étape de choisir une ou plusieurs scènes de référence 9,
- l'étape de choisir plusieurs caractéristiques utilisées 74.

Ledit procédé comprend en outre l'itération des étapes suivantes :
- l'étape de choisir une formule optique comprenant notamment la forme, le matériau et la disposition des lentilles,
- l'étape de calculer des images 103 à partir des caractéristiques utilisées 74 et notamment des formules de l'optique 100 de la configuration utilisée, en mettant en oeuvre, par exemple, un logiciel de calcul d'optique par tracé de rayons, ou en effectuant des mesures sur un prototype,
- l'étape de calculer la meilleure transformation pour chaque groupe de scènes de référence 9 correspondant aux mêmes caractéristiques utilisées 74,
- l'étape de vérifier si la différence est acceptable, jusqu'à ce que la différence soit acceptable.

### Informations formatées.

On appelle informations formatées 15 associées à l'image 103 ou informations formatées 15, tout ou partie des données suivantes :
- des données relatives aux caractéristiques techniques intrinsèques de l'appareil de capture d'image 1, notamment les caractéristiques de distorsion, et/ou
- des données relatives aux caractéristiques techniques de l'appareil de capture d'image 1 au moment de la capture d'image, notamment le temps de pose, et/ou
- des données relatives aux préférences dudit utilisateur, notamment la température de couleurs, et/ou
- des données relatives aux écarts 14.

### Base de données de caractéristiques

On appelle base de données de caractéristiques 22, une base de données comprenant, pour un ou plusieurs appareils de capture d'image 1 et pour une ou plusieurs images 103, des informations formatées 15.

Ladite base de donnée de caractéristiques 22 peut être stockée de manière centralisée ou répartie, et peut être notamment :
- intégrée dans l'appareil de capture d'image 1,
- intégrée dans l'optique 100,
- intégrée sur un dispositif de stockage amovible,
- intégrée dans un PC ou autre ordinateur relié aux autres éléments pendant la capture d'image,
- intégrée dans un PC ou autre ordinateur relié aux autres éléments après la capture d'image,
- intégrée dans un PC ou autre ordinateur capable de lire un support de stockage commun avec l'appareil de capture d'image 1,
- intégrée dans un serveur distant relié à un PC ou autre ordinateur lui même relié aux autre éléments de la capture d'image.

### Champs

On va maintenant définir la notion de champs 91 en se référant à la figure 8. Les informations formatées 15 associées à l'image 103 peuvent être enregistrées sous plusieurs formes et structurées en une ou plusieurs tables mais elles correspondent logiquement à tout ou partie des champs 91, comprenant :
(a) la distance focale,
(b) la profondeur de champ,
(c) les défauts géométriques.

Lesdits défauts géométriques comprennent les défauts de géométrie de l'image 103 caractérisés par les paramètres associés aux caractéristiques de la prise de vue 74 et une transformation paramétrable représentant les caractéristiques de l'appareil de capture d'image 1 au moment de la prise de vue. Lesdits paramètres et ladite transformation paramétrable permettent de calculer la position corrigée d'un point de l'image 103.

Lesdits défauts géométriques comprennent en outre le vignetage caractérisé par les paramètres associés aux caractéristiques de la prise de vue 74 et une transformation paramétrable représentant les caractéristiques de l'appareil de capture d'image 1 au moment de la prise de vue. Lesdits paramètres et ladite transformation paramétrable permettent de calculer l'intensité corrigée d'un point de l'image 103.

Lesdits défauts géométriques comprennent en outre la dominante colorée caractérisée par les paramètres associés aux caractéristiques de la prise de vue 74 et une transformation paramétrable représentant les caractéristiques de l'appareil de capture d'image 1 au moment de la prise de vue. Lesdits paramètres et ladite transformation paramétrable permettent de calculer la couleur corrigée d'un point de l'image 103.

Lesdits champs 91 comprennent en outre (d) le piqué de l'image 103.

Ledit piqué comprend le flou de résolution de l'image 103 caractérisé par les paramètres associés aux caractéristiques de la prise de vue 74 et une transformation paramétrable représentant les caractéristiques de l'appareil de capture d'image 1 au moment de la prise de vue. Lesdits paramètres et ladite transformation paramétrable permettent de calculer la forme corrigée d'un point de l'image 103. Le flou couvre en particulier le coma, l'aberration sphérique, l'astigmatisme, le regroupement en pixels 104, l'aberration chromatique, la profondeur de champ, la diffraction, les réflexions parasites, la courbure de champ.

Ledit piqué comprend en outre le flou de profondeur de champ, notamment les aberrations sphériques, le coma, l'astigmatisme. Ledit flou dépend de la distance des points de la scène 3 par rapport à l'appareil de capture d'image 1 et est caractérisé par les paramètres associés aux caractéristiques de la prise de vue 74 et une transformation paramétrable représentant les caractéristiques de l'appareil de capture d'image 1 au moment de la prise de vue. Lesdits paramètres et ladite transformation paramétrable permettent de calculer la forme corrigée d'un point de l'image 103.

Lesdits champs 91 comprennent en outre (e) des paramètres de la méthode de quantification. Lesdits paramètres dépendent de la géométrie et la physique du capteur 101, de l'architecture de l'électronique 102 et d'éventuels logiciels de traitement.

Lesdits paramètres comprennent une fonction représentant les variations de l'intensité d'un pixel 104 en fonction de la longueur d'onde et du flux lumineux provenant de ladite scène 3. Ladite fonction comprend notamment les informations de gamma.

Lesdits paramètres comprennent en outre :
- la géométrie dudit capteur 101, notamment la forme, la position relative et le nombre des éléments sensibles dudit capteur 101,
- une fonction représentant la distribution spatiale et temporelle du bruit de l'appareil de capture d'image 1,
- une valeur représentant le temps de pose de la capture d'image.

Lesdits champs 91 comprennent en outre (f) des paramètres des traitements numériques effectués par l'appareil de capture d'image 1, notamment le zoom numérique, la compression. Ces paramètres dépendent du logiciel de traitement de l'appareil de capture d'image 1 et des réglages de l'utilisateur.

Lesdits champs 91 comprennent en outre :
(g) des paramètres représentant les préférences de l'utilisateur, notamment en ce qui concerne le degré de flou, la résolution de l'image 103.
(h) les écarts 14.

### Calcul des informations formatées

Les informations formatées 15 peuvent être calculées et enregistrées dans la base de données 22 en plusieurs étapes.
a) Une étape à l'issue de la conception de l'appareil de capture d'image 1.
   Cette étape permet d'obtenir des caractéristiques techniques intrinsèques de l'appareil de capture d'image 1, et notamment :
   - la distribution spatiale et temporelle du bruit généré par l'électronique 102,
   - la loi de conversion flux lumineux en valeur de pixel,
   - la géométrie du capteur 101.
b) Une étape à l'issue du calibrage ou conception d'optique numérique.
   Cette étape permet d'obtenir d'autres caractéristiques techniques intrinsèques de l'appareil de capture d'image 1, et notamment, pour un certain nombre de valeurs de caractéristiques utilisées, la meilleure transformation associée et l'écart 14 associé.
c) Une étape de choix des préférences de l'utilisateur à l'aide de boutons, menus ou support amovible ou connexion à un autre dispositif.
d) Une étape de capture d'image.

Cette étape (d) permet d'obtenir des caractéristiques techniques de l'appareil de capture d'image 1 au moment de la capture d'image, et notamment le temps de pose, déterminé par les réglages manuels ou automatiques effectués.

L'étape (d) permet en outre d'obtenir la distance focale. La distance focale est calculée à partir :
- d'une mesure de la position du groupe de lentilles de focale variable de l'optique 100 de la configuration utilisée, ou
- d'une consigne donnée au moteur de positionnement, ou
- d'une donnée constructeur si la focale est fixe.

Ladite distance focale peut enfin être déterminée par l'analyse du contenu de l'image 103.

L'étape (d) permet en outre d'obtenir la profondeur de champ. La profondeur de champ est calculée à partir :
- d'une mesure de la position du groupe de lentilles de focalisation de l'optique 100 de la configuration utilisée, ou
- d'une consigne donnée au moteur de positionnement, ou
- d'une donnée constructeur si la profondeur de champ est fixe.

L'étape (d) permet en outre d'obtenir les défauts de géométrie et de piqué. Les défauts de géométrie et de piqué correspondent à une transformation calculée à l'aide d'une combinaison des transformations de la base de données de caractéristiques 22 obtenues à l'issue de l'étape (b) . Cette combinaison est choisie pour représenter les valeurs de paramètres correspondant aux caractéristiques utilisées 74, notamment la distance focale.

L'étape (d) permet en outre d'obtenir les paramètres de traitement numériques effectués par l'appareil de capture d'image 1. Ces paramètres sont déterminés par les réglages manuels ou automatiques effectués.

Le calcul des informations formatées 15 selon les étapes (a) à (d) peut être réalisé par :
- un dispositif ou logiciel intégré à l'appareil de capture d'image 1, et/ou
- un logiciel pilote dans un PC ou autre ordinateur, et/ou
- un logiciel dans un PC ou autre ordinateur, et/ou
- une combinaison des trois.

Les transformations ci-dessus mentionnées à l'étape (b) et à l'étape (d) peuvent être stockées sous la forme :
- d'une formule mathématique générale,
- d'une formule mathématique pour chaque point,
- d'une formule mathématique pour certains points caractéristiques.

Les formules mathématiques peuvent être décrites par :
- une liste de coefficients,
- une liste de coefficients et de coordonnées.

Ces différentes méthodes permettent de faire un compromis entre la taille de la mémoire disponible pour stocker les formules et la puissance de calcul disponible pour calculer les images corrigées 71.

En outre, afin de retrouver les données, des identifiants associés aux données sont enregistrés dans la base de données 22. Ces identifiants comprennent notamment :
- un identifiant du type et de la référence de l'appareil de capture d'image 1,
- un identifiant du type et de la référence de l'optique 100 si elle est amovible,
- un identifiant du type et de la référence de tout autre élément amovible ayant un lien avec les informations stockées,
- un identifiant de l'image 103,
- un identifiant de l'information formatée 15.

### Image complétée

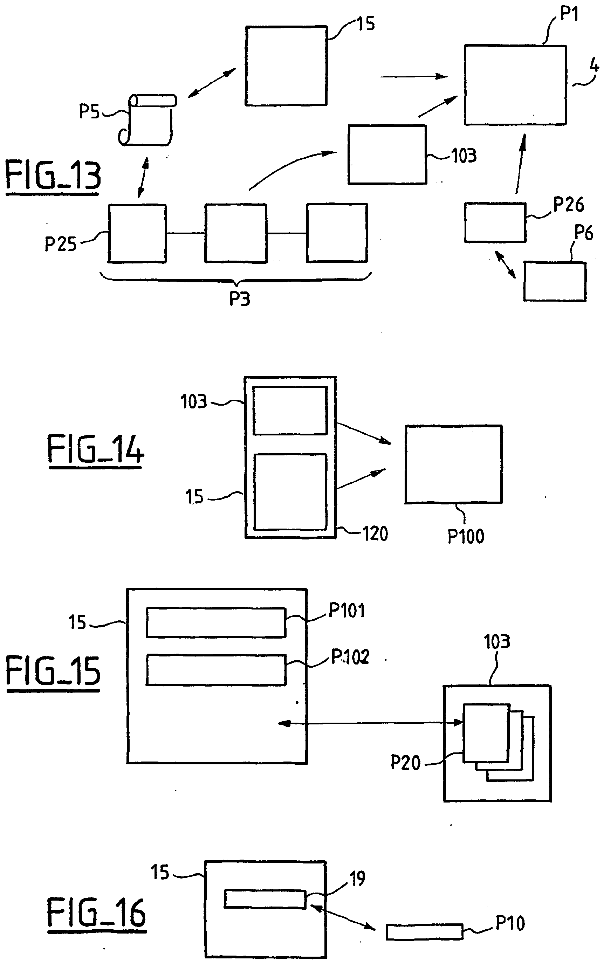

Comme décrit par la figure 11, on appelle image complétée 120, l'image 103 associée aux informations formatées 15. Cette image complétée 120 peut prendre la forme, de manière préférentielle, d'un fichier P100, comme décrit par la figure 14. L'image complétée 120 peut également être répartie dans plusieurs fichiers.

L'image complétée 120 peut être calculée par l'appareil de capture d'image 1. Elle peut être également calculée par un dispositif de calcul externe, par exemple un ordinateur.

### Logiciel de traitement d'image

On appelle logiciel de traitement d'image 4, un logiciel qui prend en entrée une ou plusieurs images complétées 120 et qui effectue des traitements sur ces images. Ces traitements peuvent comprendre, notamment :
- de calculer d'une image corrigée 71,
- d'effectuer des mesures dans le monde réel,
- de combiner plusieurs images,
- d'améliorer la fidélité des images par rapport au monde réel,
- d'améliorer la qualité subjective des images,
- de détecter des objets ou personnes 107 dans une scène 3,
- d'ajouter des objets ou personnes 107 dans une scène 3,
- de remplacer ou modifier des objets ou personnes 107 dans une scène 3,
- de retirer les ombres d'une scène 3,
- d'ajouter des ombres dans une scène 3,
- de rechercher des objets dans une base d'images.

Ledit logiciel de traitement d'image peut être :
- intégré à l'appareil de capture d'image 1,
- exécuté sur des moyens de calcul 17 reliés à l'appareil de capture d'image 1 par des moyens de transmission 18.

### Optique numérique

On appelle optique numérique, la combinaison d'un appareil de capture d'image 1, d'une base de données de caractéristiques 22 et d'un moyen de calcul 17 permettant :
- la capture d'image d'une image 103,
- le calcul de l'image complétée,
- le calcul de l'image corrigée 71.

De manière préférentielle, l'utilisateur obtient directement l'image corrigée 71. S'il le souhaite, l'utilisateur peut demander la suppression de la correction automatique.

La base de données de caractéristiques 22 peut être :
- intégrée dans l'appareil de capture d'image 1,
- intégrée dans un PC ou autre ordinateur relié aux autres éléments pendant la capture d'image,
- intégrée dans un PC ou autre ordinateur relié aux autres éléments après la capture d'image,
- intégrée dans un PC ou autre ordinateur capable de lire un support de stockage commun avec l'appareil de capture d'image 1,
- intégrée dans un serveur distant relié à un PC ou autre ordinateur lui même relié aux autre éléments de la capture d'image.

Le moyen de calcul 17 peut être :
- intégré sur un composant avec le capteur 101,
- intégré sur un composant avec une partie de l'électronique 102,
- intégré dans l'appareil de capture d'image 1,
- intégré dans un PC ou autre ordinateur relié aux autres éléments pendant la capture d'image,
- intégré dans un PC ou autre ordinateur relié aux autres éléments après la capture d'image,
- intégré dans un PC ou autre ordinateur capable de lire un support de stockage commun avec l'appareil de capture d'image 1,
- intégré dans un serveur distant relié à un PC ou autre ordinateur lui même relié aux autres éléments de la capture d'image.

### Traitement de la chaîne complète

Dans les précédents paragraphes, on a essentiellement précisé les concepts et la description du procédé et du système selon l'invention pour fournir à des logiciels de traitement d'images 4 des informations formatées 15 liées aux caractéristiques des appareils de capture d'image 1.

Dans les paragraphes qui suivent, on va élargir la définition des concepts et compléter la description du procédé et du système selon l'invention pour fournir à des logiciels de traitement d'images 4 des informations formatées 15 liées aux caractéristiques des moyens de restitution d'image 19. On aura ainsi exposé le traitement d'une chaîne complète.

Le traitement de la chaîne complète permet :
- d'améliorer la qualité de l'image 103 d'un bout à l'autre de la chaîne, pour obtenir une image restituée 191 corrigeant les défauts de l'appareil de capture d'image 1 et du moyen de restitution d'image 19, et/ou
- d'utiliser des optiques de moindre qualité et de moindre coût dans un projecteur vidéo en combinaison avec un logiciel d'amélioration de la qualité des images.

### Définitions liées aux moyens de restitution d'image.

En s'appuyant sur les figures 2, 17 et 6, on va maintenant décrire la prise en compte dans les informations formatées 15 des caractéristiques d'un moyen de restitution d'images 19 tel qu'une imprimante, un écran de visualisation ou un projecteur.

Les compléments ou modifications à apporter aux définitions dans le cas d'un moyen de restitution d'image 19 peuvent être extrapolées mutatis mutandis par un homme de métier à partir des définitions fournies dans le cas d'un appareil de capture d'image 1. Toutefois, afin d'illustrer cette méthode, on va maintenant décrire en se référant notamment à la figure 6 et à la figure 17 les principaux compléments ou modifications.

On désigne par caractéristiques de restitution utilisées 95 les caractéristiques intrinsèques des moyens de restitution d'image 19, les caractéristiques du moyen de restitution d'image 19 au moment de la restitution d'image, et les préférences de l'utilisateur au moment de la restitution des images. Notamment dans le cas d'un projecteur, les caractéristiques de restitution utilisées 95 comprennent la forme et la position de l'écran utilisé.

On désigne par modèle de transformation paramétrable de restitution 97 (ou de manière condensée, transformation paramétrable de restitution 97), une transformation mathématique similaire au modèle de transformation paramétrable 12. On désigne par modèle de transformation paramétrable de restitution inverse 297 (ou de manière condensée, transformation paramétrable de restitution inverse 297), une transformation mathématique similaire au modèle de transformation paramétrable inverse 212.

On désigne par image corrigée de restitution 94 l'image obtenue par application de la transformation paramétrable de restitution 97 à l'image 103.

On désigne par projection mathématique de restitution 96 une projection mathématique qui associe à une image corrigée de restitution 94, une image mathématique de restitution 92 sur la surface mathématique de restitution géométriquement associée à la surface du support de restitution 190. Les points mathématiques de restitution de la surface mathématique de restitution ont une forme, position, couleur et intensité calculées à partir de l'image corrigée de restitution 94.

On désigne par projection réelle de restitution 90 une projection associant à une image 103 une image restituée 191. Les valeurs de pixels de l'image 103 sont converties par l'électronique des moyens de restitution 19 en un signal qui pilote le modulateur des moyens de restitution 19. On obtient des points réels de restitution sur le support de restitution 190. Lesdits points réels de restitution sont dotés d'une forme, couleur, intensité et position. Le phénomène de regroupement en pixels 104 précédemment décrit dans le cas d'un appareil de capture d'image 1 ne se produit pas dans le cas d'un moyen de restitution d'image. En revanche, un phénomène inverse se produit qui fait notamment apparaître des droites comme des marches d'escalier.

On désigne par différence de restitution 93 la différence entre l'image restituée 191 et l'image mathématique de restitution 92. Cette différence de restitution 93 est obtenue mutatis mutandis comme la différence 73.

On désigne par référence de restitution 209 une image 103 dont les valeurs des pixels 104 sont connues. On désigne par référence restituée 211, l'image restituée 191 obtenue par la projection mathématique de restitution 90 de la référence de restitution 209. On désigne par image de référence corrigée de restitution 213, l'image corrigée de restitution 94 correspondant à la référence de restitution 209, pour le modèle de transformation paramétrable de restitution 97 et/ou pour le modèle de transformation paramétrable de restitution inverse 297. On désigne par image de synthèse de restitution 307 l'image mathématique de restitution 92 obtenue par la projection mathématique de restitution 96 de l'image de référence corrigée de restitution 213.

On désigne par meilleure transformation de restitution :
- pour une référence de restitution 209 et des caractéristiques utilisées de restitution 95, celle qui permet de transformer l'image 103 en une image corrigée de restitution 94 telle que sa projection mathématique de restitution 92, présente la plus faible différence de restitution 93 avec l'image restituée 191, et/ou
- la transformation paramétrable de restitution 97 parmi les modèles de transformation paramétrables de restitution , telle que référence restituée 211 présente la plus faible différence de restitution 93 avec l'image de synthèse de restitution 307, et/ou
- la transformation paramétrable de restitution inverse 297 parmi les modèles de transformation paramétrables inverses, telle que référence restituée 211 présente la plus faible différence de restitution 93 avec l'image de synthèse de restitution 307.

La référence restituée 211 et l'image de synthèse de restitution 307 sont alors dites proches.

Les procédés de calibrage de restitution et de conception d'optique numérique de restitution sont comparables aux procédés de calibrage et de conception d'optique numérique dans le cas d'un appareil de capture d'image 1. Certaines étapes comportent cependant des différences, et notamment les étapes suivantes :
- l'étape de choisir une référence de restitution 209;
- l'étape d'effectuer la restitution de ladite référence de restitution ;
- l'étape de calculer la meilleure transformation de restitution.

De préférence, selon l'invention, le procédé comprend un sixième algorithme de calcul des informations formatées 15. Ce sixième algorithme permet d'effectuer un choix :
- dans un ensemble de modèles de transformation paramétrables de restitution,
- dans un ensemble de modèles de transformation paramétrables de restitution inverses,
- dans un ensemble de projections mathématiques de restitution,
- dans un ensemble de références de restitution et dans un ensemble d'images de référence corrigées de restitution.

Le choix effectué par ce sixième algorithme porte sur :
- une référence de restitution 209, et/ou
- une image de référence corrigée de restitution 213, et/ou
- un modèle de transformation paramétrable de restitution 97 permettant de transformer la référence de restitution 209 en l'image de référence corrigée de restitution 213, et/ou
- un modèle de transformation paramétrable de restitution inverse 297 permettant de transformer l'image de référence corrigée de restitution 213 en la référence de restitution 209, et/ou
- une projection mathématique de restitution 96 permettant de réaliser une image de synthèse de restitution 307 à partir de l'image de référence corrigée de restitution 213.

Le choix est effectué par ce sixième algorithme de telle sorte que l'image de synthèse de restitution 307 soit proche de la référence restituée 211 obtenue par restitution de la référence de restitution 209, au moyen du moyen de restitution d'images 19. la référence restituée 211 présente un écart de restitution 214 avec l'image de synthèse de restitution 307.

Selon une variante de réalisation de l'invention, le procédé comprend un septième algorithme de calcul des informations formatées. Ce septième algorithme comporte les étapes de :
- choisir au moins une référence de restitution 209,
- restituer la référence de restitution 209, au moyen du moyen de restitution d'images 19, en une référence restituée 211.

Ce septième algorithme permet également de choisir dans un ensemble de modèles de transformation paramétrables de restitution et dans un ensemble de projections mathématiques de restitution :
- un modèle de transformation paramétrable de restitution 97 permettant de transformer la référence de restitution 209 en une image de référence corrigée de restitution 213, et
- une projection mathématique de restitution 96 permettant de réaliser une image de synthèse de restitution 307 à partir de l'image de référence corrigée de restitution 213.

Le choix est effectué par le septième algorithme de telle sorte que l'image de synthèse de restitution 307 soit proche de la référence restituée 211. la référence restituée présente un écart de restitution 214 avec l'image de synthèse de restitution 307. le modèle de transformation paramétrable de restitution inverse 297 permet de transformer l'image de référence corrigée de restitution 213 en la référence de restitution 209.

Selon une autre variante de réalisation l'invention, le procédé comprend un huitième algorithme de calcul des informations formatées. Ce huitième algorithme comporte l'étape de choisir une image de référence corrigée de restitution 213. Ce huitième algorithme comporte en outre l'étape d'effectuer un choix dans un ensemble de modèles de transformation paramétrables de restitution, dans un ensemble de projections mathématiques de restitution, dans un ensemble de références de restitution. Ce choix porte sur :
- une référence de restitution 209, et/ou
- un modèle de transformation paramétrable de restitution 97 permettant de transformer la référence de restitution 209 en l'image de référence corrigée de restitution 213, et/ou
- un modèle de transformation paramétrable de restitution inverse 297 permettant de transformer l'image de référence corrigée de restitution 213 en la référence de restitution 209, et/ou
- une projection mathématique de restitution 96 permettant de réaliser une image de synthèse de restitution 307 à partir de l'image de référence corrigée de restitution 213.

Le huitième algorithme effectue ce choix de telle sorte que l'image de synthèse de restitution 307 soit proche de la référence restituée 211 obtenue par restitution de la référence de restitution 209, au moyen du moyen de restitution d'images 19. la référence restituée 211 présente un écart de restitution avec l'image de synthèse de restitution 307.

De préférence, selon l'invention, le procédé comprend un neuvième algorithme de calcul des écarts de restitution 214. Ce neuvième algorithme comporte les étapes de :
- calculer les écarts de restitution 214 entre la référence restituée 211 et l'image de synthèse de restitution 307,
- associer les écarts de restitution 214 aux informations formatées 15.

Il résulte de la combinaison des traits techniques qu'il est possible de vérifier automatiquement, par exemple pendant la fabrication de l'appareil que le procédé a produit des informations formatées dans des tolérances acceptables.

Les informations formatées 15 liées à un appareil de capture d'image 1 et celles liées à un moyen de restitution d'image 19 peuvent être mises bout à bout pour une même image.

Il est également possible de combiner les informations formatées 15 relatives à chacun des appareils, pour obtenir les informations formatées 15 relative à la chaîne d'appareils, par exemple par addition d'un champ de vecteur, dans le cas de la distorsion géométrique.

On a précédemment décrit la notion de champ dans le cas d'un appareil de capture d'image 1. Cette notion s'applique également mutatis mutandis dans le cas de moyens de restitution d'image 19. Toutefois, aux paramètres de la méthode de quantification on substitue les paramètres de la méthode de reconstitution du signal, à savoir : la géométrie du support de restitution 190 et sa position, une fonction représentant la distribution spatiale et temporelle du bruit du moyen de restitution d'images 19.

Dans une variante de réalisation, selon l'invention, le moyen de restitution 19 est associé à un appareil de capture d'image 1 pour restituer, sous une forme numérique, la référence restituée 211 à partir de la référence de restitution 209. le procédé est tel que pour produire les informations formatées 15 liées aux défauts P5 du moyen de restitution 19, on utilise les informations formatées 15 relatives à l'appareil de capture d'image 1 associé au moyen de restitution, par exemple pour corriger les défauts de l'appareil de capture d'image 1 de sorte que la référence restituée 211 ne comporte que les défauts P5 du moyen de restitution 19.

### Généralisation des concepts

Les traits techniques composant l'invention et figurant dans les revendications ont été définis, décrits, illustrés en se référant essentiellement à des appareils de capture d'image de type numérique, c'est-à-dire produisant des images numériques. On conçoit aisément que les mêmes traits techniques s'appliquent dans le cas d'appareils de capture d'image qui seraient la combinaison d'un appareil argentique (un appareil photographique ou cinématographique utilisant des pellicules sensibles argentiques, négatives ou inversibles) et d'un scanner produisant une image numérique à partir des pellicules sensibles développées. Certes, il y a lieu dans ce cas d'adapter au moins certaines des définitions utilisées. Ces adaptations sont à la portée de l'homme de métier. Afin de mettre en évidence le caractère évident de telles adaptations, on se bornera à mentionner que les notions de pixel et de valeur de pixel illustrées en se référant à la figure 3 doivent, dans le cas de la combinaison d'un appareil argentique et d'un scanner, s'appliquer à une zone élémentaire de la surface de la pellicule après que celle-ci ait été numérisée au moyen du scanner. De telles transpositions des définitions vont de soi et peuvent être étendues à la notion de configuration utilisée. A la liste des sous-ensembles amovibles de l'appareil de capture d'image 1 composant la configuration utilisée, on peut par exemple ajouter le type de pellicule photographique effectivement utilisée dans l'appareil argentique.

D'autres caractéristiques et avantages de l'invention apparaîtront à la lecture des définitions et exemples indicatifs et non limitatifs, ci-après explicités en se référant aux figures 1 à 17.

### Appareil

En se référant notamment aux figures 2, 3 et 13, on va décrire la notion d'appareil P25. Au sens de l'invention, un appareil P25 peut être notamment:
- un appareil de capture d'image 1, comme par exemple un appareil photo jetable, un appareil photo numérique, un appareil reflex, un scanner, un fax, un endoscope, un caméscope, une caméra de surveillance, un jouet, une caméra intégrée ou reliée à un téléphone, à un assistant personnel ou à un ordinateur, une caméra thermique, un appareil d'échographie,
- un appareil de restitution d'image 19 ou moyen de restitution d'image 19 comme par exemple un écran, un projecteur, un téléviseur, des lunettes de réalité virtuelle ou une imprimante,
- un appareil y compris son installation, par exemple un projecteur, un écran et la façon dont ils sont positionnés,
- le positionnement d'un observateur par rapport à un appareil de restitution, qui introduit notamment des erreurs de parallaxe,
- un être humain ou observateur ayant des défauts de vision, par exemple l'astigmatisme,
- un appareil auquel on veut ressembler, pour produire des images ayant par exemple un aspect similaire à celles produites par un appareil de marque Leica,
- un dispositif de traitement d'images, par exemple un logiciel de zoom qui a comme effet de bord d'ajouter du flou,
- un appareil virtuel équivalent à plusieurs appareil P25,

Un appareil P25 plus complexe comme un scanner/fax/imprimante, un Minilab d'impression photo, un appareil de vidéo-conférence peut être considéré comme un appareil P25 ou plusieurs appareils P25.

### Chaîne d'appareils

En se référant notamment à la figure 13, on va maintenant décrire la notion de chaîne d'appareils P3. On appelle chaîne d'appareils P3 un ensemble d'appareils P25. La notion de chaîne d'appareils P3 peut en outre inclure une notion d'ordre.

Les exemples suivants constituent des chaînes d'appareils P3:
- un seul appareil P25,
- un appareil de capture d'image et un appareil de restitution d'image 19,
- un appareil photo, un scanner, une imprimante par exemple dans un Minilab de tirage photo,
- un appareil photo numérique, une imprimante par exemple dans un Minilab de tirage photo,
- un scanner, un écran ou une imprimante, par exemple dans un ordinateur,
- un écran ou projecteur et l'oeil d'un être humain,
- un appareil et un autre appareil auquel on veut ressembler,
- un appareil photo et un scanner,
- un appareil de capture d'image, un logiciel de traitement d'images,
- un logiciel de traitement d'images, un appareil de restitution d'image 19,
- une combinaison des exemples précédents,
- un autre ensemble d'appareils P25.

### Défaut

En se référant notamment à la figure 13, on va maintenant décrire la notion de défaut P5. On appelle défaut P5 de l'appareil P25, un défaut lié aux caractéristiques de l'optique et/ou du capteur et/ou de l'électronique et/ou du logiciel intégré à un appareil P25 ; des exemples de défauts P5 sont par exemple les défauts de géométrie, les défauts de piqué, les défauts de colorimétrie, les défauts géométriques de distorsion, les défauts géométriques d'aberration chromatique, les défauts géométriques de vignetage, les défauts de contraste, les défauts de colorimétrie, notamment le rendu des couleurs et la dominante colorée, les défauts d'uniformité du flash, le bruit du capteur, le grain, les défauts d'astigmatisme, les défauts d'aberration sphérique.

### Image

En se référant notamment aux figures 2, 5, 6 et 13, on va maintenant décrire la notion d'image 103. On appelle image 103 une image numérique capturée ou modifiée ou restituée par un appareil P25. L'image 103 peut provenir d'un appareil P25 de la chaîne d'appareils P3. L'image 103 peut être destinée à un appareil P25 de la chaîne d'appareils P3. De manière plus générale l'image 103 peut provenir et/ou être destinée à la chaîne d'appareils P3. Dans le cas d'images animées, par exemple vidéo, constituées d'une séquence dans le temps d'images fixes, on appelle image 103 : une image fixe de la séquence d'images.

### Informations formatées

En .se référant notamment aux figures 7, 8 et 10, 13, on va maintenant décrire la notion d'informations formatées 15. On appelle informations formatées 15 des données liées aux défauts P5 ou caractérisant les défauts P5 d'un ou plusieurs appareils P25 de la chaîne d'appareils P3 et permettant à des moyens de traitement d'images P1 de modifier la qualité des images 103 en tenant compte des défauts P5 de l'appareil P25.

Pour produire les informations formatées 15, on peut utiliser divers procédés et systèmes basés sur des mesures, et/ou des simulations, et/ou des calibrage, comme par exemple le procédé de calibrage décrit précédemment.

Pour diffuser les informations formatées 15, on peut utiliser un fichier P100 contenant l'image complétée 120, par exemple un appareil de capture d'image 1 comme un appareil photo numérique peut produire des fichiers contenant l'image 103, les informations formatées 15 recopiées depuis une mémoire interne à l'appareil et des données au format Exif contenant les réglages utilisés.

Pour produire les informations formatées 15, on peut par exemple utiliser le procédé et le système décrits dans la demande de brevet international déposée le même jour que la présente demande au nom de la société Vision IQ et sous le titre : "Procédé et système pour produire des informations formatées liées aux distorsions géométriques." Dans cette demande, il est décrit un procédé pour produire des informations formatées 15 liées aux appareils P25 d'une chaîne d'appareils P3. la chaîne d'appareils P3 comprend notamment au moins un appareil de capture d'image et/ou au moins un appareil de restitution d'image. le procédé comprend l'étape de produire des informations formatées 15 liées aux distorsions géométriques d'au moins un appareil P25 de la chaîne.

De préférence, l'appareil P25 permettant de capturer ou restituer une image sur un support. l'appareil P25 comporte au moins une caractéristique fixe et/ou une caractéristique variable selon l'image. la caractéristique fixe et/ou caractéristique variable est susceptible d'être associée à une ou plusieurs valeurs de caractéristiques, notamment la focale et/ou la mise au point et leurs valeurs de caractéristiques associées. le procédé comprend l'étape de produire des informations formatées mesurées liées aux distorsions géométriques de l'appareil à partir d'un champ mesuré. les informations formatées 15 peuvent comprendre les informations formatées mesurées.

Pour produire les informations formatées 15, on peut par exemple utiliser le procédé et le système décrits dans la demande de brevet international déposée le même jour que la présente demande au nom de la société Vision IQ et sous le titre : "Procédé et système pour produire des informations formatées liées aux défauts d'au moins un appareil d'une chaîne, notamment au flou." Dans cette demande, il est décrit un procédé pour produire des informations formatées 15 liées aux appareils P25 d'une chaîne d'appareils P3. la chaîne d'appareils P3 comprend notamment au moins un appareil de capture d'image et/ou au moins un appareil de restitution d'image. le procédé comprend l'étape de produire des informations formatées 15 liées aux défauts P5 d'au moins un appareil P25 de la chaîne. De préférence, l'appareil P25 permettant de capturer ou restituer une image comporte au moins une caractéristique fixe et/ou une caractéristique variable selon l'image (I). les caractéristiques fixe et/ou variables sont susceptibles d'être associées à une ou plusieurs valeurs de caractéristiques, notamment la focale et/ou la mise au point et leurs valeurs de caractéristiques associées. le procédé comprend l'étape de produire des informations formatées mesurées liées aux défauts P5 de l'appareil P25 à partir d'un champ mesuré. les informations formatées 15 peuvent comprendre les informations formatées mesurées.

Pour produire les informations formatées 15, on peut par exemple utiliser le procédé et le système décrits dans la demande de brevet international déposée le même jour que la présente demande au nom de la société Vision IQ et sous le titre : "Procédé et système pour réduire la fréquence des mises à jour de moyens de traitement d'images." Dans cette demande, il est décrit un procédé pour réduire la fréquence des mises à jour de moyens de traitement d'images P1, notamment un logiciel et/ou un composant. les moyens de traitement d'images permettant de modifier la qualité des images numériques provenant ou destinées à une chaîne d'appareils P3. la chaîne d'appareil P3 comporte au moins un appareil de capture d'image et/ou au moins un appareil de restitution d'image. les moyens de traitement d'image P1 mettent en oeuvre des informations formatées 15 liées aux défauts P5 d'au moins un appareil de la chaîne d'appareils P5. les informations formatées 15 dépendent d'au moins une variable. les informations formatées 15 permettant d'établir une correspondance entre une partie des variables et des identifiants. les identifiants permettent de déterminer la valeur de la variable correspondante à l'identifiant en tenant compte de l'identifiant et de l'image. Il résulte de la combinaison des traits techniques qu'il est possible de déterminer la valeur d'une variable, notamment dans le cas où la signification physique et/ou le contenu de la variable ne sont connus que postérieurement à la diffusion des moyens de traitement d'image P1. Il résulte également de la combinaison des traits techniques que le temps entre deux mises à jour du logiciel de correction peut être espacé. Il résulte également de la combinaison des traits techniques que les divers acteurs économiques qui produisent des appareils et/ou des moyens de traitement d'image peuvent mettre à jour leurs produits indépendamment des autres acteurs économiques, même si ces derniers changent radicalement les caractéristiques de leurs produit ou ne peuvent forcer leur client à mettre à jour leur produits. Il résulte également de la combinaison des traits techniques qu'une nouvelle fonctionnalité peut être déployée progressivement en commençant par un nombre limité d'acteurs économiques et d'utilisateurs pionniers.

Pour rechercher les informations formatées 15, on peut par exemple utiliser le procédé et le système décrits dans la demande de brevet international déposée le même jour que la présente demande au nom de la société Vision IQ et sous le titre : "Procédé et système pour modifier la qualité d'au moins une image provenant ou destinée à une chaîne d'appareils." Dans cette demande, il est décrit un procédé pour modifier la qualité d'au moins une image 103 provenant ou destinée à une chaîne d'appareils déterminée. la chaîne d'appareils déterminée comprend au moins un appareil de capture d'image et/ou au moins un appareil de restitution d'image. les appareils de capture d'image et/ou les appareils de restitution d'image, progressivement mis sur le marché par des acteurs économiques distincts, appartiennent à un ensemble indéterminé d'appareils. les appareils P25 de l'ensemble d'appareils présentent des défauts P5 qui peuvent être caractérisés par des informations formatées 15. le procédé comprend, pour l'image concernée, les étapes suivantes :
- l'étape de répertorier des sources d'informations formatées relatives aux appareils P25 de l'ensemble d'appareils,
- l'étape de rechercher de manière automatique, parmi les informations formatées 15 ainsi répertoriées, des informations formatées spécifiques relatives à la chaîne d'appareils déterminée,
- l'étape de modifier de manière automatique l'image au moyen de logiciels de traitement d'images et/ou de composants de traitement d'images en tenant compte des informations formatées spécifiques ainsi obtenues.

Pour exploiter les informations formatées 15, on peut par exemple utiliser le procédé et le système décrits dans la demande de brevet international déposée le même jour que la présente demande au nom de la société Vision IQ et sous le titre : "Procédé et système pour calculer une image transformée à partir d'une image numérique et d'informations formatées relatives à une transformation géométrique." Dans cette demande, il est décrit un procédé pour calculer une image transformée à partir d'une image numérique et d'informations formatées 15 relatives à une transformation géométrique, notamment des informations formatées 15 relatives aux distorsions et/ou aberrations chromatiques d'une chaîne d'appareils P3. le procédé comprend l'étape de calculer l'image transformée à partir d'une approximation de la transformation géométrique. Il en résulte que le calcul est économe en ressource mémoire, en bande passante mémoire, en puissance de calcul et donc en consommation électrique. Il en résulte également que l'image transformée ne présente pas de défaut visible ou gênant pour son utilisation ultérieure.

Pour exploiter les informations formatées 15, on peut par exemple utiliser le procédé et le système décrits dans la demande de brevet international déposée le même jour que la présente demande au nom de la société Vision IQ et sous le titre : "Procédé et système pour modifier une image numérique en prenant en compte son bruit." Dans cette demande, il est décrit un procédé pour calculer une image transformée à partir d'une image numérique et d'informations formatées 15 relatives à des défauts P5 d'une chaîne d'appareils P3. la chaîne d'appareils P3 comporte des appareils de capture d'image et/ou des appareils de restitution d'image. la chaîne d'appareils P3 comporte au moins un appareil P25. le procédé comprend l'étape de déterminer automatiquement des données caractéristiques à partir des informations formatées 15 et/ou de l'image numérique. Il résulte de la combinaison des traits techniques que l'image transformée ne présente pas de défaut visible ou gênant, notamment de défauts liés au bruit, pour son utilisation ultérieure.

### Moyens de traitement d'images

En se référant notamment aux figures 7 et 13, on va maintenant décrire la notion de moyen de traitement d'images P1. Au sens de la présente invention, on appelle moyen de traitement d'images P1, par exemple un logiciel de traitement d'image 4 et/ou un composant et/ou un équipement et/ou un système permettant de modifier la qualité de l'image 103 en mettant en oeuvre des informations formatées 15, afin de produire une image modifiée, par exemple une image corrigée 71 ou une image corrigée de restitution 97. L'image modifiée peut être destinée à un second appareil de la chaîne d'appareils P3 distinct ou non de l'appareil P25, par exemple l'appareil suivant dans la chaîne d'appareils P3.

La modification de la qualité des images par les moyens de traitement d'images P1 peut consister par exemple à :
- supprimer ou atténuer les défauts P5 d'un ou plusieurs appareils P25 de la chaîne d'appareils P3 dans l'image 103, et/ou
- modifier l'image 103 pour ajouter au moins un défaut P5 d'un ou plusieurs appareils P25 de la chaîne d'appareils P3 de sorte que l'image modifiée ressemble à une image capturée par le ou les appareils P25, et/ou
- modifier l'image 103 pour ajouter au moins un défaut P5 d'un ou plusieurs appareils P25 de la chaîne d'appareils P3 de sorte que la restitution de l'image modifiée ressemble à une image restituée par le ou les appareils P25, et/ou
- modifier l'image 103 en tenant compte des informations formatées 15 liées à des défauts P5 de vision de l'oeil d'un être humain P25 de la chaîne d'appareils P3 de sorte que la restitution de l'image modifiée soit perçue par l'oeil de l'être humain comme corrigée de tout ou partie des défauts P5.

On appelle algorithme de correction, le procédé mis en oeuvre par un moyen de traitement d'images P1 pour modifier la qualité des images selon le défaut P5.

Les moyens de traitement d'images P1 peuvent prendre diverses formes selon l'application.

Les moyens de traitement d'images P1 peuvent être intégrés, en tout ou partie, à l'appareil P25, comme dans les exemples suivants :
- un appareil de capture d'image qui produit des images modifiées, par exemple un appareil photo numérique qui intègre des moyens de traitement d'images P1,
- un appareil de restitution d'image qui affiche ou imprime des images modifiées, par exemple un projecteur vidéo incluant des moyens de traitement d'images P1,
- un appareil mixte qui corrige les défauts de ses éléments, par exemple un scanner / imprimante / télécopieur incluant des moyens de traitement d'images P1,
- un appareil de capture d'image professionnel qui produit des images modifiées, par exemple un endoscope incluant des moyens de traitement d'images P1,

Dans le cas où les moyens de traitement d'images P1 sont intégrés à l'appareil P25, en pratique l'appareil P25 corrige ses propres défauts P5, et les appareils P25 de la chaîne d'appareils P3 peuvent être déterminés par construction, par exemple dans un télécopieur : un scanner et une imprimante ; l'utilisateur peut toutefois n'utiliser qu'une partie des appareils P25 de la chaîne d'appareils P3, par exemple si le télécopieur peut aussi être utilisé comme une imprimante seule.

Les moyens de traitement d'images P1 peuvent être intégrés, en tout ou partie, à un ordinateur par exemple de la façon suivante :
- dans un système d'exploitation, par exemple de marque Windows ou Mac OS, pour modifier automatiquement la qualité des images provenant ou destinées à plusieurs appareils P25 variant selon l'image 103 et/ou dans le temps, par exemple des scanners, appareils photos, imprimantes ; la correction automatique peut avoir lieu par exemple lors de l'entrée de l'image 103 dans le système, ou lors d'une demande d'impression par l'utilisateur,
- dans une application de traitement d'images, par exemple Photoshop™, pour modifier automatiquement la qualité d'images provenant ou destinées à plusieurs appareils P25 variant selon l'image et/ou dans le temps, par exemple des scanners, appareils photos, imprimantes ; la correction automatique peut avoir lieu par exemple lorsque l'utilisateur active une commande de filtre dans Photoshop™,
- dans un appareil de tirage photo (par exemple Photofinishing ou Minilab en anglais), pour modifier automatiquement la qualité d'images provenant de plusieurs appareils photo variant selon l'image et/ou dans le temps, par exemple des jetables, appareils photos numériques, disques compacts ; la correction automatique peut prendre en compte les appareils photo ainsi que le scanner et l'imprimante intégrés et se faire au moment ou les travaux d'impression sont lancés,
- sur un serveur, par exemple sur Internet, pour modifier automatiquement la qualité d'images provenant de plusieurs appareils photo variant selon l'image et/ou dans le temps, par exemple des jetables, appareils photos numériques; la correction automatique peut prendre en compte les appareils photo ainsi que par exemple une imprimante et se faire au moment ou les images 103 sont enregistrées sur le serveur, ou au moment où des travaux d'impression sont lancés.

Dans le cas où les moyens de traitement d'images P1 sont intégrés à un ordinateur, en pratique les moyens de traitement d'images P1 sont compatible de multiples appareils P25, et au moins un appareil P25 de la chaîne d'appareils P3 peut varier d'une image 103 à l'autre.

Pour fournir, selon un format standard, les informations formatées 15 aux moyens de traitement d'image P1, on peut par associer les informations formatées 15 à l'image 103, par exemple :
- dans un fichier P100,
- en utilisant des identifiant des appareils P25 de la chaîne d'appareils P3, par exemple des données au format Exif dans le fichier P100, pour retrouver les informations formatées 15 dans la base de données de caractéristiques 22.

### Caractéristique variable

On va maintenant décrire en s'appuyant sur la figure 13, la notion de caractéristique variable P6. Selon l'invention, on appelle caractéristique variable P6 un facteur mesurable et variable d'une image 103 à l'autre capturée, modifiée ou restituée par un même appareil P25, et ayant une influence sur le défaut P5, de l'image capturée, modifiée ou restituée par l'appareil P25, notamment :
- une caractéristique variable globale, fixe pour une image 103 donnée, par exemple une caractéristique de l'appareil P25 au moment de la capture ou de restitution de l'image liée à un réglage de l'utilisateur ou liée à un automatisme de l'appareil P25, par exemple la focale,
- une caractéristique variable locale, variable dans une image 103 donnée, par exemple des coordonnées x, y ou ro, theta dans l'image, permettant aux moyens de traitement d'images P1 d'appliquer un traitement local différent selon la zone de l'image.

N'est en général pas considéré comme une caractéristique variable P6: un facteur mesurable et variable d'un appareil P25 à l'autre mais fixe d'une image 103 à l'autre capturée, modifiée ou restituée par un même appareil P25, par exemple la focale pour un appareil P25 à focale fixe.

Les réglages utilisés tels que décrits plus haut, sont des exemples de caractéristiques variables P6.

Les informations formatées 15 peuvent dépendre d'au moins une caractéristique variable P6.

Par caractéristique variable P6, on peut entendre notamment :
- la focale de l'optique,
- le redimensionnement appliqué à l'image (facteur de zoom numérique : grossissement d'une partie de l'image ; et/ou le sous-échantillonnage : diminution du nombre de pixels de l'image),
- la correction non linéaire de luminance, par exemple la correction de gamma,
- le rehaussement de contour, par exemple le niveau de déflouage appliqué par l'appareil P25,
- le bruit du capteur et de l'électronique,
- l'ouverture de l'optique,
- la distance de mise au point,
- le numéro de la vue sur un film,
- la sur ou sous exposition,
- la sensibilité du film ou du capteur,
- le type de papier utilisé dans une imprimante,
- la position du centre du capteur dans l'image,
- la rotation de l'image par rapport au capteur,
- la position d'un projecteur par rapport à l'écran,
- la balance des blancs utilisée,
- l'activation du flash et/ou sa puissance,
- le temps de pose,
- le gain du capteur,
- la compression,
- le contraste,
- un autre réglage appliqué par l'utilisateur de l'appareil P25, par exemple un mode de fonctionnement,
- un autre réglage automatique de l'appareil P25,
- une autre mesure réalisée par l'appareil P25.

Dans le cas d'un moyen de restitution 19, la caractéristique variable P6 peut également être appelée caractéristique variable de restitution.

### Valeur de caractéristique variable

On va maintenant décrire en s'appuyant sur la figure 13, la notion de valeur de caractéristique variable P26. On appelle valeur de caractéristique variable P26 la valeur de la caractéristique variable P6 au moment de la capture, modification ou restitution d'une image déterminée, obtenue par exemple à partir de données au format Exif présentes dans le fichier P100. Les moyens de traitement d'image P1 peuvent alors traiter ou modifier la qualité de l'image 103 en fonction des caractéristiques variables P6, en utilisant des informations formatées 15 dépendant des caractéristiques variables P6 et en déterminant la valeur des caractéristiques variables P26.

Dans le cas d'un moyen de restitution 19, la valeur de caractéristique variable P6 peut également être appelée valeur de caractéristique variable de restitution.

### Informations formatées mesurées, informations formatées étendues

Les informations formatées 15 ou une fraction des informations formatées 15 peuvent comprendre des informations formatées mesurées P101, comme représenté sur la figure 15, pour représenter une mesure brute, par exemple un champ mathématique lié aux défauts géométriques de distorsion en un certain nombre de points caractéristiques d'une grille 80. Les informations formatées 15 ou une fraction des informations formatées 15 peuvent comprendre des informations formatées étendues P102, comme représenté sur la figure 15, qui peuvent être calculées à partir des informations formatées mesurées P101, par exemple par interpolation pour les autres points réels que les points caractéristiques de la grille 80. Dans ce qui précède, on a vu qu'une information formatée 15 pouvait dépendre de caractéristiques variables P6. On appelle selon l'invention combinaison P120, une combinaison constituée de caractéristiques variables P6 et de valeurs de caractéristiques variables P26 telle que par exemple une combinaison P120 constituée de la focale, de la mise au point, de l'ouverture de diaphragme, de la vitesse de capture, de l'ouverture, etc. et de valeurs associées. Il est difficilement pensable de calculer les informations formatées 15 relatives aux différentes combinaisons P120 d'autant que certaines caractéristiques de la combinaison P120 peuvent varier de façon continue telles que notamment la focale et la distance.

L'invention prévoit de calculer les informations formatées 15 sous la forme d'informations formatées étendues P102 par interpolation à partir d'informations formatées mesurées P101 relatives à une sélection prédéterminée des combinaisons P120 de caractéristiques variables P6 connues.

Par exemple, on utilise des informations formatées mesurées P101 relatives aux combinaisons P120 « focale=2, distance=7, vitesse de capture=1/100 », la combinaison « focale=10, distance=7, vitesse de capture=1/100 », la combinaison « focale=50, distance=7, vitesse de capture=1/100 » pour calculer des informations formatées étendues P102 dépendantes de la caractéristique variable P6 focale. Ces informations formatées étendues P102 permettent notamment de déterminer des informations formatées relatives à la combinaison « focale=25, distance=7 et vitesse de capture=1/100 ».

Les informations formatées mesurées P101 et les informations formatées étendues P102 peuvent présenter un écart d'interpolation P121. L''invention peut comprendre l'étape de sélectionner zéro, une ou plusieurs des caractéristiques variables P6, de telle sorte que l'écart d'interpolation P121, pour les informations formatées étendues P102 obtenues pour les caractéristiques variables P6 ainsi sélectionnées, soit inférieur à un seuil d'interpolation prédéterminé. En effet certaines caractéristiques variables P6 peuvent avoir une influence sur le défaut P5 plus faible que d'autres et faire l'approximation qu'elles sont constantes peut n'introduire qu'une erreur minime ; par exemple le réglage de mise au point peut n'avoir qu'une influence faible sur le défaut vignetage et pour cette raison ne pas faire partie des caractéristiques variables P6 sélectionnées. Les caractéristiques variables P6 peuvent être sélectionnées au moment de la production des informations formatées 15. Il résulte de la combinaison des traits techniques que la modification de la qualité des images met en oeuvre des calculs simples. Il résulte également de la combinaison des traits techniques que les informations formatées étendues P102 sont compactes. Il résulte également de la combinaison des traits techniques que les caractéristiques variables P6 éliminées sont les moins influentes sur le défaut P5. Il résulte de la combinaison des traits techniques que les informations formatées 15 permettent de modifier la qualité des images avec une précision déterminée.

Dans le cas d'un moyen de restitution 19, la combinaison 120 peut également être appelée combinaison de restitution.

Dans le cas d'un moyen de restitution 19, les informations formatées mesurées P101 peuvent également être appelées informations formatées mesurées de restitution.

Dans le cas d'un moyen de restitution 19, les informations formatées étendues P102 peuvent également être appelées informations formatées étendues de restitution.

Dans le cas d'un moyen de restitution 19, les écarts d'interpolation P121 peuvent également être appelée écarts d'interpolation de restitution.

### Modèle paramétrable, paramètres

On va maintenant décrire, en se référant notamment aux figures 5, 6 et 16, la notion de paramètres P9, modèle paramétrable P10. Au sens de l'invention, on appelle modèle paramétrable P10 un modèle mathématique pouvant dépendre des variables P6 et relatif à un ou plusieurs défauts P5 de un ou plusieurs appareils P25 ; le modèle de transformation paramétrable 12 , le modèle de transformation paramétrable inverse 212, le modèle de transformation paramétrable de restitution 97, le modèle de transformation paramétrable de restitution 297, décrits précédemment sont des exemples de modèles paramétrable P10 ; par exemple un modèle paramétrable P10 peut être relatif :
- aux défaut de piqué ou flou d'un appareil photo numérique,
- aux défauts géométrique de vignetage d'un appareil photo auquel on veut ressembler,
- aux défauts géométriques de distorsion et aux défauts géométriques d'aberrations chromatiques d'un projecteur,
- aux défaut de piqué ou flou d'un appareil photo jetable combiné avec un scanner.

Les informations formatées 15 relatives à un défaut P5 d'un appareil P25 peuvent se présenter sous la forme des paramètres P9 d'un modèle paramétrable P10 dépendant des caractéristiques variables P6; les paramètres P9 du modèle paramétrable P10 permettent d'identifier une fonction mathématique P16 dans un ensemble de fonctions mathématiques, par exemple des polynômes à plusieurs variables ; les fonctions mathématiques P16 permettent de modifier la qualité de l'image en fonction pour des valeurs déterminés des variables P6.

De sorte que les moyens de traitement d'image P1 peuvent utiliser les paramètres P9 du modèle de transformation paramétrable P10 pour calculer l'image modifiée, par exemple pour calculer l'intensité corrigée où l'intensité corrigée de restitution d'un point de l'image.

### Plan couleur

On va maintenant décrire, en se référant notamment à la figure 15, la notion de plan couleur P20 d'une image 103 en couleurs. L'image 103 peut être décomposée en plans couleur P20 de diverses façons : nombre de plans (1, 3 ou plus), précision (8 bits non signé, 16 bit signés, flottant...) et signification des plans (par rapport à un espace de couleur standard). L'image 103 peut être décomposée de diverses façons en plans couleur P20: plan couleur rouge constitué des pixels rouges, plan couleur vert, plan couleur bleu (RVB) ou luminance, saturation, teinte... ; d'autre part il existe des espaces de couleur tels PIM, ou des valeurs de pixels négatives sont possibles afin de permettre la représentation de couleurs soustractives qu'il n'est pas possible de représenter en RVB positif ; enfin il est possible de coder une valeur de pixel sur 8bits, 16bits, ou en utilisant des valeurs flottantes. Les informations formatées 15 peuvent être relatives aux plans couleur P20, par exemple en caractérisant différemment les défauts de piqué pour les plans couleur rouge, vert et bleu pour permettre à des moyens de traitement d'image P1 de corriger le défaut de piqué de manière différente pour chaque plan couleur P20.

### Fournir les informations formatées

On va maintenant décrire en s'appuyant notamment sur les figures 8, 13, 15 et 16, une variante de réalisation de l'invention. Pour fournir, selon un format standard, les informations formatées 15 à des moyens de traitement d'image P1, le système comprend des moyens de traitement informatiques et le procédé comprend l'étape de renseigner au moins un champ 91 du format standard avec les informations formatées 15. Le champ 91 peut alors comprendre notamment:
- des valeurs relatives aux défauts P5, par exemple sous la forme de paramètres P9, de sorte que les moyens de traitement d'image P1 peuvent utiliser les paramètres P9 pour modifier la qualité des images en tenant compte des défauts P5, et/ou
- des valeurs relatives aux défauts de piqué, par exemple sous la forme de paramètres P9, de sorte que les moyens de traitement d'image P1 peuvent utiliser les paramètres P9 pour modifier la qualité des images en tenant compte des défauts de piqué, et calculer la forme corrigée ou la forme corrigée de restitution d'un point de l'image, et/ou
- des valeurs relatives aux défauts de colorimétrie, par exemple sous la forme de paramètres P9, de sorte que les moyens de traitement d'image P1 peuvent utiliser les paramètres P9 pour modifier la qualité des images en tenant compte des défauts de colorimétrie, et calculer la couleur corrigée ou la couleur corrigée de restitution d'un point de l'image, et/ou
- des valeurs relatives aux défauts géométriques de distorsion et/ou aux défauts géométriques d'aberration chromatique, par exemple sous la forme de paramètres P9, de sorte que les moyens de traitement d'image P1 peuvent utiliser les paramètres P9 pour modifier la qualité des images en tenant compte des aux défauts géométriques de distorsion et/ou aux défauts géométriques d'aberration chromatique, et calculer la position corrigée ou la position corrigée de restitution d'un point de l'image, et/ou
- des valeurs relatives aux défauts géométriques de vignetage, par exemple sous la forme de paramètres P9, de sorte que les moyens de traitement d'image P1 peuvent utiliser les paramètres P9 pour modifier la qualité des images en tenant compte des aux défauts géométriques de vignetage, et calculer l'intensité corrigée ou l'intensité corrigée de restitution d'un point de l'image, et/ou
- des valeurs relatives aux écarts 14, et/ou
- des valeurs fonctions des caractéristiques variables P6 selon l'image 103, par exemples les coefficients et termes d'un polynôme dépendant de la caractéristique variable P6 correspondant à la focale et permettant de calculer l'intensité corrigée d'un point de l'image fonction de sa distance au centre, de sorte que les moyens de traitement d'image peuvent calculer l'intensité corrigée d'un point pour toute valeur de focale de l'appareil de capture d'image au moment ou l'image 103 a été capturée,
- des valeurs relatives à des informations formatées relatives aux plans couleurs P20,
- des valeurs relatives à des informations formatées,
- des valeurs relatives à des informations formatées mesurées,
- des valeurs relatives à des informations formatées étendues.

### Produire des informations formatées

On va maintenant décrire une variante de réalisation de l'invention, en s'appuyant notamment sur les figures 7, 12 et 17. Pour produire les informations formatées 15, liées aux défauts P5 des appareils P25 d'une chaîne d'appareils P3, l'invention peut mettre en oeuvre des moyens de traitement informatique et les premier algorithme, et/ou second algorithme, et/ou troisième algorithme, et/ou quatrième algorithme, et/ou cinquième algorithme, et/ou sixième algorithme, et/ou septième algorithme et/ou huitième algorithme tels que décrits ci-dessus.

### Application de l'invention à la réduction de coût

On appelle réduction de coût, un procédé et système pour diminuer le coût d'un appareil P25 ou d'une chaîne d'appareils P3, notamment le coût de l'optique d'un appareil ou d'une chaîne d'appareils; le procédé consistant à :
- diminuer le nombre de lentilles, et/ou
- simplifier la forme des lentilles, et/ou
- concevoir ou choisir dans un catalogue une optique ayant des défauts P5 plus importants que ceux souhaités pour l'appareil ou la chaîne d'appareils, et/ou
- utiliser des matériaux, composants, traitements ou procédés de fabrication moins coûteux pour l'appareil ou la chaîne d'appareils, ajoutant des défauts.

Le procédé et système selon l'invention peut être utilisé pour diminuer le coût d'un appareil ou d'une chaîne d'appareils : on peut concevoir une optique numérique, produire des informations formatées relatives aux défauts de l'appareil ou à la chaîne d'appareils, utiliser ces informations formatées pour permettre à des moyens de traitement d'image P1, intégrés ou non, de modifier la qualité des images provenant ou destinées à l'appareil ou à la chaîne d'appareils, de sorte que la combinaison de l'appareil ou la chaîne d'appareil et des moyens de traitement d'image permettent de capturer, modifier ou restituer des images de la qualité souhaitée avec un coût réduit.

## Revendications

1. Procédé pour produire des informations formatées (15), liées aux défauts (P5) des appareils d'une chaîne d'appareils (P3), destinées à des moyens de traitement d'image (P1), notamment des logiciels, en vue de modifier la qualité des images (103) traitées par lesdits moyens de traitement d'image (P1) ; ladite chaîne d'appareils (P3) comprenant notamment au moins un appareil de capture d'image (1) et/ou au moins un moyen de restitution d'image (19); ledit procédé comprenant l'étape de produire des données caractérisant des défauts (P5) desdits appareils de ladite chaîne d'appareils (P3), lesdites données étant ci-après dénommées les informations formatées (15), et comprenant un premier algorithme de calcul desdites informations formatées (15), permettant de choisir dans un ensemble de modèles de transformation paramétrables, dans un ensemble de modèles de transformation paramétrables inverses, dans un ensemble d'images de synthèse, dans un ensemble de scènes de référence et dans un ensemble d'images transformées:
- une scène de référence (9), et
- une image transformée (13), et
- un modèle de transformation paramétrable (12) permettant de transformer l'image de référence (11), obtenue en capturant ladite scène de référence (9) au moyen dudit appareil de capture d'image (1), en ladite image transformée (13), et
- un modèle de transformation paramétrable inverse (212) permettant de transformer ladite image transformée (13) en ladite image de référence (11), et
- une image de synthèse (207) obtenue à partir de ladite scène de référence (9) et/ou obtenue à partir de ladite image de référence (11),
de telle sorte que ladite image transformée (13) soit proche de ladite image de synthèse (207) ;
ladite image transformée (13) présentant un écart (14) avec ladite image de synthèse (207) ;
lesdites informations formatées (15) étant au moins en partie composées des paramètres (P9) dudit modèle de transformation paramétrable (12) choisi et/ou des paramètres (P9) dudit modèle de transformation paramétrable inverse (212) choisi.et

2. Procédé selon la revendication 1 ; ladite chaîne d'appareils (P3) comprenant au moins un appareil de capture d'image (1), notamment un scanner ; ledit procédé étant plus particulièrement destiné à produire des informations formatées (15) liées aux défauts (P5) dudit appareil de capture d'image (1) ; ledit procédé comprenant en outre l'étape de produire des données caractérisant des défauts (P5) dudit appareil de capture d'image (1), notamment les caractéristiques de piqué ; lesdites informations formatées (15) comprenant également lesdites données caractérisant lesdits défauts (P5) dudit appareil de capture d'image (1).

3. Procédé selon la revendication 2; ledit premier algorithme de calcul permettant de choisir dans un ensemble de projections mathématiques, une projection mathématique (8) permettant de réaliser ladite image de synthèse (207) à partir de ladite scène de référence (9).

4. Procédé selon l'une quelconque des revendications 2 à 3 ; ladite chaîne d'appareils (P3) comprenant au moins un appareil de capture d'image (1) ; pour produire lesdites informations formatées (15) liées aux défauts (P5) dudit appareil de capture d'image (1), notamment les caractéristiques de distorsion, ledit procédé comprend un second algorithme de calcul desdites informations formatées (15), comportant les étapes de :
- choisir au moins une scène de référence (9),
- capturer au moins une image de référence (11) de chaque scène de référence (9) au moyen dudit appareil de capture d'image (1),
- choisir dans un ensemble de modèles de transformation paramétrables et dans un ensemble d'images de synthèse :
- un modèle de transformation paramétrable (12) permettant de transformer ladite image de référence (11), en une image transformée (13), et
- une image de synthèse (207) obtenue à partir de ladite scène de référence (9) et/ou obtenue à partir de ladite image de référence (11),
de telle sorte que ladite image de synthèse (207) soit proche de l'image transformée (13) ;
ladite image transformée (13) présentant un écart (14) avec ladite image de synthèse (207) ;
lesdites informations formatées (15) étant au moins en partie composées des paramètres (P9) dudit modèle de transformation paramétrable (12) choisi et/ou des paramètres (P9) du modèle de transformation paramétrable inverse (212); ledit modèle de transformation paramétrable inverse (212) permettant de transformer ladite image transformée (13) en ladite image de référence (11).

5. Procédé selon la revendication 4 ; ledit second algorithme de calcul permettant de choisir dans un ensemble de projections mathématiques, une projection mathématique (8) permettant de réaliser ladite image de synthèse (207) à partir de ladite scène de référence (9).

6. Procédé selon l'une quelconque des revendications 1 à 5 ; ledit procédé comprenant un troisième algorithme de calcul desdits écarts (14) comportant les étapes de :
- calculer lesdits écarts (14) entre ladite image transformée (13) et ladite images de synthèse,
- associer lesdits écarts (14) auxdites informations formatées (15).

7. Procédé selon la revendication 2 ; ladite chaîne d'appareils (P3) comprenant au moins un appareil de capture d'image (1) ; la ou lesdites images étant des images de scènes, notamment de scènes animées capturées par un utilisateur au moyen dudit appareil de capture d'image (1) ;
pour produire lesdites informations formatées (15) liées aux défauts (P5) dudit appareil de capture d'image (1) notamment les caractéristiques de distorsion, ledit procédé comprend un quatrième algorithme de calcul desdites informations formatées (15), comportant les étapes de :
- réaliser une classe d'images de synthèse (7) par projections mathématiques déterminées, d'au moins une scène de référence (9), sur une surface,
- capturer au moins une image de référence (11) de chaque scène de référence (9) au moyen dudit appareil de capture d'image (1),
- choisir dans un ensemble de modèles de transformation paramétrables celui permettant de transformer ladite image de référence (11) en une image transformée (13) proche de ladite classe d'images de synthèse (7) de ladite scène de référence (9) ;
ladite image transformée (13) présentant un écart (14) avec ladite classe d'images de synthèse ; lesdites informations formatées (15) étant au moins en partie composées des paramètres (P9) desdits modèles de transformation paramétrables (12) choisis.

8. Procédé selon l'une quelconque des revendications 1 à 7 ; ledit procédé étant tel que ledit appareil de capture d'image (1) de ladite chaîne d'appareils (P3) présente au moins une caractéristique variable (P6) selon l'image (103), notamment la focale et/ou l'ouverture; une fraction desdites informations formatées (15) étant liée aux défauts (P5) dudit appareil de capture d'image (1) présentant ladite ou lesdites caractéristiques variables (P6) ; chaque caractéristique variable (P6) étant susceptible d'être associée à une valeur pour former une combinaison (P120) constituée de l'ensemble desdites caractéristiques variables (P6) et desdites valeurs;
ledit procédé comprenant en outre l'étape de produire ladite fraction desdites informations formatées (15) pour une sélection prédéterminée desdites combinaisons (P120) ; les informations formatées de ladite fraction des informations formatées, ainsi obtenues, entrant dans le champ des informations formatées (15), étant ci-après dénommées les informations formatées mesurées (P101) .

9. Procédé selon la revendication 8 ; ledit procédé comprenant l'étape d'obtenir ladite fraction desdites informations formatées relative à une combinaison (P120) quelconque, à partir des informations formatées mesurées (P101) ; ladite fraction desdites informations formatées relative à une combinaison (P120) quelconque étant ci-après dénommée informations formatées étendues (P102) ; lesdites information formatées comprenant lesdites informations formatées étendues (P102) en lieu et place desdites informations formatées mesurées (P101).

10. Procédé selon la revendication 9 ; lesdites informations formatées mesurées (P101) et les dites informations formatées étendues (P102) présentant un écart d'interpolation (P121); ledit procédé comprenant en outre l'étape de sélectionner zéro, une ou plusieurs desdites caractéristiques variables (P6), de telle sorte que ledit écart d'interpolation (P121), pour les informations formatées étendues (P102) obtenues pour lesdites caractéristiques variables (P6) ainsi sélectionnées, soit inférieur à un seuil d'interpolation prédéterminé.

11. Procédé selon l'une quelconque des revendications 1 à 10 ; ladite chaîne d'appareils (P3) comprenant au moins un moyen de restitution d'image (19), notamment une imprimante, un écran de visualisation ; ledit procédé étant destiné en outre à fournir à des moyens de traitement d'image (P1), notamment des logiciels, des informations formatées (15) liées aux défauts (P5) desdits moyens de restitution d'image (19);
ledit procédé comprenant en outre l'étape de produire des données caractérisant des défauts (P5) des moyens de restitution d'image (19), notamment les caractéristiques de distorsion ; lesdites informations formatées (15) comprenant également lesdites données caractérisant des défauts (P5) des moyens de restitution d'image (19).

12. Procédé selon la revendication 11 ; ladite chaîne d'appareils (P3) comprenant au moins un moyen de restitution d'image (19); pour produire lesdites informations formatées (15) liées aux défauts (P5) dudit moyen de restitution d'image (19), notamment les caractéristiques de distorsion, ledit procédé comprend un sixième algorithme de calcul desdites informations formatées (15), permettant de choisir dans un ensemble de modèles de transformation paramétrables de restitution, dans un ensemble de modèles de transformation paramétrables de restitution inverses, dans un ensemble de projections mathématiques de restitution, dans un ensemble de références de restitution et dans un ensemble d'images de référence corrigées de restitution:
- une référence de restitution (209), et
- une image de référence corrigée de restitution (213), et
- un modèle de transformation paramétrable de restitution (97) permettant de transformer ladite référence de restitution (209) en ladite image de référence corrigée de restitution (213), et
- un modèle de transformation paramétrable de restitution inverse (297) permettant de transformer ladite image de référence corrigée de restitution (213) en ladite référence de restitution (209), et
- une projection mathématique de restitution (96) permettant de réaliser une image de synthèse de restitution (307) à partir de ladite image de référence corrigée de restitution (213),
de telle sorte que ladite image de synthèse de restitution (307) soit proche de la référence restituée (211) obtenue par restitution de ladite référence de restitution (209), au moyen dudit moyen de restitution d'image (19) ;
ladite référence restituée (211) présentant un écart de restitution (214) avec ladite image de synthèse de restitution (307) ;
lesdites informations formatées (15) étant au moins en partie composées des paramètres dudit modèle de transformation paramétrable de restitution (97) choisi et/ou des paramètres dudit modèle de transformation paramétrable de restitution inverse (297) choisi.

13. Procédé selon la revendication 11 ou 12 ; ladite chaîne d'appareils (P3) comprenant au moins un moyen de restitution d'image (19); pour produire lesdites informations formatées (15) liées aux défauts (P5) dudit moyen de restitution d'image (19), notamment les caractéristiques de distorsion, ledit procédé comprend un septième algorithme de calcul desdites informations formatées (15), comportant les étapes de :
- choisir au moins une référence de restitution (209)
- restituer ladite référence de restitution (209), au moyen dudit moyen de restitution d'image (19), en une référence restituée (211),
- choisir dans un ensemble de modèles de transformation paramétrables de restitution et dans un ensemble de projections mathématiques de restitution :
- un modèle de transformation paramétrable de restitution (97) permettant de transformer ladite référence de restitution (209) en une image de référence corrigée de restitution (213), et
- une projection mathématique de restitution (96) permettant de réaliser une image de synthèse de restitution (307) à partir de ladite image de référence corrigée de restitution (213),
de telle sorte que ladite image de synthèse de restitution (307) soit proche de ladite référence restituée (211) ;
ladite référence restituée (211) présentant un écart de restitution (214) avec ladite image de synthèse de restitution (307);
lesdites informations formatées (15) étant au moins en partie composées des paramètres (P9) dudit modèle de transformation paramétrable de restitution (97) choisis et/ou des paramètres (P9) du modèle de transformation paramétrable de restitution inverse (297) ; ledit modèle de transformation paramétrable de restitution inverse (297) permettant de transformer ladite image de référence corrigée de restitution (213) en ladite référence de restitution (209).

14. Procédé selon la revendication 11 ou 12 ; ladite chaîne d'appareils (P3) comprenant au moins un moyen de restitution d'image (19) ; pour produire lesdites informations formatées (15) liées aux défauts (P5) dudit moyen de restitution d'image (19), notamment les caractéristiques de distorsion, ledit procédé comprend un huitième algorithme de calcul desdites informations formatées (15), comportant les étapes de :
- choisir une image de référence corrigée de restitution (213),
- choisir dans un ensemble de modèles de transformation paramétrables de restitution, dans un ensemble de projections mathématiques de restitution, dans un ensemble de références de restitution:
- une référence de restitution (209), et
- un modèle de transformation paramétrable de restitution (97) permettant de transformer ladite référence de restitution (209) en ladite image de référence corrigée de restitution (213), et
- un modèle de transformation paramétrable de restitution inverse (297) permettant de transformer ladite image de référence corrigée de restitution (213) en ladite référence de restitution (209), et
- une projection mathématique de restitution (96) permettant de réaliser une image de synthèse de restitution (307) à partir de ladite image de référence corrigée de restitution (213),
de telle sorte que ladite image de synthèse de restitution (307) soit proche de la référence restituée (211) obtenue par restitution de ladite référence de restitution (209), au moyen dudit moyen de restitution d'image (19) ;
ladite référence restituée (211) présentant un écart de restitution (214) avec ladite image de synthèse de restitution (307) ;
lesdites informations formatées (15) étant au moins en partie composées des paramètres (P9) dudit modèle de transformation paramétrable de restitution (97) choisi et des paramètres (P9) dudit modèle de transformation paramétrable de restitution inverse (297) choisi.

15. Procédé selon l'une quelconque des revendications 12 à 14 ; ledit procédé étant tel que ledit moyen de restitution d'image (19) de ladite chaîne d'appareils (P3) présente au moins une caractéristique variable de restitution selon l'image, notamment la focale et/ou l'ouverture; une fraction desdites informations formatées (15) étant liée aux défauts (P5) dudit moyen de restitution d'image (19) présentant ladite ou lesdites caractéristiques variables de restitution; chaque caractéristique variable de restitution étant susceptible d'être associée à une valeur pour former une combinaison de restitution constituée de l'ensemble desdites caractéristiques variables de restitution et desdites valeurs;
ledit procédé comprenant en outre l'étape de produire ladite fraction desdites informations formatées (15) pour une sélection prédéterminée desdites combinaisons de restitution ; les informations formatées de ladite fraction, ainsi obtenues, entrant dans le champ des informations formatées (15), étant ci-après dénommées les informations formatées mesurées de restitution.

16. Procédé selon la revendication 15 ; ledit procédé comprenant l'étape d'obtenir ladite fraction desdites informations formatées (15) relative à une combinaison de restitution quelconque, à partir des informations formatées mesurées de restitution ; ladite fraction desdites informations formatées (15) relative à une combinaison de restitution quelconque étant ci-après dénommée informations formatées étendues de restitution ; lesdites information formatées comprenant lesdites informations formatées étendues de restitution en lieu et place desdites informations formatées mesurées de restitution.

17. Procédé selon la revendication 16 ; lesdites informations formatées mesurées de restitution et les dites informations formatées étendues de restitution présentant un écart d'interpolation de restitution ; ledit procédé comprenant en outre l'étape de sélectionner zéro, une ou plusieurs desdites caractéristiques variables de restitution, de telle sorte que ledit écart d'interpolation de restitution, pour les informations formatées étendues de restitution obtenues pour lesdites caractéristiques variables de restitution ainsi sélectionnées, soit inférieur à un seuil d'interpolation de restitution prédéterminé.

18. Procédé selon l'une quelconque des revendications 12 à 17 ; ledit moyen de restitution d'image (19) étant associé à un appareil de capture d'image (1) pour restituer, sous une forme numérique, ladite référence restituée (211) à partir de ladite référence de restitution (209) ; ledit procédé étant tel que pour produire les informations formatées (15) liées aux défauts (P5) dudit moyen de restitution d'image (19), on utilise lesdites informations formatées (15) relatives audit appareil de capture d'image (1) associé audit moyen de restitution d'image (19).

19. Procédé selon l'une quelconque des revendications 1 à 18 ; ladite chaîne d'appareils (P3) comprenant au moins deux appareils ; pour produire des informations formatées (15) liées aux défauts (P5) des appareils de ladite chaîne d'appareils (P3), ledit procédé comprenant en outre les étapes suivantes :
- l'étape de produire des informations formatées (15) relatives à chacun des appareils de ladite chaîne d'appareils (P3),
- l'étape de combiner les informations formatées (15) relatives à chacun des appareils de ladite chaîne d'appareil, pour obtenir lesdites informations formatées (15) relative à ladite chaîne d'appareils (P3).

20. Système pour produire des informations formatées (15), liées aux défauts (P5) des appareils d'une chaîne d'appareils (P3), destinées à des moyens de traitement d'image (P1), notamment des logiciels, en vue de modifier la qualité des images traitées par lesdits moyens de traitement d'image (P1) ; ladite chaîne d'appareils (P3) comprenant notamment au moins un appareil de capture d'image (1) et/ou au moins un moyen de restitution d' image (19) ; ledit système comprenant des moyens de traitement informatique pour produire des données caractérisant des défauts (P5) desdits appareils de ladite chaîne d'appareils (P3) lesdites données. étant ci-après dénommées les informations formatées (15), et permettant de mettre en oeuvre un premier algorithme de calcul desdites informations formatées (15) ; ledit algorithme de calcul permettant de choisir dans un ensemble de modèles de transformation paramétrables, dans un ensemble de modèles de transformation paramétrables inverses, dans un ensemble d'images de synthèse, dans un ensemble de scènes de référence et dans un ensemble d'images transformées :
- une scène de référence (9), et
- une image transformée (13), et
- un modèle de transformation paramétrable (12) permettant de transformer l'image de référence (11), obtenue en capturant ladite scène de référence (9) au moyen dudit appareil de capture d'image (1), en ladite image transformée (13), et
- un modèle de transformation paramétrable inverse (212) permettant de transformer ladite image transformée (13) en ladite image de référence (11), et
- une image de synthèse (207) obtenue à partir de ladite scène de référence (9) et/ou obtenue à partir de ladite image de référence (11),
de telle sorte que ladite image transformée (13) soit proche de ladite image de synthèse (207) ;
ladite image transformée (13) présentant un écart (14) avec ladite image de synthèse (207) ;
lesdites informations formatées (15) étant au moins en partie composées des paramètres dudit modèle de transformation paramétrable (12) choisi et/ou des paramètres dudit modèle de transformation paramétrable inverse (212) choisi.

21. Système selon la revendication 20 ; ladite chaîne d'appareils (P3) comprenant au moins un appareil de capture d'image (1), notamment un scanner ; ledit système étant plus particulièrement destiné à produire des informations formatées (15) liées aux défauts (P5) dudit appareil de capture d'image (1) ; ledit système comprenant des moyens de traitement informatique pour produire des données caractérisant des défauts (P5) dudit appareil de capture d'image (1), notamment les caractéristiques de piqué ; lesdites informations formatées (15) comprenant également lesdites données caractérisant lesdits défauts (P5) dudit appareil de capture d'image (1).

22. Système selon la revendication 20 ; lesdits moyens de traitement informatique mettant en oeuvre ledit premier algorithme de calcul comportant des moyens de calcul pour choisir dans un ensemble de projections mathématiques, une projection mathématique (8) permettant de réaliser ladite image de synthèse (207) à partir de ladite scène de référence (9).

23. Système selon l'une quelconque des revendications 20 à 22 ; ladite chaîne d'appareils (P3) comprenant au moins un appareil de capture d'image (1) ; pour produire lesdites informations formatées (15) liées aux défauts - (P5) dudit appareil de capture d'image (1), notamment les caractéristiques de distorsion, lesdits moyens de traitement informatique mettant en oeuvre un second algorithme de calcul desdites informations formatées (15) ; lesdits moyens de traitement informatique mettant en oeuvre ledit second algorithme de calcul comportant des moyens de calcul pour choisir au moins une scène de référence (9) ; ledit appareil de capture d'image (1) permettant de capturer au moins une image de référence (11) de chaque scène de référence (9) ; lesdits moyens de calcul permettant en outre de procéder au choix, dans un ensemble de modèles de transformation paramétrables et dans un ensemble d'images de synthèse, de :
- un modèle de transformation paramétrable (12) permettant de transformer ladite image de référence (11), en une image transformée (13), et
- une image de synthèse (207) obtenue à partir de ladite scène de référence (9) et/ou obtenue à partir de ladite image de référence (11) ;
ledit choix étant effectué de telle sorte que ladite image de synthèse (207) soit proche de l'image transformée (13);
ladite image transformée (13) présentant un écart (14) avec ladite image de synthèse (207) ; lesdites informations formatées (15) étant au moins en partie composées des paramètres (P9) dudit modèle de transformation paramétrable (12) choisi et/ou des paramètres (P9) du modèle de transformation paramétrable inverse (212) ; ledit modèle de transformation paramétrable inverse (212) permettant de transformer ladite image transformée (13) en ladite image de référence (11) .

24. Système selon la revendication 23 ; lesdits moyens de calcul permettant de mettre en oeuvre ledit second algorithme de calcul comportant des moyens de calcul pour choisir dans un ensemble de projections mathématiques, une projection mathématique (8) permettant de réaliser ladite image de synthèse (207) à partir de ladite scène de référence (9).

25. Système selon l'une quelconque des revendications 20 à 24 ; lesdits moyens de traitement informatique permettant de mettre en oeuvre un troisième algorithme de calcul desdits écarts (14) comportant des moyens de calcul pour :
- calculer lesdits écarts (14) entre ladite image transformée (13) et ladite images de synthèse,
- associer lesdits écarts (14) auxdites informations formatées (15).

26. Système selon la revendication 21 ; ledit système étant tel que pour calculer lesdites informations formatées (15) relatives à un appareil de capture d'image (1) de ladite chaîne d'appareils (P3), ledit système comprend en outre au moins une scène de référence (9) ; ledit appareil de capture d'image (1) réalisant une image de référence (11) pour chaque scène de référence (9) ; pour calculer lesdites informations formatées (15) relatives audit appareil de capture d'image (1), ledit système comprenant en outre des moyens de calcul et de traitement pour :
- réaliser une classe d'images de synthèse par projections mathématiques déterminées, d'au moins une scène de référence (9), sur une surface,
- choisir dans un ensemble de modèles de transformation paramétrables celui permettant de transformer ladite image de référence (11) en une image transformée (13) proche de ladite classe d'images de synthèse de ladite scène de référence (9) ;
ladite image transformée (13) présentant un écart (14) avec ladite classe d'images de synthèse ; lesdites informations formatées (15) étant au moins en partie composées des paramètres desdits modèles de transformation paramétrables choisis.

27. Système selon l'une quelconque des revendications 20 à 26 ; ledit système étant tel que ledit appareil de capture d'image (1) de ladite chaîne d'appareils (P3) présente au moins une caractéristique variable selon l'image, notamment la focale et/ou l'ouverture ; une fraction desdites informations formatées (15) étant liée aux défauts (P5) dudit appareil de capture d'image (1) présentant ladite ou lesdites caractéristiques variables ; chaque caractéristique variable étant susceptible d'être associée à une valeur pour former une combinaison constituée de l'ensemble desdites caractéristiques variables et desdites valeurs;
ledit système comprenant en outre des moyens de traitement informatique pour produire ladite fraction desdites informations formatées (15) pour une sélection prédéterminée desdites combinaisons ; les informations formatées de ladite fraction des informations formatées, ainsi obtenues, entrant dans le champ des informations formatées (15), étant ci-après dénommées les informations formatées mesurées (P101).

28. Système selon la revendication 27 ; lesdits moyens de traitement informatique permettant d'obtenir ladite fraction desdites informations formatées (15) relative à une combinaison quelconque, à partir des informations formatées mesurées (P101) ; ladite fraction desdites informations formatées (15) relative à une combinaison quelconque étant ci-après dénommée informations formatées étendues (P102) ; lesdites information formatées comprenant lesdites informations formatées étendues (P102) en lieu et place desdites informations formatées mesurées (P101).

29. Système selon la revendication 28 ; lesdites informations formatées mesurées (P101) et les dites informations formatées étendues (P102) présentant un écart d'interpolation ; ledit système comprenant en outre des moyens de sélection pour sélectionner zéro, une ou plusieurs desdites caractéristiques variables (P6), de telle sorte que ledit écart d'interpolation, pour les informations formatées étendues (P102) obtenues pour lesdites caractéristiques variables (P6) ainsi sélectionnées, soit inférieur à un seuil d'interpolation prédéterminé.

30. Système selon l'une quelconque des revendications 20 à 29 ; ladite chaîne d'appareils (P3) comprenant au moins un moyen de restitution d'image (19), notamment une imprimante, un écran de visualisation ; ledit système étant destiné en outre à fournir à des moyens de traitement d'image (P1), notamment des logiciels, des informations formatées (15) liées aux défauts (P5) desdits moyens de restitution d'image (19) ;
ledit système comprenant en outre des moyens de traitement informatique pour produire des données caractérisant des défauts (P5) des moyens de restitution d'image (19), notamment les caractéristiques de distorsion ; lesdites informations formatées (15) comprenant également lesdites données caractérisant des défauts (P5) des moyens de restitution d'image (19).

31. Système selon la revendication 30 ; ladite chaîne d'appareils (P3) comprenant au moins un moyen de restitution d'image (19); pour produire lesdites informations formatées (15) liées aux défauts (P5) dudit moyen de restitution d'image (19), notamment les caractéristiques de distorsion, ledit système comprenant des moyens de calcul pour procéder au choix dans un ensemble de modèles de transformation paramétrables de restitution, dans un ensemble de modèles de transformation paramétrables de restitution inverses, dans un ensemble de projections mathématiques de restitution, dans un ensemble de références de restitution et dans un ensemble d'images de référence corrigées de restitution:
- une référence de restitution (209), et
- une image de référence corrigée de restitution (213), et
- un modèle de transformation paramétrable de restitution (97) permettant de transformer ladite référence de restitution (209) en ladite image de référence corrigée de restitution (213), et
- un modèle de transformation paramétrable de restitution inverse (297) permettant de transformer ladite image de référence corrigée de restitution (213) en ladite référence de restitution (209), et
- une projection mathématique de restitution (96) permettant de réaliser une image de synthèse de restitution (307) à partir de ladite image de référence corrigée de restitution (213) ;
ledit choix étant effectué de telle sorte que ladite image de synthèse de restitution (307) soit proche de la référence restituée (211) obtenue par restitution de ladite référence de restitution (209), au moyen dudit moyen de restitution d'image (19) ; ladite référence restituée (211) présentant un écart de restitution (214) avec ladite image de synthèse de restitution (307) ; lesdites informations formatées (15) étant au moins en partie composées des paramètres dudit modèle de transformation paramétrable de restitution (97) choisi et/ou des paramètres dudit modèle de transformation paramétrable de restitution inverse (297) choisi.

32. Système selon la revendication 30 ou 31 ; ladite chaîne d'appareils (P3) comprenant au moins un moyen de restitution d'image (19) ; pour produire lesdites informations formatées (15) liées aux défauts (P5) dudit moyen de restitution d'image (19), notamment les caractéristiques de distorsion, ledit système comprenant des moyens de calcul pour choisir au moins une référence de restitution (209) ; ledit moyen de restitution d'image (19) permettant de restituer ladite - référence de restitution (209) en une référence restituée (211) ; lesdits moyens de calcul permettant en outre de procéder au choix dans un ensemble de modèles de transformation paramétrables de restitution et dans un ensemble de projections mathématiques de restitution :
- un modèle de transformation paramétrable de restitution (97) permettant de transformer ladite référence de restitution (209) en une image de référence corrigée de restitution (213), et
- une projection mathématique de restitution (96) permettant de réaliser une image de synthèse de restitution (307) à partir de ladite image de référence corrigée de restitution (213) ;
ledit choix étant effectué de telle sorte que ladite image de synthèse de restitution (307) soit proche de ladite référence restituée (211) ; ladite référence restituée (211) présentant un écart de restitution (214) avec ladite image de synthèse de restitution (307) ; lesdites informations formatées (15) étant au moins en partie composées des paramètres (P9) dudit modèle de transformation paramétrable de restitution (97) choisis et/ou des paramètres (P9) du modèle de transformation paramétrable de restitution inverse (297) ; ledit modèle de transformation paramétrable de restitution inverse (297) permettant de transformer ladite image de référence corrigée de restitution (213) en ladite référence de restitution (209).

33. Système selon la revendication 30 ou 31 ; ladite chaîne d'appareils (P3) comprenant au moins un moyen de restitution d'image (19) ; pour produire lesdites informations formatées (15) liées aux défauts (P5) dudit moyen de restitution d'image (19), notamment les caractéristiques de distorsion, ledit système comprenant des moyens de calcul pour choisir une image de référence corrigée de restitution (213) ; lesdits moyens de calcul permettant en outre de procéder au choix dans un ensemble de modèles de transformation paramétrables de restitution, dans un ensemble de projections mathématiques de restitution, dans un ensemble de références de restitution:
- d'un modèle de transformation paramétrable de restitution (97) permettant de transformer une référence de restitution (209) déterminée en ladite image de référence corrigée de restitution (213), et
- d'un modèle de transformation paramétrable de restitution inverse (297) permettant de transformer ladite image de référence corrigée de restitution (213) en ladite référence de restitution (209), et
- d'une projection mathématique de restitution (96) permettant de réaliser une image de synthèse de restitution (307) à partir de ladite image de référence corrigée de restitution (213) ;
ledit choix étant effectué de telle sorte que ladite image de synthèse de restitution (307) soit proche de la référence restituée (211) obtenue par restitution de ladite référence de restitution (209), au moyen dudit moyen de restitution d'image (19) ; ladite référence restituée (211) présentant un écart de restitution (214) avec ladite image de synthèse de restitution (307) ; lesdites informations formatées (15) étant au moins en partie composées des paramètres dudit modèle de transformation paramétrable de restitution (97) choisi et/ou des paramètres dudit modèle de transformation paramétrable de restitution inverse (297) choisi.

34. Système selon l'une quelconque des revendications 31 à 33 ; ledit système étant tel que ledit moyen de restitution d'image (19) de ladite chaîne d'appareils (P3) présente au moins une caractéristique variable de restitution selon l'image, notamment la focale et/ou l'ouverture; une fraction desdites informations formatées (15) étant liée aux défauts (P5) dudit moyen de restitution d'image (19) présentant ladite ou lesdites caractéristiques variables de restitution; chaque caractéristique variable de restitution étant susceptible d'être associée à une valeur pour former une combinaison de restitution constituée de l'ensemble desdites caractéristiques variables de restitution et desdites valeurs ; ledit système comprenant en outre des moyens de traitement informatique pour produire ladite fraction desdites informations formatées (15) pour une sélection prédéterminée desdites combinaisons de restitution ; les informations formatées de ladite fraction, ainsi obtenues, entrant dans le champ des informations formatées (15), étant ci-après dénommées les informations formatées mesurées de restitution.

35. Système selon la revendication 34 ; ledit système comprenant de moyens de traitement informatique pour obtenir ladite fraction desdites informations formatées (15) relative à une combinaison de restitution quelconque, à partir des informations formatées mesurées de restitution ; ladite fraction desdites informations formatées (15) relative à une combinaison de restitution quelconque étant ci-après dénommée informations formatées étendues de restitution ; lesdites information formatées comprenant lesdites informations formatées étendues de restitution en lieu et place desdites informations formatées mesurées de restitution.

36. Système selon la revendication 35 ; lesdites informations formatées mesurées de restitution et les dites informations formatées étendues de restitution présentant un écart d'interpolation de restitution ; ledit système comprenant en outre des moyens de sélection pour sélectionner zéro, une ou plusieurs desdites caractéristiques variables de restitution, de telle sorte que ledit écart d'interpolation de restitution, pour les informations formatées étendues de restitution obtenues pour lesdites caractéristiques variables de restitution ainsi sélectionnées, soit inférieur à un seuil d'interpolation de restitution prédéterminé.

37. Système selon l'une quelconque des revendications 31 à 36 ; ledit moyen de restitution étant associé à un appareil de capture d'image (1) pour restituer, sous une forme numérique, ladite référence restituée (211) à partir de ladite référence de restitution (209) ; ledit système comprenant des moyens de traitement informatique pour produire les informations formatées (15) liées aux défauts (P5) dudit moyen de restitution, en utilisant lesdites informations formatées (15) relatives audit appareil de capture d'image (1) associé audit moyen de restitution.

38. Système selon l'une quelconque des revendications 20 à 37 ; ladite chaîne d'appareils (P3) comprenant au moins deux appareils ; pour produire des informations formatées (15) liées aux défauts (P5) des appareils de ladite chaîne d'appareils (P3), ledit système comprenant en outre Ides moyens de traitement informatique pour produire des informations formatées (15) relatives à chacun des appareils de ladite chaîne d'appareils (P3) et pour combiner les informations formatées (15) relatives à chacun des appareils de ladite chaîne d'appareil, pour obtenir lesdites informations formatées (15) relative à ladite chaîne d'appareils (P3).

## Patentansprüche

1. Verfahren zur Erzeugung von formatierten Informationen (15), die sich auf Fehler (P5) von Vorrichtungen in einer Kette von Vorrichtungen (P3) beziehen, die für Bildbearbeitungsmittel (P1), insbesondere Software, bestimmt sind, um die Qualität von Bildern (103), die von den Bildbearbeitungsmitteln (P1) bearbeitet werden, zu verändern; wobei die Kette von Vorrichtungen (P3) insbesondere mindestens eine Bilderfassungsvorrichtung (1) und/oder mindestens ein Bildwiedergabemittel (19) umfasst; wobei das Verfahren den Schritt der Erzeugung von Daten, die Fehler (P5) dieser Vorrichtungen in der Kette von Vorrichtungen (P3) beschreiben, wobei diese Daten nachstehend als die formatierten Informationen (15) bezeichnet werden, und einen ersten Algorithmus zur Berechnung der formatierten Informationen (15) umfasst, der aus einer Reihe von konfigurierbaren Transformationsmodellen, aus einer Reihe von konfigurierbaren inversen Transformationsmodellen, aus einer Reihe von synthetischen Bildern, aus einer Reihe von Referenzszenen und aus einer Reihe von transformierten Bildern die Auswahl von Folgendem ermöglicht:
- eine Referenzszene (9), und
- ein transformiertes Bild (13), und
- ein konfigurierbares Transformationsmodell (12), das die Transformation des Referenzbildes (11), das durch Erfassen der Referenzszene (9) unter Verwendung der Bilderfassungsvorrichtung (1) erhalten wird, in das transformierte Bild (13) ermöglicht, und
- ein konfigurierbares inverses Transformationsmodell (212), das die Transformation des transformierten Bildes (13) in das Referenzbild (11) ermöglicht, und
- ein synthetisches Bild (207), das aus der Referenzszene (9) und/oder aus dem Referenzbild (11) erhalten wird,
derart, dass das transformierte Bild (13) dem synthetischen Bild (207) ähnlich ist;
das transformierte Bild (13) eine Differenz (14) zum synthetischen Bild (207) aufweist;
die formatierten Informationen (15) zumindest teilweise aus den Parametern (P9) des gewählten konfigurierbaren Transformationsmodells (12) und/oder den Parametern (P9) des gewählten konfigurierbaren inversen Transformationsmodells (212) bestehen.

2. Verfahren nach Anspruch 1; wobei die Kette von Vorrichtungen (P3) mindestens eine Bilderfassungsvorrichtung (1), insbesondere einen Scanner, umfasst; wobei das Verfahren insbesondere dazu bestimmt ist, formatierte Informationen (15) in Bezug auf Fehler (P5) der Bilderfassungsvorrichtung (1) zu erzeugen; wobei das Verfahren weiter den Schritt des Erzeugens von Daten umfasst, die Fehler (P5) der Bilderfassungsvorrichtung (1) beschreiben, insbesondere die Bildschärfe-Eigenschaften; wobei die formatierten Informationen (15) auch die Daten umfassen, die die Fehler (P5) der Bilderfassungsvorrichtung (1) beschreiben.

3. Verfahren nach Anspruch 2; wobei der erste Berechnungsalgorithmus die Auswahl aus einer Reihe mathematischer Projektionen einer mathematischen Projektion (8) zur Erzeugung des synthetischen Bildes (207) aus der Bezugsszene (9) ermöglicht.

4. Verfahren nach einem der Ansprüche 2 bis 3; wobei die Kette von Vorrichtungen (P3) mindestens eine Bilderfassungsvorrichtung (1) umfasst; zum Erzeugen der formatierten Informationen (15) in Bezug auf Fehler (P5) der Bilderfassungsvorrichtung (1), insbesondere Verzerrungseigenschaften, wobei das Verfahren einen zweiten Algorithmus zur Berechnung der formatierten Informationen (15) und die folgenden Schritte umfasst:
- Auswahl mindestens einer Referenzszene (9),
- Erfassen mindestens eines Referenzbildes (11) aus jeder Referenzszene (9) unter Verwendung der Bilderfassungsvorrichtung (1),
- Auswahl aus einer Reihe von konfigurierbaren Transformationsmodellen und einer Reihe von synthetischen Bildern von:
- einem konfigurierbaren Transformationsmodell (12), das die Transformation des Referenzbildes (11) in ein transformiertes Bild (13) ermöglicht, und
- einem synthetischen Bild (207), das aus der Referenzszene (9) und/oder aus dem Referenzbild (11) erhalten wird,
derart, dass das synthetische Bild (207) dem transformierten Bild (13) ähnlich ist; das transformierte Bild (13) eine Differenz (14) zum synthetischen Bild (207) aufweist; die formatierten Informationen (15) zumindest teilweise aus den Parametern (P9) des gewählten konfigurierbaren Transformationsmodells (12) und/oder den Parametern (P9) des konfigurierbaren inversen Transformationsmodells (212) bestehen; wobei das konfigurierbare inverse Transformationsmodell (212) die Transformation des transformierten Bildes (13) in das Referenzbild (11) ermöglicht.

5. Verfahren nach Anspruch 4; wobei der zweite Berechnungsalgorithmus die Auswahl einer mathematischen Projektion (8) zur Erzeugung des synthetischen Bildes (207) aus der Bezugsszene (9) aus einer Reihe mathematischer Projektionen ermöglicht.

6. Verfahren nach einem der Ansprüche 1 bis 5; wobei das Verfahren einen dritten Algorithmus zur Berechnung der Differenzen (14) mit den folgenden Schritten umfasst:
- Berechnung der Differenzen (14) zwischen dem transformierten Bild (13) und dem synthetischen Bild,
- Zuordnung der Differenzen (14) zu den formatierten Informationen (15).

7. Verfahren nach Anspruch 2; wobei die Kette von Vorrichtungen (P3) mindestens eine Bilderfassungsvorrichtung (1) umfasst; wobei das Bild oder die Bilder Szenen zeigen, insbesondere animierte Szenen, die von einem Benutzer mittels der Bilderfassungsvorrichtung (1) erfasst wurden;
zur Erzeugung der formatierten Informationen (15) in Bezug auf Fehler (P5) der Bilderfassungsvorrichtung (1), insbesondere den Verzerrungseigenschaften, wobei das Verfahren einen vierten Algorithmus zur Berechnung der formatierten Informationen (15) mit den folgenden Schritten umfasst:
- Erstellung einer Klasse von synthetischen Bildern (7) durch bestimmte mathematische Projektionen von mindestens einer Referenzszene (9) auf einer Oberfläche,
- Erfassen mindestens eines Referenzbildes (11) aus jeder Referenzszene (9) unter Verwendung der Bilderfassungsvorrichtung (1),
- Auswahl aus einer Reihe von konfigurierbaren Transformationsmodellen desjenigen Modells, das es ermöglicht, das Referenzbild (11) in ein transformiertes Bild (13) zu transformieren, das der Klasse von synthetischen Bildern (7) der Referenzszene (9) ähnlich ist;
wobei das transformierte Bild (13) eine Differenz (14) zu der Klasse der synthetischen Bilder aufweist; wobei die formatierten Informationen (15) zumindest teilweise aus den Parametern (P9) der gewählten konfigurierbaren Transformationsmodelle (12) bestehen.

8. Verfahren nach einem der Ansprüche 1 bis 7; wobei das Verfahren derart ist, dass die Bilderfassungsvorrichtung (1) in der Kette von Vorrichtungen (P3) mindestens eine variable Eigenschaft (P6) nach Bild (103) aufweist, insbesondere die Brennweite und/oder die Öffnung; wobei ein Teil der formatierten Informationen (15) in Bezug auf Fehler (P5) der Bilderfassungsvorrichtung (1) die variable(n) Eigenschaft(en) (P6) darstellt; wobei jede variable Eigenschaft (P6) einem Wert zugeordnet werden kann, um eine Kombination (P120) zu bilden, die aus allen diesen variablen Eigenschaften (P6) und diesen Werten besteht;
wobei das Verfahren weiter den Schritt des Erzeugens des Teils der formatierten Informationen (15) für eine vorbestimmte Auswahl aus den Kombinationen (P120) umfasst; wobei die formatierten Informationen dieses Teils der so erhaltenen formatierten Informationen in den Bereich der formatierten Informationen (15) eingehen, die nachstehend als die formatierten gemessenen Informationen (P101) bezeichnet werden.

9. Verfahren nach Anspruch 8; wobei das Verfahren den Schritt des Erhalts des Teils der formatierten Informationen in Bezug auf eine beliebige Kombination (P120) aus den formatierten gemessenen Informationen (P101) umfasst; wobei dieser Teil der formatierten Informationen in Bezug auf eine beliebige Kombination (P120) nachstehend als formatierte erweiterte Informationen (P102) bezeichnet wird; wobei die formatierten Informationen die formatierten erweiterten Informationen (P102) anstelle der formatierten gemessenen Informationen (P101) umfassen.

10. Verfahren nach Anspruch 9; wobei die formatierten gemessenen Informationen (P101) und die formatierten erweiterten Informationen (P102) eine Interpolationsdifferenz (P121) aufweisen; wobei das Verfahren weiter den Schritt der Auswahl von null, einer oder mehreren der variablen Eigenschaften (P6) umfasst, derart, dass die Interpolationsdifferenz (P121) für die formatierten erweiterten Informationen (P102), die für die so gewählten variablen Eigenschaften (P6) erhalten wurden, kleiner als eine vorbestimmte Interpolationsschwelle ist.

11. Verfahren nach einem der Ansprüche 1 bis 10; wobei die Kette von Vorrichtungen (P3) mindestens ein Bildwiedergabemittel (19) umfasst; insbesondere einen Drucker, einen Anzeigebildschirm; wobei das Verfahren weiter dafür bestimmt ist, den Bildbearbeitungsmitteln (P1), insbesondere der Software, formatierte Informationen (15) in Bezug auf Fehler (P5) der Bildwiedergabemittel (19) zu liefern;
wobei das Verfahren weiter den Schritt des Erzeugens der Daten, die die Fehler (P5) der Bildwiedergabemittel (19) beschreiben, insbesondere die Verzerrungseigenschaften, umfasst; wobei die formatierten Informationen (15) auch die Daten, die die Fehler (P5) der Bildwiedergabemittel (19) beschreiben, umfassen.

12. Verfahren nach Anspruch 11; wobei die Kette von Vorrichtungen (P3) mindestens ein Bildwiedergabemittel (19) umfasst; zum Erzeugen der formatierten Informationen (15) in Bezug auf Fehler (P5) dieses Bildwiedergabemittels (19), insbesondere der Verzerrungseigenschaften, wobei das Verfahren einen sechsten Algorithmus zur Berechnung der formatierten Informationen (15) umfasst, der aus einer Reihe von konfigurierbaren Wiedergabetransformationsmodellen, aus einer Reihe von konfigurierbaren inversen Wiedergabetransformationsmodellen, aus einer Reihe von mathematischen Wiedergabeprojektionen, aus einer Reihe von Wiedergabereferenzen und aus einer Reihe von korrigierten Wiedergabereferenzbildern die Auswahl von Folgendem ermöglicht:
- eine Wiedergabereferenz (209), und
- ein korrigiertes Wiedergabereferenzbild (213), und
- ein konfigurierbares Wiedergabetransformationsmodell (97), das die Transformation der Wiedergabereferenz (209) in das korrigierte Wiedergabereferenzbild (213) ermöglicht, und
- ein konfigurierbares inverses Wiedergabetransformationsmodell (297), das die Transformation des korrigierten Wiedergabereferenzbilds (213) in die Wiedergabereferenz (209) ermöglicht, und
- eine mathematische Wiedergabeprojektion (96), die das Erzeugen eines synthetischen Wiedergabebildes (307) aus dem korrigierten Wiedergabereferenzbild (213) ermöglicht,
derart, dass das synthetische Wiedergabebild (307) der wiedergegebenen Referenz (211) ähnlich ist, die durch Wiedergabe der Wiedergabereferenz (209) mittels des Bildwiedergabemittels (19) erhalten wird;
wobei die wiedergegebene Referenz (211) eine Wiedergabedifferenz (214) zum synthetischen Wiedergabebild (307) aufweist;
wobei die formatierten Informationen (15) zumindest teilweise aus den Parametern des gewählten konfigurierbaren Wiedergabetransformationsmodells (97) und/oder den Parametern des gewählten konfigurierbaren inversen Wiedergabetransformationsmodells (297) bestehen.

13. Verfahren nach Anspruch 11 oder 12; wobei die Kette von Vorrichtungen (P3) mindestens ein Bildwiedergabemittel (19) umfasst; zum Erzeugen der formatierten Informationen (15) in Bezug auf Fehler (P5) des Bildwiedergabemittels (19), insbesondere der Verzerrungseigenschaften, wobei das Verfahren einen siebten Algorithmus zur Berechnung der formatierten Informationen (15) und die folgenden Schritte umfasst:
- Auswahl mindestens einer Wiedergabereferenz (209),
- Wiedergabe der Wiedergabereferenz (209) mittels des Bildwiedergabemittels (19) als eine wiedergegebene Referenz (211),
- Auswahl aus einer Reihe von konfigurierbaren Wiedergabetransformationsmodellen und einer Reihe von mathematischen Wiedergabeprojektionen von:
- einem konfigurierbaren Wiedergabetransformationsmodell (97), das die Transformation der Wiedergabereferenz (209) in ein korrigiertes Wiedergabereferenzbild (213) ermöglicht, und
- einer mathematischen Wiedergabeprojektion (96), die das Erzeugen eines synthetischen Wiedergabebildes (307) aus dem korrigierten Wiedergabereferenzbild (213) ermöglicht,
derart, dass das synthetische Wiedergabebild (307) der wiedergegebenen Referenz (211) ähnlich ist;
wobei die wiedergegebene Referenz (211) eine Wiedergabedifferenz (214) zum synthetischen Wiedergabebild (307) aufweist;
wobei die formatierten Informationen (15) zumindest teilweise aus den Parametern (P9) des gewählten konfigurierbaren Wiedergabetransformationsmodells (97) und/oder den Parametern (P9) des konfigurierbaren inversen Wiedergabetransformationsmodells (297) bestehen; wobei das konfigurierbare inverse Wiedergabetransformationsmodell (297) die Transformation des korrigierten Wiedergabereferenzbildes (213) in die Wiedergabereferenz (209) ermöglicht.

14. Verfahren nach Anspruch 11 oder 12; wobei die Kette von Vorrichtungen (P3) mindestens ein Bildwiedergabemittel (19) umfasst; zum Erzeugen der formatierten Informationen (15) in Bezug auf Fehler (P5) des Bildwiedergabemittels (19), insbesondere der Verzerrungseigenschaften, wobei das Verfahren einen achten Algorithmus zur Berechnung der formatierten Informationen (15) und die folgenden Schritte umfasst:
- Auswahl eines korrigierten Wiedergabereferenzbildes (213),
- Auswahl aus einer Reihe von konfigurierbaren Wiedergabetransformationsmodellen, einer Reihe von mathematischen Wiedergabeprojektionen, einer Reihe von Wiedergabereferenzen von:
- einer Wiedergabereferenz (209), und
- einem konfigurierbaren Wiedergabetransformationsmodell (97), das die Transformation der Wiedergabereferenz (209) in das korrigierte Wiedergabereferenzbild (213) ermöglicht, und
- einem inversen konfigurierbaren Wiedergabetransformationsmodell (297), das die Transformation des korrigierten Wiedergabereferenzbilds (213) in die Wiedergabereferenz (209) ermöglicht, und
- einer mathematischen
Wiedergabeprojektion (96), die das Erzeugen eines synthetischen Wiedergabebildes (307) aus dem korrigierten Wiedergabereferenzbild (213) ermöglicht,
derart, dass das synthetische Wiedergabebild (307) der wiedergegebenen Referenz (211) ähnlich ist, die durch Wiedergabe der Wiedergabereferenz (209) mittels des Bildwiedergabemittels (19) erhalten wird;
wobei die wiedergegebene Referenz (211) eine Wiedergabedifferenz (214) zum synthetischen Wiedergabebild (307) aufweist;
wobei die formatierten Informationen (15) zumindest teilweise aus den Parametern (P9) des gewählten konfigurierbaren Wiedergabetransformationsmodells (97) und den Parametern (P9) des gewählten konfigurierbaren inversen Wiedergabetransformationsmodells (297) bestehen.

15. Verfahren nach einem der Ansprüche 12 bis 14; wobei das Verfahren derart ist, dass das Bildwiedergabemittel (19) in der Kette von Vorrichtungen (P3) mindestens eine variable Eigenschaft je nach Bild aufweist, insbesondere die Brennweite und/oder die Öffnung; wobei ein Teil der formatierten Informationen (15) in Bezug auf Fehler (P5) des Bildwiedergabemittels (19) die variable(n) Wiedergabeeigenschaft(en) darstellt; wobei jede variable Wiedergabeeigenschaft einem Wert zugeordnet werden kann, um eine Wiedergabekombination zu bilden, die aus allen diesen variablen Wiedergabeeigenschaften und diesen Werten besteht;
wobei das Verfahren weiter den Schritt des Erzeugens des Teils der formatierten Informationen (15) für eine vorbestimmte Auswahl der Wiedergabekombinationen umfasst; wobei die so erhaltenen formatierten Informationen dieses Teils in den Bereich der formatierten Informationen (15) eingehen, die nachstehend als die formatierten gemessenen Wiedergabeinformationen bezeichnet werden.

16. Verfahren nach Anspruch 15; wobei das Verfahren den Schritt des Erhalts des Teils der formatierten Informationen (15) in Bezug auf eine beliebige Wiedergabekombination aus den formatierten gemessenen Wiedergabeinformationen umfasst; wobei der Teil der formatierten Informationen (15) in Bezug auf eine beliebige Wiedergabekombination nachstehend als formatierte erweiterte Wiedergabeinformationen bezeichnet wird; wobei die formatierten Informationen die formatierten erweiterten Wiedergabeinformationen anstelle der formatierten gemessenen Wiedergabeinformationen umfassen.

17. Verfahren nach Anspruch 16; wobei die formatierten gemessenen Wiedergabeinformationen und die formatierten erweiterten Wiedergabeinformationen eine Wiedergabeinterpolationsdifferenz aufweisen; wobei das Verfahren weiter den Schritt der Auswahl von null, einer oder mehreren der variablen Wiedergabeeigenschaften umfasst, sodass die Wiedergabeinterpolationsdifferenz für die formatierten erweiterten Wiedergabeinformationen, die für die so gewählten variablen Wiedergabeeigenschaften erhalten wurden, kleiner als eine vorbestimmte Wiedergabeinterpolationsschwelle ist.

18. Verfahren nach einem der Ansprüche 12 bis 17; wobei das Bildwiedergabemittel (19) einer Bilderfassungsvorrichtung (1) zugeordnet ist, um die wiedergegebene Referenz (211) aus der Wiedergabereferenz (209) in digitaler Form wiederzugeben; wobei das Verfahren derart ist, dass zur Erzeugung von formatierten Informationen (15) in Bezug auf Fehler (P5) des Bildwiedergabemittels (19) diese formatierten Informationen (15) in Bezug auf die Bilderfassungsvorrichtung (1) verwendet werden, die dem Bildwiedergabemittel (19) zugeordnet ist.

19. Verfahren nach einem der Ansprüche 1 bis 18; wobei die Kette von Vorrichtungen (P3) mindestens zwei Vorrichtungen umfasst; zum Erzeugen formatierter Informationen (15) in Bezug auf die Fehler (P5) der Vorrichtungen dieser Kette von Vorrichtungen (P3), wobei das Verfahren weiter die folgenden Schritte umfasst:
- den Schritt der Erzeugung der formatierten Informationen (15) in Bezug auf jede der Vorrichtungen dieser Kette von Vorrichtungen (P3),
- den Schritt des Kombinierens der formatierten Informationen (15) in Bezug auf jede der Vorrichtungen in der Kette von Vorrichtungen, um die formatierten Informationen (15) in Bezug auf die Kette von Vorrichtungen (P3) zu erhalten.

20. System zur Erzeugung von formatierten Informationen (15), die sich auf Fehler (P5) von Vorrichtungen in einer Kette von Vorrichtungen (P3) beziehen, die für Bildbearbeitungsmittel (P1), insbesondere Software, bestimmt sind, um die Qualität von Bildern, die von den Bildbearbeitungsmitteln (P1) bearbeitet werden, zu verändern; wobei die Kette von Vorrichtungen (P3) insbesondere mindestens eine Bilderfassungsvorrichtung (1) und/oder mindestens ein Bildwiedergabemittel (19) umfasst; wobei das System Mittel zur elektronischen Verarbeitung zur Erzeugung von Daten umfasst, die Fehler (P5) dieser Vorrichtungen in der Kette von Vorrichtungen (P3) beschreiben, wobei diese Daten nachstehend als formatierte Informationen (15) bezeichnet werden und es ermöglichen, einen ersten Algorithmus zur Berechnung der formatierten Informationen (15) einzusetzen; wobei der Berechnungsalgorithmus aus einer Reihe von konfigurierbaren Transformationsmodellen, aus einer Reihe von konfigurierbaren inversen Transformationsmodellen, aus einer Reihe von synthetischen Bildern, aus einer Reihe von Referenzszenen und aus einer Reihe von transformierten Bildern die Auswahl von Folgendem ermöglicht:
- eine Referenzszene (9), und
- ein transformiertes Bild (13), und
- ein konfigurierbares Transformationsmodell (12), das die Transformation des Referenzbildes (11), das durch Erfassen der Referenzszene (9) unter Verwendung der Bilderfassungsvorrichtung (1) erhalten wird, in das transformierte Bild (13) ermöglicht, und
- ein konfigurierbares inverses Transformationsmodell (212), das die Transformation des transformierten Bildes (13) in das Referenzbild (11) ermöglicht, und
- ein synthetisches Bild (207), das aus der Referenzszene (9) und/oder aus dem Referenzbild (11) erhalten wird,
derart, dass das transformierte Bild (13) dem synthetischen Bild (207) ähnlich ist; das transformierte Bild (13) eine Differenz (14) zum synthetischen Bild (207) aufweist; die formatierten Informationen (15) zumindest teilweise aus den Parametern des gewählten konfigurierbaren Transformationsmodells (12) und/oder den Parametern des gewählten konfigurierbaren inversen Transformationsmodells (212) bestehen.

21. System nach Anspruch 20; wobei die Kette von Vorrichtungen (P3) mindestens eine Bilderfassungsvorrichtung (1), insbesondere einen Scanner, umfasst; wobei das System insbesondere dazu bestimmt ist, formatierte Informationen (15) in Bezug auf Fehler (P5) der Bilderfassungsvorrichtung (1) zu erzeugen; wobei das System Mittel zur elektronischen Verarbeitung zur Erzeugung von Daten umfasst, die Fehler (P5) der Bilderfassungsvorrichtung (1) beschreiben, insbesondere die Bildschärfe-Eigenschaften; wobei die formatierten Informationen (15) auch die Daten umfassen, die die Fehler (P5) der Bilderfassungsvorrichtung (1) beschreiben.

22. System nach Anspruch 20; wobei die Mittel zur elektronischen Verarbeitung, die den ersten Berechnungsalgorithmus einsetzen, Berechnungsmittel zum Auswählen einer mathematischen Projektion (8) aus einer Reihe mathematischer Projektionen umfassen, die es ermöglicht, das synthetische Bild (207) aus der Referenzszene (9) zu erzeugen.

23. System nach einem der Ansprüche 20 bis 22; wobei die Kette von Vorrichtungen (P3) mindestens eine Bilderfassungsvorrichtung (1) umfasst; zum Erzeugen der formatierten Informationen (15) in Bezug auf Fehler (P5) der Bilderfassungsvorrichtung (1), insbesondere der Verzerrungseigenschaften, wobei die Mittel zur elektronischen Verarbeitung einen zweiten Algorithmus zur Berechnung der formatierten Informationen (15) einsetzen; wobei die Mittel zur elektronischen Verarbeitung den zweiten Berechnungsalgorithmus einsetzen, der Berechnungsmittel zum Auswählen mindestens einer Referenzszene (9) umfassen; wobei die Bilderfassungsvorrichtung (1) es ermöglicht, mindestens ein Referenzbild (11) von jeder Referenzszene (9) zu erfassen; wobei die Berechnungsmittel weiter aus einer Reihe von konfigurierbaren Transformationsmodellen und aus einer Reihe von synthetischen Bildern die Auswahl von Folgendem ermöglicht:
- ein konfigurierbares Transformationsmodell (12), das die Transformation des Referenzbildes (11) in ein transformiertes Bild (13) ermöglicht, und
- ein synthetisches Bild (207), das aus der Referenzszene (9) und/oder aus dem Referenzbild (11) erhalten wird;
wobei die Auswahl derart erfolgt, dass das synthetische Bild (207) dem transformierten Bild (13) ähnlich ist;
wobei das transformierte Bild (13) eine Differenz (14) zum synthetischen Bild (207) aufweist; wobei die formatierten Informationen (15) zumindest teilweise aus den Parametern (P9) des gewählten konfigurierbaren Transformationsmodells (12) und/oder den Parametern (P9) des konfigurierbaren inversen Transformationsmodells (212) bestehen; wobei das konfigurierbare inverse Transformationsmodell (212) die Transformation des transformierten Bildes (13) in das Referenzbild (11) ermöglicht.

24. System nach Anspruch 23; wobei die Berechnungsmittel es ermöglichen, den zweiten Berechnungsalgorithmus einzusetzen, der Berechnungsmittel zum Auswählen einer mathematischen Projektion (8) aus einer Reihe mathematischer Projektionen umfasst, die es ermöglicht, das synthetische Bild (207) aus der Referenzszene (9) zu erzeugen.

25. System nach einem der Ansprüche 20 bis 24; wobei die Mittel zur elektronischen Verarbeitung es ermöglichen, einen dritten Algorithmus zur Berechnung der Differenzen (14) einzusetzen, der Mittel zur Berechnung von Folgendem umfasst:
- Berechnung der Differenzen (14) zwischen dem transformierten Bild (13) und dem synthetischen Bild,
- Zuordnung der Differenzen (14) zu den formatierten Informationen (15).

26. System nach Anspruch 21; wobei das System derart ist, dass es zur Berechnung der formatierten Informationen (15) in Bezug auf eine Bilderfassungsvorrichtung (1) in der Kette von Vorrichtungen (P3) weiter mindestens eine Referenzszene (9) umfasst; wobei die Bilderfassungsvorrichtung (1) ein Referenzbild (11) für jede Referenzszene (9) erstellt; zur Berechnung der formatierten Informationen (15) in Bezug auf die Bilderfassungsvorrichtung (1), wobei das System weiter Berechnungs- und Bearbeitungsmittel umfasst zur:
- Erstellung einer Klasse von synthetischen Bildern durch bestimmte mathematische Projektionen von mindestens einer Referenzszene (9) auf einer Oberfläche,
- Auswahl aus einer Reihe von konfigurierbaren Transformationsmodellen desjenigen Modells, das es ermöglicht, das Referenzbild (11) in ein transformiertes Bild (13) zu transformieren, das der Klasse von synthetischen Bildern der Referenzszene (9) ähnlich ist;
wobei das transformierte Bild (13) eine Differenz (14) zu der Klasse der synthetischen Bilder aufweist; wobei die formatierten Informationen (15) zumindest teilweise aus den Parametern der gewählten konfigurierbaren Transformationsmodelle bestehen.

27. System nach einem der Ansprüche 20 bis 26; wobei das System derart ist, dass die Bilderfassungsvorrichtung (1) in der Kette von Vorrichtungen (P3) mindestens eine variable Eigenschaft je nach Bild aufweist, insbesondere die Brennweite und/oder die Öffnung; wobei ein Teil der formatierten Informationen (15) in Bezug auf Fehler (P5) der Bilderfassungsvorrichtung (1) die variable(n) Eigenschaft(en) darstellt; wobei jede variable Eigenschaft einem Wert zugeordnet werden kann, um eine Kombination zu bilden, die aus allen diesen variablen Eigenschaften und diesen Werten besteht;
wobei das System weiter Mittel zur elektronischen Verarbeitung zur Erzeugung des Teils der formatierten Informationen (15) für eine vorbestimmte Auswahl der Kombinationen umfasst; wobei die so erhaltenen formatierten Informationen dieses Teils der formatierten Informationen in den Bereich der formatierten Informationen (15) eingehen, die nachstehend als die formatierten gemessenen Informationen (P101) bezeichnet werden.

28. System nach Anspruch 27; wobei die Mittel zur elektronischen Verarbeitung es ermöglichen, den Teil der formatierten Informationen (15) in Bezug auf eine beliebige Kombination aus den formatierten gemessenen Informationen (P101) zu erhalten; wobei dieser Teil der formatierten Informationen (15) in Bezug auf eine beliebige Kombination nachstehend als formatierte erweiterte Informationen (P102) bezeichnet wird; wobei die formatierten Informationen die formatierten erweiterten Informationen (P102) anstelle der gemessenen formatierten Informationen (P101) umfassen.

29. System nach Anspruch 28; wobei die formatierten gemessenen Informationen (P101) und die formatierten erweiterten Informationen (P102) eine Interpolationsdifferenz aufweisen; wobei das System weiter Auswahlmittel zur Auswahl von null, einer oder mehreren der variablen Eigenschaften (P6) umfasst, derart, dass die Interpolationsdifferenz für die formatierten erweiterten Informationen (P102), die für die so gewählten variablen Eigenschaften (P6) erhalten wurden, kleiner als eine vorbestimmte Interpolationsschwelle ist.

30. System nach einem der Ansprüche 20 bis 29; wobei die Kette von Vorrichtungen (P3) mindestens ein Bildwiedergabemittel (19) umfasst, insbesondere einen Drucker, einen Anzeigebildschirm; wobei das System weiter dafür bestimmt ist, den Bildbearbeitungsmitteln (P1), insbesondere der Software, formatierte Informationen (15) in Bezug auf Fehler (P5) der Bildwiedergabemittel (19) zu liefern;
wobei das System weiter Mittel zur elektronischen Verarbeitung zum Erzeugen der Daten umfasst, die die Fehler (P5) der Bildwiedergabemittel (19) beschreiben, insbesondere die Verzerrungseigenschaften; wobei die formatierten Informationen (15) auch die Daten, die die Fehler (P5) der Bildwiedergabemittel (19) beschreiben, umfassen.

31. System nach Anspruch 30; wobei die Kette von Vorrichtungen (P3) mindestens ein Bildwiedergabemittel (19) umfasst; zum Erzeugen der formatierten Informationen (15) in Bezug auf Fehler (P5) dieses Bildwiedergabemittels (19), insbesondere der Verzerrungseigenschaften, wobei das System Berechnungsmittel umfasst für die Auswahl aus einer Reihe von konfigurierbaren Wiedergabetransformationsmodellen, aus einer Reihe von konfigurierbaren inversen Wiedergabetransformationsmodellen, aus einer Reihe von mathematischen Wiedergabeprojektionen, aus einer Reihe von Wiedergabereferenzen und aus einer Reihe von korrigierten Wiedergabereferenzbildern von:
- einer Wiedergabereferenz (209), und
- einem korrigierten Wiedergabereferenzbild (213), und
- einem konfigurierbaren Wiedergabetransformationsmodell (97), das die Transformation der Wiedergabereferenz (209) in das korrigierte Wiedergabereferenzbild (213) ermöglicht, und
- einem inversen konfigurierbaren Wiedergabetransformationsmodell (297), das die Transformation des korrigierten Wiedergabereferenzbilds (213) in die Wiedergabereferenz (209) ermöglicht, und
- einer mathematischen Wiedergabeprojektion (96), die das Erzeugen eines synthetischen Wiedergabebildes (307) aus dem korrigierten Wiedergabereferenzbild (213) ermöglicht;
wobei die Auswahl derart getroffen wird, dass das synthetische Wiedergabebild (307) der wiedergegebenen Referenz (211) ähnlich ist, die durch Wiedergabe der Wiedergabereferenz (209) mittels des Bildwiedergabemittels (19) erhalten wird; wobei die wiedergegebene Referenz (211) eine Wiedergabedifferenz (214) zum synthetischen Wiedergabebild (307) aufweist; wobei die formatierten Informationen (15) zumindest teilweise aus den Parametern des gewählten konfigurierbaren Wiedergabetransformationsmodells (97) und/oder den Parametern des gewählten konfigurierbaren inversen Wiedergabetransformationsmodells (297) bestehen.

32. System nach Anspruch 30 oder 31; wobei die Kette von Vorrichtungen (P3) mindestens ein Bildwiedergabemittel (19) umfasst; zum Erzeugen der formatierten Informationen (15) in Bezug auf Fehler (P5) dieses Bildwiedergabemittels (19), insbesondere der Verzerrungseigenschaften, wobei das System Berechnungsmittel umfasst für die Auswahl mindestens einer Wiedergabereferenz (209); wobei das Bildwiedergabemittel (19) die Wiedergabe dieser Wiedergabereferenz (209) als eine wiedergegebene Referenz (211) ermöglicht; wobei die Berechnungsmittel weiter aus einer Reihe von konfigurierbaren Wiedergabetransformationsmodellen und aus einer Reihe von mathematischen Wiedergabeprojektionen die Auswahl von Folgendem ermöglichen:
- ein konfigurierbares Wiedergabetransformationsmodell (97), das die Transformation der Wiedergabereferenz (209) in ein korrigiertes Wiedergabereferenzbild (213) ermöglicht, und
- eine mathematische Wiedergabeprojektion (96), die das Erzeugen eines synthetischen Wiedergabebildes (307) aus dem korrigierten Wiedergabereferenzbild (213) ermöglicht;
wobei die Auswahl derart erfolgt, dass das synthetische Wiedergabebild (307) der wiedergegebenen Referenz (211) ähnlich ist; wobei die wiedergegebene Referenz (211) eine Wiedergabedifferenz (214) zum synthetischen Wiedergabebild (307) aufweist; wobei die formatierten Informationen (15) zumindest teilweise aus den Parametern (P9) des gewählten konfigurierbaren Wiedergabetransformationsmodells (97) und/oder den Parametern (P9) des konfigurierbaren inversen Wiedergabetransformationsmodells (297) bestehen; wobei das konfigurierbare inverse Wiedergabetransformationsmodell (297) die Transformation des korrigierten Wiedergabereferenzbildes (213) in die Wiedergabereferenz (209) ermöglicht.

33. System nach Anspruch 30 oder 31; wobei die Kette von Vorrichtungen (P3) mindestens ein Bildwiedergabemittel (19) umfasst; zum Erzeugen der formatierten Informationen (15) in Bezug auf Fehler (P5) dieses Bildwiedergabemittels (19), insbesondere der Verzerrungseigenschaften, wobei das System Berechnungsmittel für die Auswahl eines korrigierten Wiedergabereferenzbildes (213) umfasst; wobei die Berechnungsmittel weiter aus einer Reihe von konfigurierbaren Wiedergabetransformationsmodellen, aus einer Reihe von mathematischen Wiedergabeprojektionen, aus einer Reihe von Wiedergabereferenzen die Auswahl von Folgendem ermöglichen:
- ein konfigurierbares Wiedergabetransformationsmodell (97), das die Transformation einer bestimmten Wiedergabereferenz (209) in das korrigierte Wiedergabereferenzbild (213) ermöglicht, und
- einem konfigurierbaren inversen Wiedergabetransformationsmodell (297), das die Transformation des korrigierten Wiedergabereferenzbildes (213) in die Wiedergabereferenz (209) ermöglicht, und
- einer mathematischen Wiedergabeprojektion (96), die das Erzeugen eines synthetischen Wiedergabebildes (307) aus dem korrigierten Wiedergabereferenzbild (213) ermöglicht;
wobei die Auswahl derart getroffen wird, dass das synthetische Wiedergabebild (307) der wiedergegebenen Referenz (211) ähnlich ist, die durch Wiedergabe der Wiedergabereferenz (209) mittels des Bildwiedergabemittels (19) erhalten wird; wobei die wiedergegebene Referenz (211) eine Wiedergabedifferenz (214) zum synthetischen Wiedergabebild (307) aufweist; wobei die formatierten Informationen (15) zumindest teilweise aus den Parametern des gewählten konfigurierbaren Wiedergabetransformationsmodells (97) und/oder den Parametern des gewählten konfigurierbaren inversen Wiedergabetransformationsmodells (297) bestehen.

34. System nach einem der Ansprüche 31 bis 33; wobei das Verfahren derart ist, dass das Bildwiedergabemittel (19) der Kette von Vorrichtungen (P3) mindestens eine variable Eigenschaft je nach Bild aufweist, insbesondere die Brennweite und/oder die Öffnung; wobei ein Teil der formatierten Informationen (15) in Bezug auf Fehler (P5) des Bildwiedergabemittels (19) die variable(n) Wiedergabeeigenschaft(en) darstellt; wobei jede variable Wiedergabeeigenschaft einem Wert zugeordnet werden kann, um eine Wiedergabekombination zu bilden, die aus allen diesen variablen Wiedergabeeigenschaften und diesen Werten besteht; wobei das System weiter Mittel zur elektronischen Verarbeitung zur Erzeugung des Teils der formatierten Informationen (15) für eine vorbestimmte Auswahl der Wiedergabekombinationen umfasst; wobei die so erhaltenen formatierten Informationen dieses Teils in den Bereich der formatierten Informationen (15) eingehen, die nachstehend als die formatierten gemessenen Wiedergabeinformationen bezeichnet werden.

35. System nach Anspruch 34; wobei das System Mittel zur elektronischen Verarbeitung zum Erhalt des Teils der formatierten Informationen (15) in Bezug auf eine beliebige Wiedergabekombination aus den formatierten gemessenen Wiedergabeinformationen umfasst; wobei dieser Teil der formatierten Informationen (15) in Bezug auf eine beliebige Wiedergabekombination nachstehend als formatierte erweiterte Wiedergabeinformationen bezeichnet wird; wobei die formatierten Informationen die formatierten erweiterten Wiedergabeinformationen anstelle der formatierten gemessenen Wiedergabeinformationen umfassen.

36. System nach Anspruch 35; wobei die formatierten gemessenen Wiedergabeinformationen und die formatierten erweiterten Wiedergabeinformationen eine Wiedergabeinterpolationsdifferenz aufweisen; wobei das System weiter Auswahlmittel zur Auswahl von null, einer oder mehreren der variablen Wiedergabeeigenschaften umfasst, sodass die Wiedergabeinterpolationsdifferenz für die formatierten erweiterten Wiedergabeinformationen, die für die so gewählten variablen Wiedergabeeigenschaften erhalten wurden, kleiner als eine vorbestimmte Wiedergabeinterpolationsschwelle ist.

37. System nach einem der Ansprüche 31 bis 36; wobei das Wiedergabemittel einer Bilderfassungsvorrichtung (1) zugeordnet ist, um die wiedergegebene Referenz (211) aus der Wiedergabereferenz (209) in digitaler Form wiederzugeben; wobei das System Mittel zur elektronischen Verarbeitung zur Erzeugung von formatierten Informationen (15) in Bezug auf Fehler (P5) des Wiedergabemittels umfasst, wobei sie diese formatierten Informationen (15) in Bezug auf die Bilderfassungsvorrichtung (1) verwenden, die diesem Wiedergabemittel zugeordnet ist.

38. System nach einem der Ansprüche 20 bis 37; wobei die Kette von Vorrichtungen (P3) mindestens zwei Vorrichtungen umfasst; zur Erzeugung von formatierten Informationen (15) in Bezug auf Fehler (P5) der Vorrichtungen in der Kette von Vorrichtungen (P3), wobei das System weiter Mittel zur elektronischen Verarbeitung zur Erzeugung formatierter Informationen (15) in Bezug auf jede der Vorrichtungen in der Kette von Vorrichtungen (P3) und zum Kombinieren der formatierten Informationen (15) in Bezug auf jede der Vorrichtungen in der Kette von Vorrichtungen umfasst, um die formatierten Informationen (15) in Bezug auf diese Kette von Vorrichtungen (P3) zu erhalten.

## Claims

1. Process for producing formatted information (15) relating to defects (P5) of the devices of a chain of devices (P3) used for an image processing means (P1), in particular software, for the purpose of modifying the quality of images (103) processed by said image processing means (P1); said chain of devices (P3) comprising in particular at least one image capture device (1) and/or at least one image restitution means (19); said process comprising the step of generating data characterising defects (P5) of said devices of said chain of devices (P3), said data being described hereinafter as formatted information (15), and comprising a first calculation algorithm of said formatted information (15) used to select, from a set of configurable transformation models, from a set of configurable reverse transformation models, from a set of synthesis images, from a set of reference scenes, and from a set of transformed images:
- a reference scene (9), and
- a transformed image (13), and
- a configurable transformation model (12) that can be used to transform the reference image (11), obtained by capturing said reference scene (9) using said image capture device (1) into said transformed image (13), and
- a reverse configurable transformation model (212) that can be used to transform said transformed image (13) into said reference image (11), and
- a synthesis image (207) obtained from said reference scene (9) and/or obtained from said reference image (11),
so that said transformed image (13) is similar to said synthesis image (207);
said transformed image (13) having a deviation (14) from said synthesis image (207); said formatted information (15) being, at least in part, composed of the parameters (P9) of said selected configurable transformation model (12) and/or the parameters (P9) of said selected reverse configurable transformation model (212).

2. Process according to claim 1; said chain of devices (P3) comprising at least one image capture device (1), in particular a scanner; said process being more particularly, intended to generate formatted information (15) relating to the defects (P5) of said image capture device (1); said process also comprising the step of generating data characterising defects (P5) of said image capture device (1), in particular characteristics relating to image sharpness; said formatted information (15) also comprising said data characterising said defects (P5) of said image capture device (1).

3. Process according to claim 2; said first calculation algorithm being used to select from a set of mathematical projections, a mathematical projection (8) used to create said synthesis image (207) from said reference scene (9).

4. Process according to claim 2 or 3; said chain of devices (P3) comprising at least one image capture device (1); for the purpose of generating said formatted information (15) relating to the defects (P5) of said image capture device (1), in particular the distortion characteristics, said process comprising a second algorithm for the calculation of said formatted information (15) that comprising the steps of:
- selecting at least one reference scene (9),
- capturing at least one reference image (11) of each reference scene (9) using said image capture device (1),
- selecting from a set of configurable transformation models and from a set of synthesis images:
- a configurable transformation model (12) that can be used to transform said reference image (11) into a transformed image (13), and
- a synthesis image (207) obtained from said reference scene (9) and/or obtained from said reference image (11),
so that said synthesis image (13) is similar to said transformed image (207);
said transformed image (13) having a deviation (14) from said synthesis image (207); said formatted information (15), at least in part, composed of the parameters (P9) of said selected configurable transformation model (12) and/or the parameters (P9) of said reverse configurable transformation model (212); said reverse configurable transformation model (212) being used to transform said transformed image (13) into said reference image (11).

5. Process according to claim 4; said second calculation algorithm being used to select from a set of mathematical projections, a mathematical projection (8) used to create said synthesis image (207) from said reference scene (9).

6. Process according to any of claims 1 to 5; said process comprising a third algorithm for calculating said deviations (14), featuring the steps of:
- calculating said deviations (14) between said transformed image (13) and said synthesis image,
- associating said deviations (14) with said formatted information (15).

7. Process according to claim 2; said chain of devices (P3) comprising at least one image capture device (1); said image(s) being scene images, in particular of animated scenes captured by a user with said image capture device (1);
for the purpose of generating said formatted information (15) relating to the defects (P5) of said image capture device (1), in particular the distortion characteristics, said process comprising a fourth algorithm for calculating said formatted information (15), comprising the steps of:
- generating a class of synthesis images (7) from given mathematical projections, of at least one reference scene (9) on a surface,
- capturing at least one reference image (11) of each reference scene (9) using said image capture device (1),
- selecting from a set of configurable transformation models the one that will be used to transform said reference image (11) into a transformed image (13) similar to said class of synthesis images (7) of said reference scene (9);
said transformed image (13) having a deviation (14) from the class of synthesis images; said formatted information (15) being, at least in part, composed of the parameters (P9) of said selected configurable transformation models (12).

8. Process according to any of claims 1 to 7; said process being such that said image capture device (1) of said chain of devices (P3) has at least one variable characteristic (P6) depending on the image (103), in particular the focal length and/or the aperture; a fraction of said formatted information (15) relating to the defects (P5) of said image capture device (1) having said variable characteristic(s) (P6); each variable characteristic (P6) being able to be associated with a value to form a combination (P120) consisting of all said variable characteristics (P6) and said values;
said process also comprising a step to generate said fraction of said formatted information (15) for a predetermined selection of said combinations (P120); said formatted information of said fraction of formatted information, thus obtained, being included in said formatted information field (15), hereinafter described as measured formatted information (P101).

9. Process according to claim 8; said process comprising a step to obtain said fraction of said formatted information relating to any combination (P120), from the measured formatted information (P101); said fraction of said formatted information relating to any combination (P120) being hereinafter described as extended formatted information (P102); said formatted information comprising said extended formatted information (P102), instead of said measured formatted information (P101).

10. Process according to claim 9; said measured formatted information (P101) and said extended formatted information (P102) having an interpolation deviation (P121);
said process comprising, in addition to the zero selection step, one or more said variable characteristics (P6), so that said interpolation deviation (P121), for said extended formatted information (P102) obtained for said variable characteristics (P6) thus selected, is below a predetermined interpolation threshold.

11. Process according to any of claims 1 to 10; said chain of devices (P3) comprising at least one image restitution means (19), in particular a printer or a display screen; said process further being designed to provide, to image processing means (P1), in particular software, formatted information (15) relating to the defects (P5) of said image restitution means (19);
said process also comprising the step of generating data characterising the defects (P5) of the image restitution means (19), in particular the distortion characteristics; said formatted information (15) also comprising said data characterising the defects (P5) of the image restitution means (19).

12. Process according to claim 11; said chain of devices (P3) comprising at least the image restitution means (19); for the purpose of generating said formatted information (15) relating to the defects (P5) of said image restitution means (19), in particular the distortion characteristics, said process comprising a sixth algorithm for calculating said formatted information (15) that can be used to select, from a set of restitution configurable transformation models, from a set of reverse restitution configurable transformation models, from a set of restitution mathematical projections, from a set of restitution references, and from a set of restitution corrected reference images:
- a restitution reference (209), and
- a restitution corrected reference image (213), and
- a restitution configurable transformation model (97) used to transform said restitution reference (209) into said restitution corrected reference image (213), and
- a reverse restitution configurable transformation model (297) used to transform said restitution corrected reference image (213) into said restitution reference (209), and
- a restitution mathematical projection (96) used to obtain a restitution synthesis image (307) from said restitution corrected reference image (213),
so that said restitution synthesis image (307) is similar to the restored reference (211) obtained by restitution of said restitution reference (209), by means of said image restitution means (19);
said restored reference (211) having a restitution deviation (214) from said restitution synthesis image (307);
said formatted information (15) being at least partially composed of the parameters of said selected restitution configurable transformation model (97) and/or the parameters of said selected reverse restitution configurable transformation model (297);

13. Process according to claim 11 or 12; said chain of devices (P3) comprising at least one image restitution means (19); for the purpose of generating said formatted information (15) relating to the defects (P5) of said image restitution means (19), in particular the distortion characteristics, said process comprises a seventh algorithm for calculating said formatted information (15), that comprising the steps of:
- selecting at least one restitution reference (209),
- restoring said restitution reference (209), using said image restitution means (19), as a restored reference (211),
- selecting from a set of restitution configurable transformation models and from a set of restitution mathematical projections:
- a restitution configurable transformation model (97) that can be used to transform said restitution reference (209) into a restitution corrected reference image (213), and
- a restitution mathematical projection (96) that can be used to generate a restitution synthesis image (307) from said restitution corrected reference image (213),
so that said restitution synthesis image (307) is similar to said restored reference (211);
said restored reference (211) having a restitution deviation (214) from said restitution synthesis image (307);
said formatted information (15) being, at least partially, composed of the parameters (P9) of said selected restitution configurable transformation model (97) and/or the parameters (P9) of the reverse restitution configurable transformation model (297); said reverse restitution configurable transformation model (297) being able to be used to transform said restitution corrected reference image (213) into said restitution reference (209).

14. Process according to claim 11 or 12; said chain of devices (P3) comprising at least one image restitution means (19); for the purpose of generating said formatted information (15) relating to the defects (P5) of said image restitution means (19), in particular the distortion characteristics, said process comprising an eighth algorithm for calculating said formatted information (15) that comprising the steps of:
- selecting a restitution corrected reference image (213),
- selecting from a set of restitution configurable transformation models, from a set of restitution mathematical projections, from a set of restitution references:
- a restitution reference (209), and
- a restitution configurable transformation model (97) that can be used to transform said restitution reference (209) into said restitution corrected reference image (213), and
- a reverse restitution configurable transformation model (297) that can be used to transform said restitution corrected reference image (213) into said restitution reference (209), and
- a restitution mathematical projection (96) that can be used to generate a restitution synthesis image (307) from said restitution corrected reference image (213),
so that said restitution synthesis image (307) is similar to the restored reference (211) obtained by restitution of said restitution reference (209), by means of said image restitution means (19);
said restored reference (211) having a restitution deviation (214) from said restitution synthesis image (307);
said formatted information (15) being, at least partially, composed of the parameters (P9) of said selected restitution configurable transformation model (97) and the parameters (P9) of said selected reverse restitution configurable transformation model (297).

15. Process according to any of claims 12 to 14; said process being such that said image restitution means (19) of said chain of devices (P3) has at least one restitution variable characteristic depending on the image, in particular the focal length and/or the aperture; a fraction of said formatted information (15) relating to the defects (P5) of said image restitution means (19) and having said restitution variable characteristic(s); each restitution variable characteristic being able to be associated with a value to form a restitution combination consisting of all said restitution variable characteristics and said values;
said process also comprising the step for generating said fraction of said formatted information (15) for a predetermined selection of said restitution combinations;
said formatted information of said fraction, thus obtained, being included in the field of formatted information (15), hereinafter described as restitution measured formatted information.

16. Process according to claim 15; said process comprising the step of obtaining said fraction of said formatted information (15) relating to any restitution combination, from the restitution measured formatted information; said fraction of said formatted information (15) relating to any restitution combination being hereinafter described as restitution extended formatted information; said formatted information comprising said restitution extended formatted information instead of said restitution measured formatted information.

17. Process according to claim 16; said restitution measured formatted information and said restitution extended formatted information having a restitution interpolation deviation; said process comprising, in addition to the zero selection step, one or more of said restitution variable characteristics, so that said restitution interpolation deviation, for the restitution extended formatted information obtained for said restitution variable characteristics thus selected, is below a predetermined restitution interpolation threshold.

18. Process according to any of claims 12 to 17; said image restitution means (19) being associated with an image capture device (1) for the purpose of restoring, in a digital format, said restored reference (211) from said restitution reference (209); said process being such that, for the purpose of generating the formatted information (15) relating to the defects (P5) of said image restitution means (19), said formatted information (15) relating to said image capture device (1) associated with said image restitution means (19) is used.

19. Process according to any of claims 1 to 18; said chain of devices (P3) comprising at least two devices; for the purpose of generating formatted information (15) relating to the defects (P5) of the devices of said chain of devices (P3), said process also comprising the following steps:
- the step of generating formatted information (15) relating to each device of said chain of devices (P3),
- the step of combining the formatted information (15) relating to each device of said chain of devices, to obtain said formatted information (15) relating to said chain of devices (P3).

20. System for generating formatted information (15) relating to the defects (P5) of the devices of a chain of devices (P3) used for image processing means (P1), in particular software, for the purpose of modifying the quality of the images processed by said image processing means (P1); said chain of devices (P3) comprising in particular at least one image capture device (1) and/or at least one image restitution means (19); said system comprising data processing means for generating data characterising defects (P5) of said devices of said chain of devices (P3), said data being described hereinafter as formatted information (15), and which can be used to implement a first algorithm for calculating said formatted information; said calculation algorithm being able to be used to select from a set of configurable transformation models, from a set of reverse configurable transformation models, from a set of synthesis images, from a set of reference scenes and from a set of transformed images:
- a reference scene (9), and
- a transformed image (13), and
- a configurable transformation model (12) that can be used to transform the reference image (11), obtained by capturing said reference scene (9) using said image capture device (1), into said transformed image (13), and
- a reverse configurable transformation model (212) that can be used to transform said transformed image (13) into said reference image (11), and
- a synthesis image (207) obtained from said reference scene (9) and/or obtained from said reference image (11),
so that said transformed image (13) is similar to said synthesis image (207);
said transformed image (13) has a deviation (14) from said synthesis image (207);
said formatted information (15) being, at least in part, composed of the parameters of said selected configurable transformation model (12) and/or the parameters of said selected reverse configurable transformation model (212).

21. System according to claim 20; said chain of devices (P3) comprising at least one image capture device (1), in particular a scanner; said process is, more particularly, configured to generate formatted information (15) relating to the defects (P5) of said image capture device (1); said process also comprising the step of generating data characterising the defects (P5) of said image capture device (1), in particular characteristics relating to image sharpness; said formatted information (15) also comprising said data characterising said defects (P5) of said image capture device (1).

22. System according to claim 20; said data processing means implementing a first calculation algorithm comprising calculation means that can be used to select from a set of mathematical projections, a mathematical projection (8) used to create said synthesis image (207) from said reference scene (9).

23. System according to any of claims 20 to 22; said chain of devices (P3) comprising at least one image capture device (1); for the purpose of generating said formatted information (15) relating to the defects (P5) of said image capture device (1), in particular the characteristics relating to image distortion, said data processing means implementing a second algorithm for the calculation of said formatted information (15); said data processing means implementing said second calculation algorithm that comprising calculation means for selecting at least one reference scene (9); said image capture device (1) making it possible to capture at least one reference image (11) of each reference scene (9); in addition, said calculation means can be used to select, from a set of configurable transformation models and from a set of synthesis images:
- a configurable transformation model (12) that can be used to transform said reference image (11) into a transformed image (13), and
- a synthesis image (207) obtained from said reference scene (9) and/or obtained from said reference image (11),
said selection being conducted so that said synthesis image (207) is similar to said transformed image (13);
said transformed image (13) having a deviation (14) from said synthesis image (207); said formatted information (15) being, at least in part, composed of the parameters (P9) of said selected configurable transformation model (12) and/or the parameters (P9) of said reverse configurable transformation model (212); said configurable reverse transformation model (212) being used to transform said transformed image (13) into said reference image (11).

24. System according to claim 23; said calculation means being used to implement said second calculation algorithm comprising calculation means to select from a set of mathematical projections, a mathematical projection (8) used to generate said synthesis image (207) from said reference scene (9).

25. System according to any of claims 20 to 24; said data processing means being able to be used to implement a third algorithm for calculating said deviations (14) comprising the calculation means for:
- calculating said deviations (14) between said transformed image (13) and said synthesis image,
- associating said deviations (14) with said formatted information (15).

26. System according to claim 21; said system being such that, for the purpose of calculating said formatted information (15) relating to an image capture device (1) of said chain of devices (P3), said system further comprises at least one reference scene (9); said image capture device (1) generating a reference image (11) for each reference scene (9); for the purpose of calculating said formatted information (15) relating to said image capture device (1), said system also comprising calculation and processing means for:
- generating a class of synthesis images from given mathematical projections, of at least one reference scene (9) on a surface,
- selecting from a set of configurable transformation models the one that will be used to transform said reference image (11) into a transformed image (13) similar to said class of synthesis images of said reference scene (9);
said transformed image (13) having a deviation (14) from said class of synthesis images; said formatted information (15) being, at least in part, composed of the parameters of said selected configurable transformation models.

27. System according to any of claims 20 to 26; said system being such that said image capture device (1) of said chain of devices (P3) has at least one variable characteristic depending on the image, in particular the focal length and/or the aperture; a fraction of said formatted information (15) relating to defects (P5) of said image capture device (1) that has said variable characteristic(s); each variable characteristic (P6) being able to be associated with a value to form a combination consisting of all said variable characteristics and said values;
said system also comprising data processing means to generate said fraction of said formatted information (15) for a predetermined selection of said combinations; said formatted information of said fraction of formatted information, thus obtained, being included in the field of formatted information (15), hereinafter described as measured formatted information (P101).

28. System according to claim 27; said data processing means being able to be used to obtain said fraction of said formatted information (15) relating to any given combination, from measured formatted information (P101); said fraction of said formatted information (15) relating to any given combination being hereinafter described as extended formatted information (P102); said formatted information comprising said extended formatted information (P102) instead of said measured formatted information (P101).

29. System according to claim 28; said measured formatted information (P101) and said extended formatted information (P102) having an interpolation deviation; said system comprising, in addition to the zero-selection means, one or more of said variable characteristics (P6), so that said interpolation deviation, for said extended formatted information (P102) obtained for said variable characteristics (P6) thus obtained, is below a predetermined interpolation threshold.

30. System according to any of claims 20 to 29; said chain of devices (P3) comprising at least one image restitution means (19), in particular a printer or a display screen; said system being intended, in addition, to provide, to image processing means (P1), in particular software, formatted information (15) relating to the defects (P5) of said image restitution means (19);
said system also comprising data processing means to generate data characterising defects (P5) of the image restitution means (19), in particular the distortion characteristics; said formatted information (15) also comprising said data characterising the defects (P5) of the image restitution means (19).

31. System according to claim 30; said chain of devices (P3) comprising at least one image restitution means (19); for the purpose of generating said formatted information (15) relating to the defects (P5) of said image restitution means (19), in particular the distortion characteristics, said system comprising calculation means for selecting from a set of restitution configurable transformation models, from a set of reverse restitution configurable transformation models, from a set of restitution mathematical projections, from a set of restitution references, and from a set of restitution corrected reference images:
- a restitution reference (209), and
- a restitution corrected reference image (213), and
- a restitution configurable transformation model (97) used to transform said restitution reference (209) into said restitution corrected reference image (213), and
- a reverse restitution configurable transformation model (297) used to transform said restitution corrected reference image (213) into said restitution reference (209), and
- a restitution mathematical projection (96) used to obtain a restitution synthesis image (307) from said restitution corrected reference image (213);
said selection being made so that said restitution synthesis image (307) is similar to the restored reference (211) obtained by restitution of said restitution reference (209), by means of said image restitution means (19); said restored reference (211) having a restitution deviation (214) from said restitution synthesis image (307); said formatted information (15) being at least partially composed of the parameters of said selected restitution configurable transformation model (97) and/or the parameters of said selected reverse restitution configurable transformation model (297);

32. System according to claim 30 or 31; said chain of devices (P3) comprising at least one image restitution means (19); for the purpose of generating said formatted information (15) relating to the defects (P5) of said image restitution means (19), in particular the distortion characteristics, said system comprising calculation means used to select at least one restitution reference (209); said image restitution means (19) making it possible to restore said restitution reference (209) as a restored reference (211); said calculation means also being able to be used to select from a set of restitution configurable transformation models and from a set of restitution mathematical projections:
- a restitution configurable transformation model (97) that can be used to transform said restitution reference (209) into said restitution corrected reference image (213), and
- a restitution mathematical projection (96) that can be used to generate a restitution synthesis image (307) from said restitution corrected reference image (213); said selection being made so that said restitution synthesis image (307) is similar to the restored reference (211); said restored reference (211) having a restitution deviation (214) from said restitution synthesis image (307); said formatted information (15) being at least partially composed of the parameters (P9) of said selected restitution configurable transformation model (97) and/or the parameters (P9) of said selected reverse restitution configurable transformation model (297); said reverse restitution configurable transformation model (297) being able to be used to transform said restitution corrected reference image (213) into said restitution reference (209).

33. System according to claim 30 or 31; said chain of devices (P3) comprising at least one image restitution means (19); for the purpose of generating said formatted information (15) relating to the defects (P5) of said image restitution means (19), in particular the distortion characteristics, said system comprising calculation means to select a restitution corrected reference image (213); said calculation means also being able to be used to select from a set of restitution configurable transformation models, from a set of restitution mathematical projections, from a set of restitution references:
- a restitution configurable transformation model (97) that can be used to transform a given restitution reference (209) into said restitution corrected reference image (213), and
- a reverse restitution configurable transformation model (297) that can be used to transform said restitution corrected reference image (213) into said restitution reference (209), and
- a restitution mathematical projection (96) that can be used to generate a restitution synthesis image (307) from said restitution corrected reference image (213);
said selection being made so that said restitution synthesis image (307) is similar to the restored reference (211) obtained by restitution of said restitution reference (209), by means of said image restitution means (19); said restored reference (211) having a restitution deviation (214) from said restitution synthesis image (307); said formatted information (15) being, at least partially, composed of the parameters (P9) of said selected restitution configurable transformation model (97) and/or the parameters of said selected reverse restitution configurable transformation model (297).

34. System according to any of claims 31 to 33; said system being such that said image restitution means (19) of said chain of devices (P3) has at least one restitution variable characteristic depending on the image, in particular the focal length and/or the aperture; a fraction of said formatted information (15) relating to the defects (P5) of said image restitution means (19) and having said restitution variable characteristic(s); each restitution variable characteristic being able to be associated with a value to form a restitution combination consisting of all said restitution variable characteristics and said values; said system also comprising data processing means to generate said fraction of said formatted information (15) for a predetermined selection of said restitution combinations; the formatted information of said fraction, thus obtained, being included in the field of formatted information (15), hereinafter described as restitution measured formatted information.

35. System according to claim 34; said system comprising data processing means to obtain said fraction of said formatted information (15) relating to any restitution combination, from the restitution measured formatted information; said fraction of said formatted information (15) relating to any restitution combination being hereinafter described as restitution extended formatted information; said formatted information comprising said restitution extended formatted information instead of said restitution measured formatted information.

36. System according to claim 35; said restitution measured formatted information and said restitution extended formatted information having a restitution interpolation deviation; said system comprising, in addition to the zero selection means, one or more restitution variable characteristics, so that said restitution interpolation deviation, for the restitution extended formatted information obtained for said restitution variable characteristics thus selected, is below a predetermined restitution interpolation threshold.

37. System according to any of claims 31 to 36; said image restitution means being associated with an image capture device (1) for the purpose of restoring, in a digital format, said restored reference (211) from said restitution reference (209); said system comprising data processing means to generate the formatted information (15) relating to the defects (P5) of said restitution means , by using said formatted information (15) relating to said image capture device (1) associated with said restitution means.

38. System according to any of claims 20 to 37; said chain of devices (P3) comprising at least two devices; for the purpose of generating formatted information (15) relating to the defects (P5) of the devices of said chain of devices (P3), said system also comprising data processing means to generate formatted information (15) relating to each device of said chain of devices (P3), and to combine the formatted information (15) relating to each device of said chain of devices, to obtain said formatted information (15) relating to said chain of devices (P3).
